(19) Europäisches Patentamt
European Patent Office
Office européen des brevets

(11) **EP 1 582 999 A1**

(12) **EUROPEAN PATENT APPLICATION**
published in accordance with Art. 158(3) EPC


(43) Date of publication:
**05.10.2005 Bulletin 2005/40**

(21) Application number: **03786347.9**

(22) Date of filing: **26.12.2003**

(51) Int Cl.[7]: **G06F 17/30**

(86) International application number:
**PCT/JP2003/016902**

(87) International publication number:
**WO 2004/061714 (22.07.2004 Gazette 2004/30)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **27.12.2002 JP 2002381733**
**21.10.2003 JP 2003393080**



(71) Applicants:
- **Intellectual Property Bank Corp.**
**Tokyo 105-0001 (JP)**
- **Masuyama, Hiroaki**
**Osaka 560-0054 (JP)**

(72) Inventors:
- **MASUYAMA, Hiroaki**
**Toyonaka-shi, Osaka 560-0054 (JP)**
- **YOSHINO, Noriaki**
**Kawasaki-shi, Kanagawa 210-0014 (JP)**

(74) Representative: **Rees, Alexander Ellison et al**
**Urquhart-Dykes & Lord LLP**
**30 Welbeck Street**
**London W1G 8ER (GB)**


(54) **TECHNIQUE EVALUATING DEVICE, TECHNIQUE EVALUATING PROGRAM, AND TECHNIQUE EVALUATING METHOD**


(57) There is disclosed a technical information evaluating device for determining whether an objective technique such as of intangible assets of a target company is a new technology or not by making use of easily available technical literatures disclosing the technical information of the objective technique. The technical evaluating device of the invention makes it possible to adequately analyzing the value of the company to be researched by taking the value of the intangible property of the company into quantitative and qualitative consideration on the basis of the technical literatures.

Similarity rates of the technical literatures, which provides an indication for making the analysis, can be obtained by acquiring keywords contained in the technical literatures to be researched, counting the number of technical literatures containing the prescribed keywords in a population of technical literatures, and calculating the proportion of the technical literatures containing the prescribed keywords to the total number of technical literatures in the population.


FIG. 23

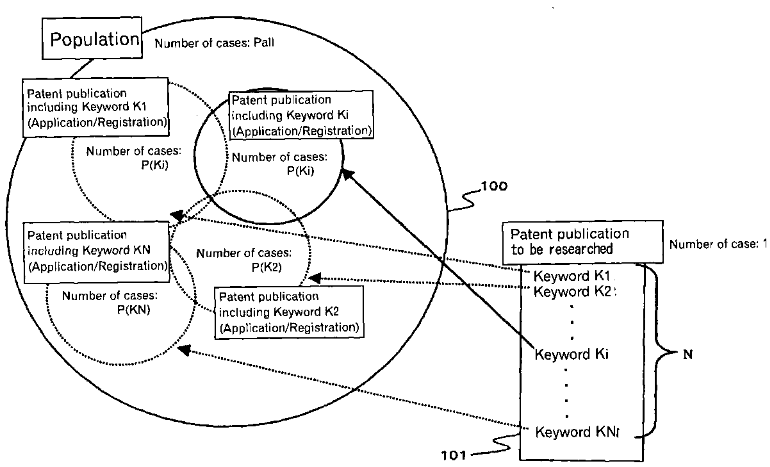


EP 1 582 999 A1

## Description

TECHNICAL FIELD

This invention relates to a technology evaluation and an evaluation of intellectual property.

BACKGROUND OF THE ART

It is very important for financial institutions, investors and enterprises to assess the corporate value of an investment destination or business partner. For that reason, in order for assessing the corporate value, an attempt to judge the corporate value objectively based on managerial and financial information based on managerial and financial information such as of the finances, stock prices and so on has been made. There has been employed a method for determining the value of a corporate or enterprise to be evaluated and grading the corporate or enterprise, using a multivariate analysis technique, statistical technique or data mining algorithms.

Japanese Patent Application Publication No. 2000-348015 discloses a system for evaluating a business enterprise on the basis of the relatively long-term annual or quarter business information data reflecting the changes in economy and anticipating and dynamically calculating the changes in the relatively short-term business information data such as stock prices, interest rates and currency exchange which fluctuate from day to day.

Alternatively, Japanese Patent Application Publication No. 2001-76042 discloses a method for evaluating registered patents owned by a company at that moment to perceive asset values of the patents upon depreciation on sales proceeds and advantages of the patents. The evaluation of the value of each patent has been conducted taking ranked self-evaluation and external evaluation of the company into consideration as contributing rates. (See Patent Publication 2)

DISCLOSURE OF THE INVENTION

Recently, incorporeal properties (intangible assets) have been determined a good part of corporate value as the rate of the incorporeal properties to the corporate value. However, the corporate value is not a book value on the balance sheet, which is represented by the sum of the collective assets (balance of debt plus shareholders' equity), but generally calculated by the sum of total market value of shares plus balance of debt. Accordingly, in complete current value accounting, the amount calculated by deducting the shareholders' equity from the total market value of shares is generally deemed to be indicative of the value of indiscernible assets (intangible assets), but there is no real way of concretely calculating the value of intangible assets.

However, it is a very critical factor for financers to find out if the value of the intangible assets calculated by the current stock price and the capital stock on the book value is correct or not in buying and selling shares of stock in the market, because the total market value of shares is determined by market stock prices. This means that enrichment of intangible assets increases the value of the company, and therefore, it becomes pivotal issues on corporate strategy of the company. Thus, establishment of a method of estimating the value of intangible assets becomes a pressing urgent issue, but it is difficult to evaluate the value because the intangible assets are often composed of industrial properties such as patent and trademark rights, intellectual properties including copyrights, and other various properties including brand equity and technical know-how. Consequently, there has been presently attempted evaluation of intangible assets, but a need has been felt for valuation of enterprise in quantitative and qualitative consideration of the value of intangible assets.

To meet various existing needs for new system for evaluating the value of a company or corporate, the present invention aims at producing data (patent economic indicators) on the relation between corporate management and patent information obtained from tendencies of patent applications and granted patents held by companies and enterprises, using patent information (including patent publications, unexamined patent publications, utility model registration publications, unexamined utility model publications, published Japanese translations of international patent application publication, re-published Japanese translations of international patent application publication, foreign publications, appeal trial publications, progress information, technical disclosure journals issued from Japan institute of invention and innovation, journals of technical disclosure, and literatures on prospective technology) and data (patent fundamentals) on effects of patents on the corporate management Another object of this invention is to provide a technology evaluating device, technology evaluating program, and technology evaluating method, which are capable of objective evaluation of the asset holdings of patents and the corporate value of the company or corporate by analyzing technical literatures (patent information, various technical disclosures, scientific articles, and other similar articles) using a variety of analyzing methods.

Still another object of this invention is to provide a technology evaluating device, technology evaluating program, and technology evaluating method, which are capable of producing a reference indicator for evaluating the intangible assets and corporate value of a company belonging to business category that files a number of patent applications. Yet another object of this invention is to provide a technology evaluating device, technology evaluating program, and technology evaluating method, which are capable of producing a benchmark for evaluating the intangible assets and corporate value of a venture enterprise possessing patent rights as the only business property.

To attain the objects described above according to the present invention, there is provided a technology evaluating device comprising a keyword collection means for collecting prescribed keywords from technical literatures to be searched, a count means for counting the number of technical literatures containing the prescribed keywords from a database population storing the technical literatures, a total count means for figuring out a total of technical literatures in the database population, a similarity rate calculation means for calculating a similarity rate based on the proportion of the technical literatures containing the prescribed keywords thus figured up to the total number of technical literatures in the database population, and an output means for outputting the similarity rate thus calculated to one or more of a display means, a record means and transmitting means.

The technology evaluating device of the invention enables quantitative evaluation as to whether the objective technical literature is of a new field of concerned industry or business, since the device of the invention comprises the keyword collection means for collecting prescribed keywords from the objective technical literatures, the count means for counting the number of technical literatures containing the prescribed keywords from the database population storing the technical literatures, the total count means for figuring out a total of technical literatures in the database population, the similarity rate calculation means for calculating the similarity rate based on the proportion of the technical literatures containing the prescribed keywords thus figured up to the total number of technical literatures in the database population, and the output means for outputting the similarity rate thus calculated to one or more of the display means, record means and transmitting means.

The technology evaluating device of the invention for solving the problems described above is featured in that the similarity rate is calculated by multiplying the proportion thus calculated with the similarity rate calculation means by a keyword-specific weighting coefficient.

This featured technology evaluating device makes it possible to calculate the similarity rate weighted or averaged to be tailored to keywords, which specify a technical field, but have a low occurrence frequency in the technical literatures, since the device of the invention is capable of calculating the similarity rate by multiplying the proportion thus calculated with the similarity rate calculation means by the keyword-specific weighting coefficient.

The technology evaluating device of the invention for solving the problems described above is further featured in that the similarity rate is obtained by calculating an average in said proportion with respect to said keywords figured out by the similarity rate calculation means.

This featured technology evaluating device enables definitive calculation of the similarity rate of the keywords in the technical literatures in the database population even when multiple keywords are configured, since this device of the invention is capable of obtaining the similarity rate by calculating an average of each of keywords figured out by the similarity rate calculation means. Also, this featured device makes it possible to calculate a statistically-significant similarity rate of higher reliability suitable for the needs of users.

Further, the technology evaluating device of the invention for solving the problems described above is featured in that the similarity rate is obtained by exponentiating the proportion calculated with similarity rate calculation means by the keyword-specific weighting coefficient

This featured device of the invention enables calculation of the similarity rates of not only common words having a high occurrence frequency in the technical literatures in the database population but also relevant keywords, which specify a technical field, but have a low occurrence frequency in the technical literatures, giving definite meanings to those words and keywords, since the featured device of the invention is capable of obtaining the similarity rate by exponentiating the proportion thus calculated with similarity rate calculation means by the keyword-specific weighting coefficient

Further, the technology evaluating device of the invention for solving the problems described above is featured by using one or more technical literatures such as patent publications, unexamined patent publications, utility model registration publications, unexamined utility model publications, published Japanese translations of international patent application publication, re-published Japanese translations of international patent application publication, foreign publications, appeal trial publications, progress information, technical disclosure journals issued from Japan institute of invention and innovation, journals of technical disclosure, and literatures on prospective technology.

This featured device of the invention enables accurate analysis on the corporate value, taking the value of intangible properties of the corporate into account quantitatively and qualitatively, since the device of the invention takes advantage of one or more technical literatures such as patent publications, unexamined patent publications, utility model registration publications, unexamined utility model publications, published Japanese translations of international patent application publication, re-published Japanese translations of international patent application publication, foreign publications, appeal trial publications, progress information, technical disclosure journals issued from Japan institute of invention and innovation, journals of technical disclosure, and literatures on prospective technology.

Further, the technology evaluating device of the invention for solving the problems described above is featured by comprising a similarity rate acquisition means for obtaining the similarity rate based on the proportion in which more than one technology relevant to the patent information containing the prescribed keyword is present in the database population of the patent information, registration counting means for obtaining the number of registration of established patent information in the information of patents subjected to investigation, and a display means for displaying the similarity rate thus obtained in correlation with the number of registration of the established patents.

This featured device of the invention enables determination of the relation between the importance of filing a patent application for the technology established in the patent information and the similarity rate thus calculated, since the device of the invention comprises the similarity rate acquisition means for obtaining the similarity rate based on the proportion in which the more than one technology relevant to the patent information containing the prescribed keyword is present in the database population of the patent information, registration counting means for obtaining the number of registration of established patent information in the information of patents subjected to investigation, and the display means for displaying the similarity rate thus obtained in correlation with the number of registration of the established patents.

Further, the technology evaluating device of the invention for solving the problems described above is featured by comprising a similarity rate acquisition means for obtaining the similarity rate based on the proportion in which more than one technology relevant to the patent information containing the prescribed keyword is present in the database population of the patent information, a calculation means for obtaining required year number for registration calculated from the number of years taken from filing of a patent application until gaining registration for more than one technology relevant to the patent information to be searched, and a display means for displaying the similarity rate thus obtained in correlation with the period of time thus calculated.

This featured device of the invention allows a user to know the distribution of the similarity rate and the required year number until patent registration with respect to the more than one technology relevant to the patent information to be searched, since the device of the invention comprises the similarity rate acquisition means for obtaining the similarity rate based on the proportion in which more than one technology relevant to the patent information containing the prescribed keyword is present in the database population of the patent information, the calculation means for calculating the required year number until patent registration after filing of a patent application for the more than one technology relevant to the patent information to be searched, and the display means for displaying the similarity rate thus obtained in correlation with the period of time thus calculated.

Further, the technology evaluating device of the invention for solving the problems described above is featured by comprising a similarity rate acquisition means for obtaining the similarity rate based on the proportion in which more than one technology relevant to the patent information containing the prescribed keyword is present in the database population of the patent information, a calculation means for calculating required year number until patent registration after filing of a patent application for the more than one technology relevant to the patent information to be searched, a standard deviation calculation means for calculating one or both of standard deviation of the similarity rate and standard deviation of the required year number until patent registration, and a display means for displaying the aforesaid one or both of standard deviation of the similarity rate and standard deviation of the required year number until patent registration.

This featured device of the invention allows a user to know the degree of concentration or dispersion of the similarity rate and the required year number until patent registration in the distribution thereof, since the device of the invention comprises the similarity rate acquisition means for obtaining the similarity rate based on the proportion in which more than one technology relevant to the patent information containing the prescribed keyword is present in the database population of the patent information, the calculation means for calculating the required year number until patent registration after filing of a patent application for the more than one technology relevant to the patent information to be searched, the standard deviation calculation means for calculating one or both of standard deviation of the similarity rate and standard deviation of the required year number until patent registration, and the display means for displaying the aforesaid one or both of standard deviation of the similarity rate and standard deviation of the required year number until patent registration.

Further, the technology evaluating device of the invention for solving the problems described above is featured by comprising a similarity rate acquisition means for obtaining the similarity rate based on the proportion in which more than one technology relevant to the patent information containing the prescribed keyword is present in the database population of the patent information every time a patent application is filed, a calculation means for calculating required year number until patent registration after filing of the patent application for the more than one technology relevant to the patent information to be searched, and a display means for displaying the similarity rate thus obtained in correlation with the period of time thus calculated.

This featured device of the invention allows a user to know the distribution of the similarity rate and the required year number until patent registration with respect to the patent information to be searched every time a patent application is filed, since the device of the invention comprises the similarity rate acquisition means for obtaining the similarity rate based on the proportion in which more than one technology relevant to the patent information containing the prescribed keyword is present in the database population of the patent information every time the patent application is filed, the calculation means for calculating the required year number until patent registration after filing of the patent application for the more than one technology relevant to the patent information to be searched, and the display means for displaying the similarity rate thus obtained in correlation with the period of time thus calculated.

Further, the technology evaluating device of the invention for solving the problems described above is featured by comprising a similarity rate acquisition means for obtaining the similarity rate based on the proportion in which more than one technology relevant to the patent information containing the prescribed keyword is present in the database population of the patent information every time a patent application is filed, a calculation means for calculating required year number until patent registration after filing of a patent application for the more than one technology relevant to the patent information to be searched, a standard deviation calculation means for calculating one or both of standard deviation of the similarity rate and standard deviation of the required year number until patent registration, and a display means for displaying the aforesaid one or both of standard deviation of the similarity rate and standard deviation of the required year number until patent registration every time the patent application is filed.

This featured device of the invention allows a user to know the distribution of the similarity rate and the required year number until patent registration with respect to the more than one technology relevant to the patent information to be searched every time a patent application is filed, since the device of the invention comprises the similarity rate acquisition means for obtaining the similarity rate based on the proportion in which more than one technology relevant to the patent information containing the prescribed keyword is present in the database population of the patent information every time the patent application is filed, the calculation means for calculating the required year number until patent registration after filing of the patent application for the more than one technology relevant to the patent information to be searched, the standard deviation calculation means for calculating one or both of standard deviation of the similarity rate and standard deviation of the required year number until patent registration, and the display means for displaying the aforesaid one or both of standard deviation of the similarity rate and standard deviation of the required year number until patent registration every time the patent application is filed.

Further, the technology evaluating device of the invention for solving the problems described above is featured by comprising a prediction means for predicting predictive standard deviation and predictive required year number until patent registration on the basis of one or both of standard deviation of the similarity rate and standard deviation of the required year number until patent registration every time the patent application is filed by using primary or multidimensional extrapolating calculation, and a display means for displaying the aforesaid one or both of the predictive standard deviation and the predictive required year number until patent registration.

This featured device of the invention allows a user to make estimation of future patent applications based on the past patent information, since the device of the invention comprises the prediction means for predicting predictive standard deviation and predictive required year number until patent registration on the basis of one or both of standard deviation of the similarity rate and standard deviation of the required year number until patent registration every time the patent application is filed by using primary or multidimensional extrapolating calculation, and the display means for displaying the aforesaid one or both of the predictive standard deviation and the predictive required year number until patent registration.

Further, the technology evaluating device of the invention for solving the problems described above is featured in that one or more of the aforesaid similarity rate, required year number until patent registration and period in which a patent application is filed are identified on the display means with different colors with respect of one or more degrees of the aforesaid similarity rate, required year number until patent registration and period in which the patent application is filed.

This featured device of the invention allows a user to visually perceive instantaneously the similarity rate, required year number until patent registration and period in which the patent application is filed, thus to easily discern the intended similarity rate, required year number until patent registration and period in which the patent application is filed from plenty of data displayed on the display means.

Further, the present invention provides a technology evaluating program, which is executed in information processing means with a keyword collection means for collecting prescribed keywords from technical literatures to be searched, a count means for counting the number of technical literatures containing the prescribed keywords from a database population storing the technical literatures, a total count means for figuring out a total of technical literatures in the database population, a similarity rate calculation means for calculating a similarity rate based on the proportion of the technical literatures containing the prescribed keywords thus figured up to the total number of technical literatures in the database population, and an output means for outputting the similarity rate thus calculated to one or more of a display means, a record means and transmitting means.

This featured program of the invention enables quantitative evaluation as to whether the technical literature to be searched is of the new field of concerned industry or business, since the program of the invention has the functions of collecting prescribed keywords from technical literatures to be searched, counting the number of technical literatures containing the prescribed keywords from the database population storing the technical literatures, figuring out the total of technical literatures in the database population, calculating the similarity rate based on the proportion of the technical literatures containing the prescribed keywords thus figured up to the total number of technical literatures in the database population, and outputting the similarity rate thus calculated to one or more of the display means, record means and transmitting means.

Further, to attain the objects described above according to the present invention, there is provided a technology evaluating program, which is executed in information processing means with a similarity rate acquisition means for obtaining the similarity rate based on the proportion in which more than one technology relevant to the patent information containing the prescribed keyword is present in the database population of the patent information, a calculation means for calculating required year number until patent registration after filing of a patent application for the more than one technology relevant to the patent information to be searched, and a display means for displaying the similarity rate thus obtained in correlation with the period of time thus calculated.

This featured program of the invention allows a user to know the distribution of the similarity rate and the required year number until patent registration with respect to the more than one technology relevant to the patent information to be searched, since this program of the invention has the functions of obtaining the similarity rate based on the proportion in which more than one technology relevant to the patent information containing the prescribed keyword is present in the database population of the patent information, calculating required year number until patent registration after filing of a patent application for the more than one technology relevant to the patent information to be searched, and displaying the similarity rate thus obtained in correlation with the period of time thus calculated.

Further, to attain the objects described above according to the present invention, there is provided a technology evaluating method comprising collecting prescribed keywords from technical literatures to be searched by a keyword collection means, counting the number of technical literatures containing the prescribed keywords from a database population storing the technical literatures by a count means, figuring out a total of technical literatures in the database population by a total count means, calculating a similarity rate based on the proportion of the technical literatures containing the prescribed keywords thus figured up to the total number of technical literatures in the database population by a similarity rate calculation means, and outputting the similarity rate thus calculated to one or more of a display means, a record means and transmitting means by an output means.

The technology evaluating device of the invention enables quantitative evaluation as to whether the technical literature to be searched is of the new field of concerned industry or business by collecting prescribed keywords from technical literatures to be searched, counting the number of technical literatures containing the prescribed keywords from the database population storing the technical literatures, figuring out the total of technical literatures in the database population, calculating the similarity rate based on the proportion of the technical literatures containing the prescribed keywords thus figured up to the total number of technical literatures in the database population, and outputting the similarity rate thus calculated to one or more of the display means, the record means and transmitting means.

Further, to attain the objects described above according to the present invention, there is provided a technology evaluating method comprising obtaining the similarity rate based on the proportion in which more than one technology relevant to the patent information containing the prescribed keyword is present in the database population of the patent information by a similarity rate acquisition means, calculating required year number until patent registration after filing of a patent application for the more than one technology relevant to the patent information to be searched by a calculation means, and displaying the similarity rate thus obtained in correlation with the period of time thus calculated by using a display means.

This featured method of the invention allows a user to know the distribution of the similarity rate and the required year number until patent registration with respect to the more than one technology relevant to the patent information to be searched by obtaining the similarity rate based on the proportion in which more than one technology relevant to the patent information containing the prescribed keyword is present in the database population of the patent information, calculating required year number until patent registration after filing of a patent application for the more than one technology relevant to the patent information to be searched, and displaying the similarity rate thus obtained in correlation with the period of time thus calculated.

To attain the objects described above according to the present invention, there is provided a technology evaluating device comprising a similarity rate acquisition means for obtaining the number of technical literatures containing the prescribed keywords from a database population storing the technical literatures and similarity rate based on the proportion of the technical literatures containing the prescribed keywords thus figured up to the total number of technical literatures in the database population, a standard deviation calculation means for calculating the average and standard deviation of the similarity rate on the basis of the number of technical literatures and the similarity rate, a demarcation means for sorting out technical literatures into between a region for literatures having a low similarity rate and another region for literatures having a high similarity rate, and an output means for outputting information representing the number of technical literatures and the similarity rate thus obtained in correlation with the regions to one or more of a display means, a record means and transmitting means.

According to the technology evaluating device of the invention, groups of technical literatures can be sorted on the basis of the average and standard deviation of the similarity rates by expressing distribution of the number of the technical literatures based on the similarity rates of the literatures to calculate the average and standard deviation of the similarity rates on the distribution.

According to the present invention for attaining the objects described above, there is provided a technology evaluating device comprising a similarity rate acquisition means for obtaining the number of technical literatures containing the prescribed keywords from a database population storing the technical literatures and similarity rates based on the proportion of the technical literatures containing the prescribed keywords thus figured up to the total number of technical literatures in the database population, a standard deviation calculation means for calculating the average and standard deviation of the similarity rates on the basis of the number of technical literatures and the similarity rates, a demarcation means for sorting out technical literatures into between a region for literatures having a low similarity rate and another region for literatures having a high similarity rate, and an output means for outputting information representing the number of technical literatures and the similarity rates thus obtained in accordance with the order of the similarity rates of the technical literatures residing in the aforesaid regions to one or more of a display means, a record means and transmitting means.

The technology evaluating device according to the invention allows a user to formulate management policies and research and development policies of a company to be searched by representing typical technical literatures having a high similarity rate and exceptional technical literatures having a low similarity rate in order. Also, it becomes possible for investors in stocks to collect desired technical literatures from a region of technical development on which a company to be searched is working or a region into which a company newly enters, thus to make good use of the collected technical literatures as criterion for long-term or short-term investment.

Further, according to the present invention for attaining the objects described above, there is provided a technology evaluating device comprising a similarity rate acquisition means for obtaining the number of technical literatures containing the prescribed keywords from a database population storing the technical literatures and similarity rates based on the proportion of the technical literatures containing the prescribed keywords thus figured up to the total number of technical literatures in the database population, a standard deviation calculation means for calculating the average and standard deviation of the similarity rates on the basis of the number of technical literatures and the similarity rates, a demarcation means for sorting out technical literatures into between a region for literatures having a low similarity rate and another region for literatures having a high similarity rate each time technology disclosed a relevant technical literature is applied for patent protection or publicly disclosed, and an output means for outputting information representing in graph form the number of technical literatures and the similarity rates thus calculated each time the technology disclosed the relevant technical literature is applied for patent protection or publicly disclosed in accordance with the order of the similarity rates of the technical literatures residing in the aforesaid regions to one or more of a display means, a record means and transmitting means.

The technology evaluating device according to the invention allows a user to know tendencies of timing of management policies and research and development policies of a company to be searched by representing the number and the similarity rate of typical technical literatures having a high similarity rate and exceptional technical literatures having a low similarity rate in the order of filing the patent application for the relevant technology or publicly disclosing the technology. Also, it becomes possible for investors in stocks to collect desired technical literatures from a region of technical development on which a company to be searched is working or a region into which a company newly enters, thus to make good use of the collected technical literatures as criterion for long-term or short-term investment.

Further, according to the present invention for attaining the objects described above, there is provided a technology evaluating device comprising a similarity rate acquisition means for obtaining the number of technical literatures containing the prescribed keywords from a database population storing the technical literatures and similarity rates based on the proportion of the technical literatures containing the prescribed keywords thus figured up to the total number of technical literatures in the database population, a standard deviation calculation means for calculating the average and standard deviation of the similarity rates on the basis of the number of technical literatures and the similarity rates, a demarcation means for sorting out technical literatures into between a region for literatures having a low similarity rate and another region for literatures having a high similarity rate, and an output means for outputting information representing in graph form the proportion of the number of technical literatures residing in the aforesaid regions to one or more of a display means, a record means and transmitting means.

This technology evaluating device according to the invention allows a user to discern difference between the proportions of the numbers of technical literatures residing in the regions of relatively high and low similarity rates by viewing the information represented in degrees of the angle sector of the graph, thus to easily recognize the proportion of technical development in the pertinent core technologies of a company to be searched and technical development in new technical field.

Further, according to the present invention for attaining the objects described above, there is provided a technology evaluating device comprising a similarity rate acquisition means for obtaining the number of technical literatures containing the prescribed keywords from a database population storing the technical literatures and a similarity rate based on the proportion of the technical literatures containing the prescribed keywords thus figured up to the total number of technical literatures in the database population, a standard deviation calculation means for calculating the average and standard deviation of the similarity rate on the basis of the number of technical literatures and the similarity rate, a standardization means for defining a standard similarity rate deviation by dividing the similarity rate thus obtained by the average of the similarity rate and the standard deviation, a demarcation means for sorting out the similarity rate deviation thus standardized into multiple regions based on the standard deviation of the similarity rate, and an output means for outputting notational information representing symbolically the existence and number of the technical literatures residing in a coordinate area defined by a coordinate axis denoting a similarity rate deviation region and another coordinate axis denoting the time of patent application or public disclosure with respect to the relevant technical literatures to one or more of a display means, a record means and transmitting means.

This technology evaluating device according to the invention allows a user to investigate the transition of technological movement and trend each year of each relevant company by viewing the information thus represented and learning the status and stock movements of the relevant company with reference to the evaluation categorized at the time of foundation, development, maturation and decline with respect to products dealt with by the relevant company.

Furthermore, the device of the invention makes it possible for a technical engineer or developer to determine if the relevant company to be searched is engaging with technology development in a new field in or advancing the development of grown-up products in a technical field. Also the device of the invention enables a job seeker to evaluate if a target company has business foundation in well-established technical core categories.

Further, according to the present invention for attaining the objects described above, there is provided a technology evaluating device comprising a similarity rate acquisition means for obtaining the number of technical literatures containing the prescribed keywords from a database population storing the technical literatures and a similarity rate based on the proportion of the technical literatures containing the prescribed keywords thus figured up to the total number of technical literatures in the database population, a standard deviation calculation means for calculating the average and standard deviation of the similarity rate on the basis of the number of technical literatures and the similarity rate, a standardization means for defining a standard similarity rate deviation by dividing the similarity rate thus obtained by the average of the similarity rate and the standard deviation, and an output means for outputting notational information representing symbolically the existence of the technical literatures residing in a coordinate area defined by a coordinate axis denoting a similarity rate deviation region and another coordinate axis denoting the time of patent application or public disclosure with respect to the relevant technical literatures thus obtained to one or more of a display means, a record means and transmitting means.

This technology evaluating device according to the invention allows a user to know variation such as monthly change in distribution of similarity rate deviation with time by viewing the information represented resultantly.

Additionally, the user can investigate the transition of monthly similarity rate deviation of each of the relevant companies by viewing the information represented resultantly.

Furthermore, the user can know aspects of technologies which have been developed by other companies to use the information obtained by the device of the invention as data for thought in considering employment on investment choices or collaborative development.

BRIEF DESCRIPTION OF THE DRAWINGS

FIG. 1 is a block diagram showing a first embodiment of a company evaluating system according to the present invention.

FIG. 2 is a block diagram showing a signal processing system of an evaluating device 30 having functions of an evaluation means 3 and an intellectual property report provision means 4 according to the invention.

FIG. 3 shows one example of managerial and financial information.

FIG. 4 shows basic information.

FIG. 5 shows one example of the history of corporate marriage and corporate breakup of a company.

FIG. 6 shows one example of patent information.

FIG. 7 is a block diagram showing a trend analysis means.

FIG. 8 is a graph showing an aspect of the number of patent applications by a company.

FIG. 9 is a graph showing an aspect of the patent applications in an IPC filed by a company.

FIG. 10 shows one example of a ranking table of patent applications.

FIG. 11 is a graph showing a registration rate as one example.

FIG. 12 is a graph showing an aspect of the patent applications of each year.

FIG. 13 is a graph showing one example of transition of years taken until gaining patent registration, based on patent registration data.

FIG. 14 is a graph showing one example of transition of years taken until gaining patent registration, based on patent application data.

FIG. 15 is a graph showing one example of obtaining correlation coefficient between the number of patent applications and economic figures in each field.

FIG. 16 is a graph showing one example of obtaining correlation coefficient between the number of patent registrations and economic figures in each field.

FIG. 17 is a diagram illustrative of a patent asset value analysis means.

FIG. 18 illustrates the relation between a balance sheet and intangible assets.

FIG. 19 illustrates the relation between a balance sheet and intangible assets.

FIG. 20 is a flowchart illustrative of the company evaluating system of the first embodiment of the present invention.

FIG. 21 is a flowchart illustrative of a sequence of operation of a stock adequacy analysis means.

FIG. 22 is a block diagram showing a second embodiment of a patent evaluating system.

FIG. 23 is a diagram illustrative of a method of determining similarity.

FIG. 24 is a diagram illustrative of the method of determining similarity.

FIG. 25 is a diagram illustrative of the method of determining similarity.

FIG. 26 shows one example of use of the calculated similarity rate (Population: Patent application and registration / Search Object: Registration).

FIG. 27 shows one example of use of the calculated similarity rate (Population: Patent application and registration / Search Object: Registration).

FIG. 28 shows one example of use of the calculated similarity rate (Population: Patent application and registration / Search Object: Registration).

FIG. 29 shows one example of use of the calculated similarity rate (Population: Patent application and registration / Search Object: Registration).

FIG. 30 is a diagram of a display screen image for specifying a patent publication to be searched.

FIG. 31 is a diagram of one example of a similarity rate calculated when specifying [Application Number] of a publication to be searched and [All Applications] in the population.

FIG. 32 is a diagram of one example of a similarity rate calculated when specifying [Application Period Range] of a publication to be searched and [All Applications] and [Application Period Range] in the population.

FIG. 33 is a diagram of the result of determination of the similarity rate.

FIG. 34 shows one example of displaying a part of a patent publication.

FIG. 35 shows one example of displaying the number of registrations and relative rate of registrations each the number of years taken for registration.

FIG. 36 shows one example of displaying the number of registrations and relative rate of registrations each similarity rate with respect to patent.

FIG. 37 shows one example of the relationship between the similarity rate of patent publications to be searched and the number of registrations and relative rate of registrations (patent distribution chart).

FIG. 38 is a table showing averages of the number of patent publications and application filing years in each layer.

FIG. 39 is a three-dimensional chart showing the relationship between the similarity rate and the number of years taken for registration in the order arranged in an easily understood manner.

FIG. 40 is a flowchart illustrative of a sequence of operation of the patent evaluating system of the second embodiment of the invention.

FIG. 41 is a block diagram showing the company evaluating system of the third embodiment of the invention.

FIG. 42 is a flowchart illustrative of a sequence of operation of the patent evaluating system of the third embodiment of the invention.

FIG. 43 is a graph showing the distribution of the number of technical references to be searched and the similarity rate resultantly calculated.

FIG. 44 is a tabulated list showing the exceptional technical literatures among the patent publications involved in the company to be searched, arranged in ascending order of the similarity rate.

FIG. 45 is a tabulated list showing the exemplary technical literatures among the patent publications involved in the company to be searched, arranged in descending order of the similarity rate.

FIG. 46 is a chart showing the distribution of the exceptional technical literatures and exemplary technical literatures classified on a year basis of the similarity rate of the own literatures with respect to that of the "S" company.

FIG. 47 is a circle graph the distribution of the similarity rate calculated on the own patent literatures.

FIG. 48 is a transition diagram showing the distribution of the similarity rate classified on a year basis of the technical literatures of the company to be searched.

FIG. 49 is a transition diagram showing the distribution of the similarity rate classified on a year basis of the technical literatures of the company to be searched.

## BEST MODE FOR CARRYING OUT THE INVENTION

The embodiments according to the present invention will be described hereinafter.

A calculation method for a similarity rate according to the present invention will be described later with reference to FIG. 22 through FIG. 40.

A company evaluating system 1 in one embodiment of the invention is provided with database 2 storing information data on business management, financial affairs and technical information such as of patents of companies or enterprises, and evaluation means 3 for creating evaluating resources serving as reference indicators for evaluating the value of a company or enterprise by analyzing the correlation among the business management, financial affairs and patents on the basis of the business management, financial affairs and technical information stored in the database.

The database 2 includes a managerial and financial database 21 storing the managerial and financial information on the business management and financial affairs of companies, and patent information database 22 storing technical literatures such as patent publications. The system is further provided with a basic information database 23 storing the basic information of the companies.

The system further has an intellectual property report provision means 4 for creating the reference indicator for evaluating the company value based on the analysis results derived from the evaluation means 3, and making an intellectual property report such as a quarterly patent journal compiled as monthly, annual and quarter reports concerning patent and economics, a quarterly intellectual property journal, and a patent and financial statistical yearbook on the basis of the reference indicator. The intellectual property report provision means 4 electronically issues the reports via the Internet or by e-mail and may be distributed to publishing companies.

FIG. 2 is a block diagram showing a signal processing system of an evaluating device 30 having functions of an evaluation means 3 and an intellectual property report provision means 4 according to the invention.

As shown in this figure, an information transmit/receive unit in the evaluating device 30 includes a transmit/receive means 365 for sending and receiving information through a communication networks such as public lines to and from other communication devices (which includes a keyword collection means, similarity rate acquisition means, registration counting means, and output means).

The evaluating device 30 includes an input means 370 for reading various information to be sent to information processing means as described later, and an input interface 371 for giving a displaying command to a LED or the like in accordance with a command sent from the information processing means (which may have the function of the keyword collection means), a display means 372 for displaying the information in the form of images or characters, and a display interface 373 for delivering image signals for display to the display means 372 in accordance with the command of the information processing means. The input means 370 may be of a keyboard, mouse, tablet and so forth.

The evaluating device 30 further includes a recording medium slot 378 for detachably receiving a recording medium 377, a recording medium interface 379 for reading and writing information data to the recording medium 377 (including the functions of the keyword collection means, similarity rate acquisition means, registration counting means and output means). The recording medium 377 is of a detachable type memory, e.g. a semiconductor memory such as a memory card, and a magnetic or optical recording device typified by a magnetooptic disc and a magnetic disc.

The evaluating device 30 further includes the information processing means 380 (having functions of the evaluation means 3, intellectual property report provision means 4 and patent evaluation means 5) for controlling the whole evaluating device 30, and a recording means 381 formed of ROM memorizing programs to be executed by the information processing means 380 and RAM serving as a working space for operating the information processing means 308.

The information processing means 380 serves to realize the functions of evaluation means, economic indicator calculation means, patent and economic prediction means, patent asset value analysis means, stock adequacy analysis means, detailed analysis means, registration prediction means, similarity analysis means, visual multivariate analysis means, visual sample determination means, total count means, count means, similarity rate calculation means, output means, similarity rate acquisition means, registration counting means, calculation means, prediction means, and standard deviation calculation means. As a substitute for the information processing means 380 performing all the processes of these means, multiple processing devices capable of executing the functions of the means independently may be employed to attain the objects of the invention.

The evaluating device 30 further includes a record means 384 such as a hard disc drive for recording a variety of constants for operating the evaluating device 30, attribute information for connecting to communication devices over a network, URL (uniform resource locator), gateway data, connection information for DNS (domain name system) and the like, information on business management of a company, and patent information, a record means interface 385 (having functions of the keyword collection means, output means, similarity rate acquisition means and registration counting means) for reading and writing the information data with respect to the record means 384, and a calendar clock 390 for ticking away the time.

The information processing means 380, display interface 373, memory 381, and calendar clock 390 in the evaluating device 30 are connected to each other via a bas line 399, so that the peripheral circuitries of these constituent components can be controlled in accordance with processing programs executed by the information processing means 380.

The date in the database 2 shown in FIG 1 may possibly be accumulated from CD-ROM, CD-RW, DVD, MO and the like provided in other communication devices through a network 364.

The evaluating device 30 may be formed with various types of computers such as a personal computer and workstation. The functions of the aforementioned constituent components may be dispersed by using a computer network.

Although the embodiment described hereinafter makes use of particularly the information on technical literatures concerning patents, other literatures such as utility model, design, trademark publications may likewise be used likewise.

The managerial and financial information 210 stored in the managerial and financial information database 21 contains management information and financial information. The managerial and financial information 210 contains data on the size of a company (employee number, capital fund, etc.) as shown in FIG. 3, which are available from business information (research and development cost 211, stock prices 212, collective assets 213, capital stock 214, and negative capital 215) disclosed in a asset securities report issued from each of companies or by hearing investigation. Various commercial databases offered by newspaper companies, research institutions and so forth may be used by using servers of every kind to collect the desired financial information.

The basic information stored in the basic information database 23 contains various data such as identification numbers, listing categories of stock, categories of business or industry, corporate names, addresses of corporate head offices, establishment dates, and financial settlement periods of companies, as shown in FIG 4. The basic information stored in the basic information database 23 further stores company events or occurrences such as corporate marriage, and breakup and archival record management data 231 memorizing the historical transition of the companies.

A patent owned by a company changes with the corporate marriage or corporate breakup, but the status of the patent currently owned by the company can be appreciated with reference to the archival record management data. The identification numbers are used for dealing with applicant identification numbers 232 for patent applicants. Some companies have a plurality of applicant identification numbers.

The managerial and financial information 210 of each of the companies recorded can be taken on the basis of the basic information 230, and the patent information of each of the companies to be researched can be obtained with reference to the relevant applicant identification number 232.

The patent information 220 stored in the patent information database 22 contains relevant technical literatures such as patent publications as shown in FIG. 6. That is, the patent information is typified by patent publication data 221 of a granted patent (e.g. claims, disclosure of the invention, abstract, patent drawings, and bibliographic items), and laid-open application publications before granting, conceptually including public patent disclosures and amended disclosures.

As the utility model literatures, utility mode public disclosure publications 224 published before maturing into utility model registrations, as shown in FIG. 6, which are composed of utility model specifications and patent drawings. The information disclosed in these publications is also available from CD-ROM publications to set up the database on the utility model information. These publications include those based on international applications. The information collected from the public disclosures are stored along with data on transfer of right and registration of establishment of a patent right, which are available from the patent registration ledger or the opportunity of hearing.

As shown in FIG. 1, the evaluation means 3 includes patent trend analysis means 31, registration trend analysis means 32, registration prediction means 33, patent and economic indicator calculation means 34, patent asset value analysis means 35, patent and economic prediction means 36, and stock adequacy analysis means 37.

The patent trend analysis means 31 serves to analyze the technological movement and trend in patent applications and registrations of the companies based on the patent information to categorize the patent applications and registrations by commercial market and company and according to type of application and technical field and group these data into business groups. The results of categorizing and grouping the patent information are stored in an analyzed patent trend database 39.

On the basis of the information stored in the analyzed patent trend database 39, patent information database 22 and basic information database 23, there are calculated the rate in which patent applications of a company are matured into registrations and the number of days required for obtaining the patent registration from filing the patent application with the registration trend analysis means 32, so as to calculate the number of anticipated patent registrations with the registration prediction means 33.

The results of analysis on correlation of the patent obtained by a company with managerial and financial information of the company and influence of the acquired patents on corporate management are stored in a patent and economic indicator memory means (hereinafter, referred to as patent and economic indicator database) 40. On the basis of data stored in the patent and economic indicator database 40, managerial and financial information database 21 and patent information database 22, the patent asset value of the relevant company is analyzed with the patent asset value analysis means 35.

With the patent and economic prediction means 36, anticipated patent asset value or anticipated earnings from the patent owned by the relevant company is calculated on the basis of the analysis on correlation of the patent obtained by a company with managerial and financial information of the company, which are stored in the patent and economic indicator database 40.

With the stock adequacy analysis means 37, adequacy of stock price of the relevant company is evaluated by comparing the results of analysis on correlation of the patent obtained by the company with managerial and financial information of the company with the intangible asset value of the company, which are assessed on the basis of the stock price 212 of the company (in the managerial and financial information database 21).

The patent (application and registration) trend analysis means 31 includes a patent application trend analysis means 311 for analyzing the number of patent applications and trends thereof, and a registration trend analysis means 312 for analyzing the increasing and decreasing number of patent registrations and trends of the same, as shown in FIG. 7. The function of each analysis means will be described below.

1. Patent application trend analysis means (311)

With this means, trends of the increasing and decreasing number of patent applications of the companies are analyzed on the basis of the patent information 220 of the relevant companies read out of the patent information database 22. The data describing the passage of time such as an application year in which patent applications are filed and the number of patent applications filed during the passage of time are taken into account to depict the trend of patent applications of the companies based on the number of the patent applications filed by each of the companies, as shown in FIG 8. The trends of patent applications are organized according to the technical field of the companies by analyzing the trends using searching retrieval codes such as of IPC, FI and FI terms.

The patent information 220 of a company is thoroughly retrieved referring to the identification number 232 and biographical management data 231 managed with the basic information 230. Any information available from a patent registration ledger or the result of hearing may be taken into consideration in searching the information.

Further, the whole of patent information 220 and data based on the patent information 220 categorized according to the marketplace and/or business or industrial category are analyzed, so as to evaluate the outlook of the patents by marketplace and/or business or industrial category. For example, ranking in number of patent applications, rate of advance of patent applications, increasing number of patent applications of the companies can be appreciated on the basis of the analysis of movements of the companies proceeding to file patent applications. The ranking of the patent applications is shown in FIG 10. Consequently, the ranking of the companies by the marketplace and/or business or industrial category can be evaluated.

2. Registration trend analysis means (312)

With this means, the number of increasing and decreasing of patent registrations and the trend thereof are analyzed, using the patent information 220 derived from the patent information database 22 as the population. For example, the trend of the patent registrations of the relevant company is appreciated on the basis of the number of patents registered each year with reference to the number of patent registrations and the passage of time during which the patent registrations are acquired, as shown in FIG. 8. Further, the trend of the patent registrations of each relevant company is categorized and analyzed according to the technical field.

The trends of the increasing and decreasing number of patent applications of the companies are analyzed on the basis of the whole patent information 220 and/or the patent information 220 categorized according to the marketplace and/or business or industrial category, consequently to evaluate the trends of the companies according to the marketplace and/or business or industrial category. The trend of each company according to the marketplace and/or business or industrial category is further analyzed. For example, the ranking in number of patent registrations, ranking in rate of increase of patent registrations and increasing number of patent can be appreciated on the basis of the analysis of movements of the companies proceeding to obtain patent registrations. Consequently, the ranking of the companies by the marketplace and/or business or industrial category can be evaluated.

The registration trend analysis means 32 has a function of analyzing the trend of the rate of patents registered among all patent applications filed by each company with reference to the patent information 220 (all the patent publications publicly disclosed with respect to examined and unexamined laid-open patent application publications). For example, in depicting the rate of patent registrations to the time required for acquiring the patent registrations as shown in FIG. 11, the rate of patent registrations increases as time passes from filing, but it changes little after some time passes.

It is also possible to analyze the trend of the rate of patent registrations according to the technical field of each company. As one example, the analysis can be made based on the rate of registrations of each company with regard to the trends of the overall average registration rate, market-classified average registration rate, and business nature-classified average registration rate.

The registration prediction means 33 has a function of estimating probability of maturing patent applications into patent registrations and predicting how much days it takes to acquire patent registration (acquisition of patent right) with respect to the relevant companies on the basis of the number of patent applications, the rate of patent registrations and the days actually required for obtaining patent registrations.

Suppose that the number of patent applications, N(yy), in the application year yy of the company "A" changes as exemplified in FIG 12, the registration rate, f(yc), in the year yy is assumed to undergo a transition in the year number yy counting from the application year as shown in FIG 11. Extrapolating the transition formulates an expected registration rate (acquisition of patents), Fyy(yd). Thus, the expected number of patent registrations, X(yd) with respect to the relevant company "A" in the year yd can be expressed with Fyy(yd), as follows:

$$X(yd) = \sum_{yy} \{ N(yy) \times F_{yy}(yd) \} \quad \text{...(Formula 1)}$$

The registration rate Fyy(yd) gradually increases with the year number, yc, counting from the application year as shown in FIG. 11, but it changes little after about ten years from the application year in most cases. However, the registration rate sometimes changes with not only the year number, but also the application year, depending on the business policy of the company or legal changes. Although calculation of the number of patent registrations on a year basis has been described above, the number of patent registrations may be calculated on a month basis or day basis.
As shown in FIG. 13, the length of time required for obtaining patent registration after filing can be presumed on the basis of the actually required time for registrations each year and variance (depicted by longitudinal lines). FIG. 14 shows the average transition (depicted by longitudinal lines) in the time period required for obtaining the patent registrations each year at the time of aggregating the data. Just like the number of patent registrations, the time period required for obtaining the patent registrations may be calculated on a month basis or day basis.
With the patent and economic indicator calculation means 34, the patent and economic indicator database 40 is assembled by analyzing the correlation of the patent information 220 (including utility model information) such as the number of patent applications, the number of patent registrations and the rate of patent registrations with economic figures based on the managerial and financial information 210 of the relevant company by various data mining methods epitomized by cluster analyzing, correlation analyzing and multiple classification analyzing methods, thus to form and store patent economic figures indicative of the correlation of the patent information 220 and the economic figures in the patent and economic indicator database 40.
An economic figure gives an indication indicative of the financial conditions of each company such as sales amount, sales profit, gain in sales, business profit, current profit, ordinary profit, and profits of production and distribution per employee.
As typical examples, there may be enumerated the following patent and economic figures:

- That indicates the correlation between the number of patent registrations and the corporate performance of a company through the analysis of the relation between the cumulative number of patent registrations and the corporate performance (sales amount, sales profit, and operating profit).

- That indicates the correlation between the number of patent registrations and the stock price of a company through the analysis of the relation between the cumulative number of patent registrations and the ratio of ownership capital total market value (PBR: price-book value ratio).

- That indicates the correlation between increase in number of patent registrations and rise in share prices (particularly, increase in evaluation of intangible asset) through the analysis of the relation between the increase rate of patent registrations and the increase ratio of ownership capital total market magnification.

According to the economic figures, the influence of the availability of patent on profitability of a company can be analyzed.
The analysis of assessment for each company can be made according to the types of marketplace and business to appreciate what relationship the aforementioned patent and economic figures have. As one example, the following evaluation factors are found for each company to analyze the positioning thereof relative to the trend of research and development costs of each company.

- The number of patent applications per employee and the number of patent registrations per employee

- Research and development costs per patent application

Further, correlation coefficients are obtained by analyzing the correlation of the patents and the economic figures according to the types of marketplace and business to define the patent and economic figures.
One example of finding the coefficient of correlation between the number of patent applications and the economic figure by technical field is shown on the chart of FIG. 15.

Another example of finding the coefficient of correlation between the number of patent registrations and the economic figure by technical field is shown on the chart of FIG. 16.

With the patent asset value analysis means 35, a patent asset value 350 of the relevant company is analyzed on the basis of the calculation result of the patent and economic indicator calculation means 34 (patent and economic indicator database 40), managerial and financial information 210 of each company, and patent information 220, and the calculation results of the registration trend analysis means 32 (registration trend analysis result database 38).

One sort of managerial and financial information 210 strongly associated with the number of patent applications is epitomized by the research and development cost 211, the whole of the cost 211 is booked in accordance with the present accounting rule. (In Japan, appropriation has been obliged for closing of accounts after the period of March 2000.)

This means that all disbursement for research and development (research and development cost 211) can be deemed current year's costs, but engineered outcomes of the research and development are more likely to contribute future corporate performance after the current year. Thus, the research and development cost 211 is thought to have the nature of corporate wealth. Since a patent application is filed in the course of research and development, the research and development cost 211 is considered to criteria for estimating the patent assets.

Hence, the research and development costs 211 incurred each year by the respective companies are derived from the managerial and financial information database 21, the patent publication data 221 are derived from the patent information database 22 on a company basis and a business basis, and the rate at which patent applications of the relevant company are matured into patent registrations and the number of days required for obtaining the patent registration from filing the patent application are derived from the registration trend analysis result database 38, so that these financial resources can be accounted as the patent asset value 350 which likely contributes company earnings in future through the analysis of individual patents owned by the relevant company.

If another company nearly equal in the number of patent applications and research and development cost 211 to the relevant company to be researched exists, these resemble companies are distinct from each other in terms of the patent asset value 350 apprehensible from the research and development cost 211 where they differ from each other in patent registration rate and quality of the patents owned by them. Thus, the initial costs of the patent resources are calculated on the basis of the research and development cost 211 and the expenditures incurred for filing patent applications, obtaining patent registrations and maintaining the registered patents.

The substantive prime cost of a patent is obtained by presuming that a cost per patent is the quotient of the total amount of the research and development costs 211, expenses incurred for patent applications and maintenance costs such as of annual fees, which is divided by the number of patent applications.

Since the patent asset value 350 is a kind of corporate wealth, it is appropriate to evaluate the current corporate value upon depreciating the patent prime cost. Thus, a patent evaluating indicator is used for evaluating the patent value of each of the patents to individually categorize or classify the corresponding depreciation rates into groups. With consideration for the depreciation rates, the current patent asset unit costs of the patents currently owned by the relevant company are calculated from the patent prime cost, to obtain the total cost of patent asset unit costs of all of the currently owned patents, consequently to improve the accuracy of evaluating the patent asset value 350. The patent evaluating indicator is individually categorized or classified to be entered into a patent evaluated value input means 351.

The patent and economic prediction means 36 has a function of calculating an economic indicator of future stock price of a company to be researched from the calculation result of the patent and economic indicator calculation means 34 (patent and economic indicator database 40), i.e. the patent and economic indicator indicative of the correlation between the patent and the economic figure, a predicted rate of patent registrations and/or predicted number of patent registrations calculated by the registration prediction means 33, and the patent asset value 350 calculated by the patent asset value analysis means 35 by consideration of the corporate wealth.

To be more specific, the patent and economic indicator calculation means 34 serves to calculate the correlation coefficient among the financial indication indicative of the financial conditions such as sales amount, sales profit, gain in sales, business profit, current profit, ordinary profit, and profits of production and distribution per employee, the number of patent applications, and the number of patent registrations of the relevant company, as shown in FIG.15 and FIG. 16. By taking into consideration the registration rate of the patent application and the number of patent registrations estimated with the registration prediction means 33, it is possible to predict a change of fundamentals such as sales amount, sales profit, gain in sales, business profit, current profit, ordinary profit and profits of production and distribution per employee.

The stock adequacy analysis means 37 has a function of discriminating a factor having a possibility of being significantly divergent from the corporate value evaluated actually in the market based on the stock price 212 (total market value 216) of the relevant company according to the result of analysis with the patent asset value analysis means 35. The stock adequacy analysis means 37 includes a detailed analysis means for determining the validity of such divergence on the basis of the relation between their intangible asset value and the total market value 216.

The intangible assets of the relevant company are considered with reference to a balance sheet of the company in the following manner. In FIG. 18, the balance sheet based on an existing book value is shown by the arrow A1, which includes assets 91 (213), balance of debt 92 (215) and capital stock 93 (214) in general terms.

In thinking of the intangible assets as a part of corporate assets, assets referred to as the total market value of stocks (216) as indicated by the arrow B in the drawing are assumed to be made up of capital stocks 93, intangible assets 94 and market evaluation 95. The intangible assets 94 include the patent asset value 350, and intangible assets 941 such as a brand value other than the patent value. The actual corporate value of the relevant company is thought to be composed of the assets indicated by the arrow C in the drawing, intangible assets 94 and the market evaluation 95.

Taking complete current value accounting into consideration, mark to market 96 of the asset recognized in accounting, which corresponds to the book amount indicated by the arrow A2 in FIG 19, is included in the assets 91 (213). The mark to market 96 and assets 91 (213) correspond to the balance of debt 92 (215) and capital stock 93 (214). Thus, according to this concept, the relation between the total market value of shares 215 (B) and the corporate value (C) is considered here.

The intangible asset value calculated according to the corporate value evaluated actually in the market can be obtained by subtracting the capital stock from the total market value of shares in applying the complete current value accounting. (A current value accounting system has met under the international accounting standards. The accounting standard is intended to be revised according to the situation in Japan.)

The patent asset value 350 is calculated by the aforementioned patent asset value analysis means 35. This patent asset value analysis means 35 calculates the current patent asset value 350 from residue values of the prime costs for acquiring patent registrations, referring to the asset values of other companies of a like nature and/or the average values in the same business sectors, upon analyzing the expenditures such as the research and development cost 211 per patent application or registration of a company on the basis of the costs including the research and development cost 211 for gaining engineered outcomes with respect to patent applications, and the costs incurred from filing a patent application until acquiring a patent registration and the disbursements for maintaining the patent registrations.

Since the patent asset value 350 is obtained taking the tendency and actual achievement of the patent applications and registrations of the individual companies on the basis of the patent information stored in the registration trend analysis result database 38 with respect to the number of days required for acquiring the patent registrations, the asset value can be very precisely evaluated.

However, where the total market value of shares (B) falls to below the aggregation of the patent asset value 350 and capital stock 93, the markets might underestimate the intangible assets 94 of the relevant company below the patent asset value 350, as described with reference to FIG. 18 and FIG. 19. (That is, the intangible values such as the brand value, know-how and organizational assets of the relevant company are deemed to be lower than zero.) This aspect has shown that extensive analysis is necessary for verifying adequacy of stock price of the relevant company.

With the detailed analysis means for verifying the adequacy of stock price of the relevant company, which receives a lower evaluation than the patent asset value 350 calculated by the patent asset value analysis means 35, an exploration as to whether or not the amount of disclosed capital stock is of a problem (such as of degradation in actual capital stock by undisclosed debits and/or nonperforming asset of the relevant company) should be conducted in the first instance. When the causality of low valuation cannot be explained even by writing down the aforesaid problem, the result of evaluation is determined to be discordance.

In determining the result of evaluation as discordance, a more detailed qualitative analysis with respect to the patent assets of the relevant company is carried out to objectively verify the patent asset value 350 calculated by the patent asset value analysis means 35.

The intellectual property report provision means 4 serves to compile monthly, annually or quarterly reports on the trends of patents categorized on a company basis and a business basis in conjunction with the analyzed patent trend database 39, patent and economic indicator database 40, registration trend analysis means 32, registration prediction means 33, patent asset value analysis means 35, patent and economic prediction means 36, and stock adequacy analysis means 37.

The company evaluating system 1 according to the first embodiment of the invention will be described hereinafter with reference to the flowchart of FIG. 20.

First, the patent information 220 is derived from the patent information database 22 with the patent trend analysis means 31 to analyze the number of patent applications filed by the respective companies each year (with the patent application trend analysis means 311), the number of patent registrations of the respective companies (with the registration trend analysis means 312), the trends of the patent applications and registrations for each company, and the trends of the patent applications and registrations categorized on a company basis and a business basis or classified on a company basis and a technical field basis. (S100)

With the registration trend analysis means 32, the rate of maturing the patent applications into patent registrations (registration rate) and the number of days required for acquiring the patent registrations are analyzed (S101). Further, the number of prospective patent registrations, which may possibly be acquired each year, is calculated. (S102)

With the patent and economic indicator calculation means 34, the number of patent applications and patent registrations of each company, which is obtained by the patent trend analysis means 31 and the trends of patent applications and patent registrations are derived from the analyzed patent trend database 39, and then, the managerial and financial information 210 and patent information 220 are derived from the managerial and financial information database 21 and patent information database 22, to analyze the correlation among the patent information, economic indicator and financial indicator by various data mining methods. (S103)

With the patent asset value analysis means 35, the correlation between the trends of patent applications and patent registrations, which are calculated by the patent and economic indicator calculation means 34 on the basis of the managerial and financial information 210 of the respective companies and the patent information 220 is derived from the patent and economic indicator database 40, and then, the managerial and financial information 210 and the patent information 220 of the relevant company are derived from the managerial and financial information database 21 and the patent information database 22, to analyze the patent asset value 350 by using data such as the registration rate and the number of days required for acquiring the patent registrations, which are calculated by the registration trend analysis means 32. (S104)

With the stock adequacy analysis means 37, adequacy of the stock price is analyzed by comparing the patent asset value calculated by the patent asset value analysis means 35 with the intangible asset value ("total market value of shares"-"capital stock") defined according to the stock price. (S105)

Next, with the patent and economic prediction means 36, the correlation between the trends of patent applications and patent registrations, which are calculated by the patent and economic indicator calculation means 34 on the basis of the managerial and financial information 210 of the respective companies and the patent information 220 is derived from the patent and economic indicator database 40, and then, a future invisible asset valuation amount is estimated from predictive data such as the number of patent registrations, which are predicted to be owned by the respective companies in future by the patent and economic prediction means 36. (S106)

With the intellectual property report provision means 4, intellectual property reports on patents and economics such as monthly, annual and quarter reports are made out taking the results obtained by the registration trend analysis means 32, registration prediction means 33, patent asset value analysis means 35, patent and economic prediction means 36 and stock adequacy analysis means 37 into consideration with the analyzed patent trend database 39 and patent and economic indicator database 40. Such information reports are electrically provided in the forms of Internet data or e-mail and furnished to publishers. (S107)

Next, the processing procedure of the stock adequacy analysis means 37 will be described with the diagram illustrating the relationship between a balance sheet and invisible assets in FIG. 18 (or FIG. 19) and the flowchart in FIG. 21.

Here, the patent asset value 350 calculated by a method exemplified with patent asset value analysis means 35 is compared with the invisible asset valuation amount 95 calculated according to the amounts obtained by deducting the capital stocks from the total market value of shares of the respective companies (S120). Then, estimation on whether or not detailed analysis is necessary is formed with reference to the relationship between the total market value of shares and the patent asset value 350 (S121).

As one example, on the assumption that there is a company has the patent asset value 350 of one billion yen calculated by the patent asset value analysis means 35, its invisible asset valuation amount other than the patent asset value 350 is thought to be one billion yen (another analysis for determining on whether its evaluation is valid or not is required) in a case that the deduction amount (invisible asset valuation amount) calculated by deducting the capital stock 93 (214) from the total market value "B" (216) is two billion yen.

However, when the market gives an assessment that the invisible asset valuation amount of the relevant company to be researched is no more than one billion yen, it is determined that the market but takes into account only the intangible asset value falling below the depreciation amount with respect to the prime costs incurred in giving birth to the patent asset value 350 of each of the relevant companies (namely, the intangible asset value is considered to have no advantage over the patent asset value 350 calculated as the result of the depreciation on the supposition that a part of the research and development cost 211 is deemed the assets of the company). Consequently, it can be concluded that more detailed analysis for verifying the adequacy of stock price is necessary.

Hence, where such a detailed analysis is required, a more detailed qualitative analysis with respect to the patent assets of the relevant company is carried out to verify as to whether the patent asset value 350 calculated by the patent asset value analysis means 35 is objective or not (S122)

As explained above, the adequacy of stock price of a company to be researched can be properly verified by analyzing the patent asset value of the company and comparing it with the intangible asset value ("total market value of shares"-"capital stock") defined by the stock price according to the method of the present invention.

Next, the second embodiment for a patent evaluating system 11 according to the invention will be described. The reference numerals which have equivalents in the disclosure of the first embodiment mentioned above denote identical or equal component parts. The description of these component parts is omitted below to avoid repetition. The system in this second embodiment is operated by using a computer in the same manner as in the first embodiment and will not be described in detail here.

The patent evaluating system 11 (which may be incorporated in the company evaluating system 1) is provided with the patent information database 22 storing the patent information 220 available from patent or utility model application public disclosures or patent and utility model publications (and other technical literatures), and the patent evaluation means 5 for finding out novelty of the patent information thus obtained by comparing it with the publications stored in the database. The patent evaluating system further comprises the basic information database 23 storing the basic corporate information 230.

The patent evaluation means 5 (information processing means 380) has a function of obtaining reference indicators for evaluating the patent values on the basis of similarity defined by selecting a specific patent application from the patent information categorized on a company basis and deriving database population (e.g. monthly or yearly data) from the arbitrarily extracted patent information 220.

In order for determining the patent value, there are provided a similarity determination means 51 (information processing means 380) for determining similarity of an invention using information data featuring the invention between the patent information 220 in the population and the patent information 220 to be researched, and a visual determination means 52 (information processing means 380) for visually expressing the patent information 220 in the entire population by using information featuring the relative position or distribution of the patent information to be researched. Thus, a patent evaluating indicator for evaluating the patent value of the relevant patent is obtained on the basis of the similarity and distribution of the invention determined according to these determination methods.

The method for determining the patent value will be described hereinafter. The value of a patent application or patented invention depends on the novelty and inventive step of the invention. It may be said that positioning of the patent application or patented invention in a company is determined according to commonality or distinction of the invention with respect to earlier technology. Thus, according to the present invention, the value and positioning of the patent application can be expressed in terms of similarity and relative position of the patented invention with respect to the earlier technology, which similarity is based on an abundance rate of the patent information containing a marked keyword and existing in the population.

A plurality of marked keywords for determining the pertinent technical category and the similarity of the invention may be inscribed previously in a keyword dictionary or thesaurus. The keywords may be recorded in correlation with synonymous words thereof. For example, words, which are different in expression, but have the same or nearly the same meaning, may be inscribed in the keyword dictionary. As an illustration, "category", "categories" and "categorize" are different words having the same meaning, and can be identified as synonymous words by automatically deleting or converting the last portions "cal" and "ies" of the respective words.

Further, "electronic calculator", "home computer", "personal computer", "PC", "processing device", "CPU", "workstation" and "WS" may be associated with one another as synonymous words. In this case, the keywords may be subject to association processing with reference to various dictionaries including an English-Japanese dictionary, modern terminological dictionary, similar word dictionary and Japanese kana-kanji conversion dictionary.

As one example, a marked keyword may be detected in the following methods:

1. Keyword searches for searching out the marked keyword or keywords from the full text of a technical literature or the sections of "claims", "detailed description of the invention", "brief description of the drawings", "drawings" and "abstract" in the description of a patent specification, using a keyword dictionary.

2. Searches for extracting the marked keyword or keywords from a target technical literature, leaving spaces between the respective words in the description of the literature.

3. Searches for clipping out the marked keyword or keywords from word strings out from the description of a target technical literature, deleting unnecessary words for specifying an invention, such as of "postposition", "last portion of a verb", "conjunction" and "exclamation" in the clipped word strings.

It is necessary to design these keyword extracting processes so as to effectively retrieve marked technical terms.

In order for determining the similarity and relative position of the objective patent application to be researched with respect to the population, there may be used various codes expressing technical categories such as of patent classification, file index term (FI term) and file forming term (F term) allotted to both the population and objective patent publications to be researched. When determining on whether or not an invention with respect to a certain patent application falls within new technical category in the population, it is possible to determine how new the technical category relevant to the objective invention to be researched is with respect to the population by comparing patent information of the invention to be researched with all the publications contained in the population under a prescribed condition. A practical example using the keyword for determining the similarity and relative position of the patent application to be researched will be described hereinafter.

The similarity determination means 51 (information processing means 380) serves to select the patent application and patented invention according to the type of company, business, technical field, timing or the like and analyze a similarity rate referring to information and/or keyword deemed representing a feature of the object to be investigate. Here, determination of similarity is performed by calculating a similarity rate using a prescribed keyword will be described. There are enumerated numeric values easy to obtain from technical literatures, as follows:

1. The number of prescribed keywords present in the publication (technical literature) to be researched.

2. The number of patent publications (technical literatures) containing the prescribed keywords present in the publication (technical literature) to be researched.

3. The similarity rate calculated on the basis of the rate of the number of patent publications (technical literatures) containing the prescribed keyword and the number of patent publications (technical literatures) stored in the population.

4. The similarity rate properly weighted properly with respect to the number of all the patent publications (technical literatures) containing the prescribed keyword in the population, taking importance level and occurrence frequency of the keyword into account.

The comparison of a different objective publications or literatures to be researched with the population requires standardized factors N (the number of types of keywords contained in the objective publications or literatures to be researched), Pall (the total number of publications or literatures in the population), and Kall (the total number of keywords contained in the population).

The similarity rate herein is an indicator newly defined for easily determining the relation in similarity between the individual objective patent publications (technical literatures) to be researched in the population. To be more specific, it is expressed in percentage each of the objective patent publications (technical literatures) containing the prescribed keywords relative to the total number of the patent publications (technical literatures) in the population.

Thus, the number of the patent publications (technical literatures) pertain to the earlier inventions similar or related to the invention to be researched is increased with increasing the similarity rate (as the similarity increases). Meanwhile, this represents that the number of the patent publications (technical literatures) pertain to the earlier inventions similar or related to the invention to be researched is decreased with decreasing the similarity rate (as the similarity increases).

Consequently, it is conceivable that the invention having a low similarity rate is generally considered to have novelty and inventive step over the earlier technology. While it is of course indispensable to do a qualitative analysis for actually evaluating the novelty of the invention to be researched, the similarity analyzing process is extremely helpful for working out a primary screening for huge quantities of technical literatures including patent publications. The present invention makes it possible to automatically calculate the similarity rate of the objective patent publications and/or technical literatures relative to all the earlier patent publications and/or technical literatures in the population, which are applied or published by all the business enterprises and concerns including the company to be researched herein.

One example of a method for calculating the similarity rate allowed for a standardized factor will be described below.

FIG. 23 shows the relationship between the population 100 of the patent publications (number of cases; Pall) and the keywords K1 to KN contained in the objective patent publications to be researched. This illustration as shown has an assumption that the total number of patent publications in the population (number of Pall) includes the patent publications containing the keyword K1 (number of P(K1)), the patent publications containing the keyword K2 (number of P(K2)), etc.

The similarity rate is obtained by calculating appearance ratios of the keywords contained in the objective patent publications 101 to be researched and the respective patent publications in the population 100. The similarity rate is determined by retrieving the prescribed keyword from the descriptions in "abstract", "claims" and/or "detailed description of the invention" in the patent information 220 in the population. Although the similarity rate is obtained with respect to the patent publications by way of explanation in this embodiment, the present invention does not contemplate imposing any limitation on the type of the patent information, patent application public disclosure and patent publication to be specified, and the object of the present invention can be attained by a method of calculating the similarity rate of the technical literatures in general.

As shown in FIG. 23, suppose that i-th keyword contained in an objective patent publication to be researched is "keyword Ki", and the patent publication 101 to be researched contains "keyword K1 ", "keyword K2" ... "keyword Ki" ... "keyword KN", the similarity rate Sim(Ki) with respect to the keyword Ki can be given as follows:

$$Sim(Ki) = \frac{P(Ki)}{Pall} \quad \text{(Formula 2)}$$

wherein,

Ki: i-th keyword contained in the object to be researched (i=1- N),
P(Ki): the number of patent publications in the population containing the keyword Ki, and
Pall: the total number of patent publications in the population.

The keyword collection means (communication means 365, input interface 371, record means interface 385 and so forth) serves to collect the prescribed keywords contained in the technical literatures to be researched. The count means (information processing means 380) serves to count the number of the relevant technical literatures containing the prescribed keyword in the population of the database storing the technical literatures. The total count means (information processing means 380) serves to obtain the total number of the technical literatures in the population.

The similarity rate calculation means (information processing means 380) serves to obtain the similarity rate by calculating the proportion of the number of the technical literatures containing the prescribed keyword thus counted to the total number of the technical literatures in the population thus obtained. The output means (transmit/receive means 365, recording medium interface 379, record means interface 385, information processing means 380 and so on) serves to deliver the similarity rate thus calculated to the display means 372, record means 384 and/or communication means (transmit/receive means 365).

The following Formula 3 derives the average of the similarity rate Sim(Ki) pertinent to the keyword Ki.

$$Sim = \frac{1}{N} \sum_{i=1}^{N} \left( \frac{P(Ki)}{Pall} \right) \times 100 \quad \text{... (Formula 3)}$$

wherein,

N: the number of types of the keywords contained in the patent publication to be researched,
Ki: i-th keyword contained in the object to be researched (i=1 - N),
P(Ki): the number of patent publications in the population containing the keyword Ki, and
Pall: the total number of patent publications in the population.

As is obvious from Formula 3, the similarity rate calculation means (information processing means 380) serves to calculate the similarity rate "Sim" based on the proportion of multiple keywords and the average of the said proportion of multiple keywords.

As one example, suppose that four keywords (N=4), K1="image", K2="record", K3="cellular phone" and K4="transmission" are specified, and the numbers of the keywords K1 to K4 present in the patent publications in the respective population (Pall=30) are P(K1)=15, P(K2)=7, P(K3)=3, and P(K4)=2, there can be found Sim=22.5.

A high rate of similarity (Sim) means that both the patent publications in the population and the objective patent publication to be researched likely contain a large number of the specified common keywords, so that technical subject matters of both patent publications can be deemed to be similar to each other in the technical field of the relevant invention. Further, the high rate of similarity means that similar patent applications pertinent to the relevant invention in question exist in large numbers, which are closely related to the objective patent publication to be researched, and the patent publication thus found is likely to be relevant to the invention in the technical field in which commercialization of the products has been stably continued in business by an objective company.

Conversely, a low rate of similarity (Sim) means that both the patent publications in the population and the objective patent publication to be researched likely carry a rather small number of common keywords specified, so that technical subject matters of both patent publications can be deemed to be distinct to each other in the technical field of the relevant invention. Further, the low rate of similarity means that similar patent applications pertinent to the relevant invention in question exist in small numbers, which are closely related to the objective patent publication to be researched, and the patent publication thus found is unlikely to be relevant to the invention in future potential areas.

Another method of estimation of the similarity rate is given as follows:

$$\mathrm{Sim} = \frac{1}{N} \sum_{i=1}^{N} \left( \frac{\alpha(Ki) \cdot P(Ki)}{Pall} \right) \times 100 \qquad \text{... (Formula 4)}$$

wherein,

N: the number of types of the keywords contained in the patent publication to be researched,
Ki: i-th keyword contained in the object to be researched (i=1 - N),
α(Ki): weighting coefficient for each keyword,
P(Ki): the number of patent publications in the population containing the keyword Ki, and
Pall: the total number of patent publications in the population.

As is obvious from Formula 4, the similarity rate calculation means (information processing means 380) serves to calculate a ratio at which the patent publications containing the specified keyword exist in the population of the patent information, to obtain the similarity rate by multiplying the ratio thus calculated by the keyword-specific weight.
The aforenoted Formula 4 for obtaining the similarity rate is formed by adding the prescribed weight coefficient α(Ki) for a specific keyword to Formula 3. In ordinary practice, the weight coefficient α(Ki) is determined "1" in a case of specifying a familiar word "record" as the keyword by way of example, which word is thought to have no outstanding distinctive characteristic as the keyword for identifying the invention described in the patent publication. In a case of taking notice to a word with a small similarity rate, the weight coefficient α(Ki) may be determined to a large value. Conversely, in a case of taking notice to a word with a large similarity rate, the weight coefficient α(Ki) for a familiar keyword may be determined to a small value.
According to the aforenoted Formula 4, the keywords to be specified can be individually weighted appropriately. The relationship between the specified keyword and the weight coefficient may be determined according to the occurrence frequency of the keyword upon previously finding out the number of specified keywords in the patent publications, the number of the keywords contained in common technical literatures, and level of importance and adequateness of the specific keyword.
The weighting of the keyword is effective in highlighting the relevant technical terms to be reflected in the similarity rate. Further, according to the weighting of the keyword, the objective similarity rate is unaffected by familiar terms, thus to improve compensation of implication in similarity. As the words and terms to be used as the keywords change with the advancement of technology, the implication of the keywords themselves often changes with time. Therefore, it is necessary to take reasonable care of the weight coefficients depending on the keywords.
Another formula for obtaining the similarity rate is given as follows:

$$\mathrm{Sim} = \left[ \frac{1}{N} \sum_{i=1}^{N} \left( \frac{P(Ki)}{Pall} \right)^{\alpha} \right]^{\frac{1}{\alpha}} \times 100 \qquad \text{... (Formula 5)}$$

wherein,

N: the number of types of the keywords found in the patent publication to be researched,
Ki: i-th keyword found in the object to be researched (i=1 - N),
α: weighting coefficient for each keyword (normally, α=1),
P(Ki): the number of patent publications in the population containing the keyword Ki, and
Pall: the total number of patent publications in the population.

As is obvious from Formula 5, the similarity rate calculation means (information processing means 380) serves to calculate a ratio at which the patent publications containing the specified keyword exist in the population of the patent information, to obtain the similarity rate by exponentiating the ratio thus calculated by the keyword-specific weight.
The aforenoted Formula 5 for obtaining the similarity rate is formed by adding the prescribed weight coefficient α for a specific keyword to Formula 3. This Formula 5 is applied to a case where a difference in similarity little occurs since the similarity rate gets closer to 1 or 0 in calculating the similarity rate. That is, the similarity rate is calculated upon appropriately determining the coefficient α in such a case. This method using this formula is specifically effective where several tens of thousands to several tens of millions of patent publications are dealt with in the database population.

This formulation is effective for a case where the superscript $\alpha$ next to the parentheses and the superscript $1/\alpha$ next to the square brackets in Formula 5 are desired to be matched in unit (in Formula 5, the values are wanted to be dimensionless). Thus, when the values need not to be matched in unit, one of exponents $\alpha$ may be omitted.

FIG. 24 illustrates the relation between the application filing numbers of the patent publications in the population and the types of keywords contained in the respective patent publications in addition to the relation between the population 100 (number of Pall) shown in FIG 23 for the patent publications and the keywords K1 to KN contained in the objective patent publication to be researched. As shown in this figure, the whole patent publications (number of Pall) in the population contain the keywords with respect to each application filing number of the patent publications.

FIG. 25 illustrates a case of a plurality of the objective patent publications 101 to be researched, only one of which is shown in FIG 24. The objective patent publication 101 to be researched may be the patent publications of the entire population or a part of the population, or other patent publications than those in the population.

FIG. 26 through FIG. 29 show examples of use applications of the similarity rate of the present invention. A company may use the technical literatures in the population as their own technical literatures (company's own patents), the technical literature of other companies (other companies' patents) or the industry-wide technical literature (global patents) in various combinations for many purposes.

The similarity rate shown in each of FIGS. 26-29 is intended to determine the similarity of or relation among the technical literatures such as patent application publications to be researched in the population of the technical literatures. Thus, there are cases in which the population is considered as company's own patent applications, other companies' patent applications or global patent applications, and the patent application to be researched is considered as company's own patent applications or other companies' patent applications, and another case in which the aforesaid two cases are applied in combination. As shown in the diagrams, the intended use of the similarity rate may possibly be different according to the combination of the technical literatures.

FIG. 26 illustrates the intended use of the similarity rate in the respective cases in which the population is formed of the patent publications including the patent application publications and patent registration publications relevant to the company's own patents, other companies' patents and the global patents, and the objective publications to be researched are the patent registration publications relevant to the company's own patents and other companies' patents.

As shown in this figure, the intended use of the similarity rate is applied for positioning the company's own patent registration to be researched in its own company where the population is formed of the patent publications including the patent application and patent registration publications of the company's own patents and the objective publications to be researched are the patent registration publications relevant to the company's own patents. In this case, when the similarity rate is high, a subject theme is deemed new, and conversely, when the similarity rate is low, the subject theme is deemed existing one. Thus, it is possible to determine whether product development of its own company is worked up or steady by evaluating the distribution repeatedly each year.

Further as shown in the figure, the intended use of the similarity rate is applied for comparing the company's own patent to be researched with the tendencies of development and productization planning of the other companies in a case where the population is formed of the patent publications including the patent application and patent registration publications of the other companies' patents and the objective publications to be researched are the patent registration publications relevant to the company's own patents. In this case, when the similarity rate is low, a subject theme is deemed different from the other companies' tendencies of productization, and conversely, when the similarity rate is high, the subject theme is deemed similar to those of the other companies. Thus, it is possible to determine whether product development of its own company is worked up or steady by evaluating the distribution repeatedly each year.

Alternatively as shown in the figure, the intended use of the similarity rate is applied for determining whether the company's own patent to be researched has a distinctive feature in product development compared to those of the whole industry where the population is formed of the patent publications including the patent application and patent registration publications of the industry-wide patents and the objective publications to be researched are the patent registration publications relevant to the company's own patents. In this case, when the similarity rate is low, a subject theme is deemed different from industry-wide global themes. Thus, it is possible to determine whether product development of its own company is worked up or steady by evaluating the distribution repeatedly each year.

Further as shown in the figure, the intended use of the similarity rate is applied for comparing the patent to be researched with the tendencies of development and productization planning of the own company where the population is formed of the patent publications including the patent application and patent registration publications of the company's own patents and the objective publications to be researched are the patent registration publications relevant to the other companies' patents. In this case, when the similarity rate is low, a subject theme is deemed different from the company's own tendencies of productization, and conversely, when the similarity rate is high, the subject theme is deemed similar to the company's own theme. Thus, it is possible to determine whether product development of its own company is worked up or steady by evaluating the distribution repeatedly each year.

Further as shown in this figure, the intended use of the similarity rate is applied for positioning the objective patent publication to be researched in the other companies where the population is formed of the patent publications including the patent application and patent registration publications of the company's own patents and the objective publications to be researched are the patent registration publications relevant to the other companies' patents. In this case, when the similarity rate is low, a subject theme is deemed new, and conversely, when the similarity rate is high, the subject theme is deemed as existing one. Thus, it is possible to determine whether product development of its own company is worked up or steady by evaluating the distribution repeatedly each year.

Further as shown in the figure, the intended use of the similarity rate is applied for determining whether the patent to be researched has a distinctive feature in product development compared to those of the whole industry where the population is formed of the global patent application and patent registration publications of the industry-wide patents and the objective publications to be researched are the patent registration publications relevant to the other companies' patents. In this case, when the similarity rate is low, a subject theme is deemed different from industry-wide global themes. Thus, it is possible to determine whether product development of its own company is worked up or steady by evaluating the distribution repeatedly each year.

FIG 27 illustrates the intended use of the similarity rate in the respective cases in which the population is formed of the patent registration publications relevant to the company's own patents, other companies' patents and the global patents, and the objective publications to be researched are the patent registration publications relevant to the company's own patents and other companies' patents.

As shown in this figure, the intended use of the similarity rate is applied for positioning the company's own patent registration to be researched in its own company where the population is formed of the patent registration publications of the company's own patents and the objective publications to be researched are the patent registration publications relevant to the company's own patents. In this case, when the similarity rate is high, a subject theme is deemed new, and conversely, when the similarity rate is low, the subject theme is deemed as existing one. Thus, it is possible to determine whether product development of its own company is worked up or steady by evaluating the distribution repeatedly each year.

Further as shown in the figure, the intended use of the similarity rate is applied for comparing the company's own patent to be researched with the corporate philosophy and the tendencies of productization of the other companies where the population is formed of the patent registration publications of the other companies' patents and the objective publications to be researched are the patent registration publications relevant to the company's own patents. In this case, when the similarity rate is low, a subject theme is deemed different from the other companies' tendencies of productization, and conversely, when the similarity rate is high, the subject theme is deemed similar to those of the other companies. Thus, it is possible to determine whether product development of its own company is worked up or steady by evaluating the distribution repeatedly each year.

Further as shown in the figure, the intended use of the similarity rate is applied for determining whether the company's own patent to be researched has a distinctive feature in product development compared to those of the whole industry where the population is formed of the patent registration publications of the industry-wide patents and the objective publications to be researched are the patent registration publications relevant to the company's own patents. In this case, when the similarity rate is low, a subject theme is deemed different from industry-wide global themes. Thus, it is possible to determine whether product development of its own company is worked up or steady by evaluating the distribution repeatedly each year.

Further as shown in the figure, the intended use of the similarity rate is applied for comparing the patent to be researched with the corporate philosophy and the tendencies of productization of the own company where the population is formed of the patent registration publications of the company's own patents and the objective publications to be researched are the patent registration publications relevant to the other companies' patents. In this case, when the similarity rate is low, a subject theme is deemed different from the company's own tendencies of productization, and conversely, when the similarity rate is high, the subject theme is deemed similar to the company's own theme. Thus, it is possible to determine whether product development of its own company is worked up or steady by evaluating the distribution repeatedly each year.

Further as shown in this figure, the intended use of the similarity rate is applied for positioning the objective patent publication to be researched in the other companies where the population is formed of the patent registration publications of the company's own patents and the objective publications to be researched are the patent registration publications relevant to the other companies' patents. In this case, when the similarity rate is low, a subject theme is deemed new, and conversely, when the similarity rate is high, the subject theme is deemed as existing one. Thus, it is possible to determine whether product development of its own company is worked up or steady by evaluating the distribution repeatedly each year.

Further as shown in the figure, the intended use of the similarity rate is applied for determining whether the patent to be researched has a distinctive feature in product development compared to those of the whole industry where the population is formed of the global patent registration application of the industry-wide patents and the objective publications to be researched are the patent registration publications relevant to the other companies' patents. In this case, when the similarity rate is low, a subject theme is deemed different from industry-wide global themes. Thus, it is possible to determine whether product development of its own company is worked up or steady by evaluating the distribution repeatedly each year.

FIG. 28 illustrates the intended use of the similarity rate in the respective cases in which the population is formed of the patent publications including the patent application publications and patent registration publications relevant to the company's own patents, other companies' patents and the global patents, and the objective publications to be researched are the patent application publications relevant to the company's own patents and other companies' patents.

As shown in this figure, the intended use of the similarity rate is applied for positioning the company's own patent application to be researched in its own company where the population is formed of the patent publications including the patent application and patent registration publications of the company's own patents and the objective publications to be researched are the patent application publications relevant to the company's own patents. In this case, when the similarity rate is high, the patent application is thought to be pertinent to a basic research, and conversely, when the similarity rate is low, the patent application is thought to be pertinent to an applied research. Thus, it is possible to determine whether research and development of its own company is worked up or steady by evaluating the distribution repeatedly each year.

Further as shown in the figure, the intended use of the similarity rate is applied for comparing the company's own patent to be researched with the tendencies of development and productization planning of the other companies where the population is formed of the patent publications including the patent application and patent registration publications of the other companies' patents and the objective publications to be researched are the patent application publications relevant to the company's own patents. In this case, when the similarity rate is low, a research work is deemed different from the other companies' tendencies of research work, and conversely, when the similarity rate is high, the research work is deemed similar to those of the other companies. Thus, it is possible to determine whether research and development of its own company is worked up or steady by evaluating the distribution repeatedly each year.

As shown in the figure, the intended use of the similarity rate is applied for determining whether the company's own patent application to be researched has a distinctive feature in product development compared to those of the whole industry in a case where the population is formed of the patent publications including the global patent application and patent registration publications of the industry-wide patents and the objective publications to be researched are the patent application publications relevant to the company's own patents. In this case, a research work is deemed different from industry-wide global research work. Thus, it is possible to determine whether product development of its own company is worked up or steady by evaluating the distribution repeatedly each year.

Further as shown in the figure, the intended use of the similarity rate is applied for comparing the patent application to be researched with the tendencies of development and productization planning of the own company in a case where the population is formed of the patent publications including the patent application and patent registration publications of the company's own patents and the objective publications to be researched are the patent application publications relevant to the other companies' patents. In this case, when the similarity rate is low, a research work is deemed different from the own company's tendencies of research work, and conversely, when the similarity rate is high, the research work is deemed similar to those of the own company. Thus, it is possible to determine whether research and development of its own company is worked up or steady by evaluating the distribution repeatedly each year.

As shown in this figure, the intended use of the similarity rate is applied for positioning the company's own patent application to be researched in its own company in a case where the population is formed of the patent publications including the patent application and patent registration publications of the company's own patents and the objective publications to be researched are the patent application publications relevant to the other companies' patents. In this case, when the similarity rate is high, the patent application is thought to be pertinent to a basic research, and conversely, when the similarity rate is low, the patent application is thought to be pertinent to an applied research. Thus, it is possible to determine whether research and development of its own company is worked up or steady by evaluating the distribution repeatedly each year.

As shown in the figure, the intended use of the similarity rate is applied for determining whether the company's own patent application to be researched has a distinctive feature in product development compared to those of the whole industry in a case where the population is formed of the global patent application and patent registration publications of the industry-wide patents and the objective publications to be researched are the patent application publications relevant to the other companies' patents. In this case, a research work is deemed different from industry-wide global research work. Thus, it is possible to determine whether product development of its own company is worked up or steady by evaluating the distribution repeatedly each year.

FIG. 29 illustrates the intended use of the similarity rate in the respective cases in which the population is formed of the patent registration publications relevant to the company's own patents, other companies' patents and the global patents, and the objective publications to be researched are the patent application publications relevant to the company's own patents and other companies' patents.

As shown in this figure, the intended use of the similarity rate is applied for positioning the company's own patent application to be researched in its own company in a case where the population is formed of the patent registration publications of the company's own patents and the objective publications to be researched are the patent application publications relevant to the company's own patents. In this case, when the similarity rate is high, the patent application is thought to be pertinent to a basic research, and conversely, when the similarity rate is low, the patent application is thought to be pertinent to an applied research. Thus, it is possible to determine whether research and development of its own company is worked up or steady by evaluating the distribution repeatedly each year.

Further as shown in the figure, the intended use of the similarity rate is applied for comparing the company's own patent application to be researched with the tendencies of development and productization planning of the other companies in a case where the population is formed of the patent registration publications of the other companies' patents and the objective publications to be researched are the patent application publications relevant to the company's own patents. In this case, when the similarity rate is low, a research work is deemed different from the other companies' tendencies of research work, and conversely, when the similarity rate is high, the research work is deemed as similar to those of the other companies. Thus, it is possible to determine whether research and development of its own company is worked up or steady by evaluating the distribution repeatedly each year.

Further as shown in the figure, the intended use of the similarity rate is applied for determining whether the company's own patent application to be researched has a distinctive feature in product development compared to those of the whole industry in a case where the population is formed of the patent registration publications of the industry-wide patents and the objective publications to be researched are the patent application publications relevant to the company's own patents. In this case, when the similarity rate is low, a research work is deemed different from industry-wide global research work. Thus, it is possible to determine whether research and development of its own company is worked up or steady by evaluating the distribution repeatedly each year.

Further as shown in the figure, the intended use of the similarity rate is applied for comparing the patent application to be researched with the corporate philosophy and the tendencies of productization of the own company in a case where the population is formed of the patent publications including the patent application and patent registration publications of the company's own patents and the objective publications to be researched are the patent application publications relevant to the other companies' patents. In this case, when the similarity rate is low, a research work is deemed different from the own company's tendencies of research work, and conversely, when the similarity rate is high, the research work is deemed as similar to those of the own company. Thus, it is possible to determine whether research and development of its own company is worked up or steady by evaluating the distribution repeatedly each year.

Further as shown in this figure, the intended use of the similarity rate is applied for positioning the objective patent application publication to be researched in the other companies in a case where the population is formed of the population is formed of the patent registration publications of the company's own patents and the objective publications to be researched are the patent application publications relevant to the other companies' patents. In this case, when the similarity rate is low, the patent application is thought to be pertinent to a basic research, and conversely, when the similarity rate is high, the patent application is thought to be pertinent to an applied research. Thus, it is possible to determine whether research and development of its own company is worked up or steady by evaluating the distribution repeatedly each year.

Further as shown in the figure, the intended use of the similarity rate is applied for determining whether the patent application to be researched has a distinctive feature in product development compared to those of the whole industry in a case where the population is formed of the global patent registration application of the industry-wide patents and the objective publications to be researched are the patent application publications relevant to the other companies' patents. In this case, a research work is deemed different from industry-wide global research work. Thus, it is possible to determine whether product development of its own company is worked up or steady by evaluating the distribution repeatedly each year.

By determining the similarity of the patent publications to be researched by a third party, the trend of development of the applicant's company of the relevant patent publication to be researched can be appreciated to provide an indication for making an investment such as purchases of the applicant's company.

FIG. 30 shows a display screen on which a patent publication to be researched is designated for calculating the similarity rate.

When a user enters instructions to calculate the similarity rate via the input means 370, a designating window for entering items pertinent to the objective information to be researched is displayed on the display means 372 as shown in the figure. Then, the user enter the prescribed objective items through the input means 370, following the instructions displayed in the designating window on the display. A display item "Publication Type" is to select "Application" (Unexamined Patent Application Publication) or "Registration" (Examined Patent Registration Publication). Technical literatures other than the patent publications may be researched on similarity rate in the same manner as that of the practical example described below.

A display item "Designation" is to select the prescribed objective publication to be researched from a plurality of publications by use of "Company Code" assigning companies as patent applicants relevant to the objective publication to be researched. Searching terms "applicant identification number", dating data and/or period range such as filing date, publication date and registration date may be specified searching the objective publication of the applicant to be searched.

When knowing dating or period range such as the application filing number, publication number and patent number of the objective publication to be searched, an item "Number Search" may selected.

The designating window for specifying the objective information to be researched as shown in the figure has a button for designating the population to be researched. For example, when pressing [Execute All Applications As Population] button, the patent application publication is configured as the population to calculate the similarity rate. When clicking [Execute All Registrations As Population] button, the patent registration publication is configured as the population to calculate the similarity rate. By selecting [Specifying Population] button, there is displayed a screen for specifying the publication date or other data for the patent application publications as the population or a screen for specifying a technical field of the relevant invention, so that the user can configure a prescribed period range and/or the field of the invention of the publications in the population.

FIG. 31 is an illustration of similarity rate (similarity rate determination) calculated when selecting [Application Number] of the objective publication to be searched and [All Application] as the population.

As shown in this figure, there is displayed "Similarity Rate Determination" with the conditions of the objective publication and population and the similarity rate resultantly calculated. Consequently, the user can perceive whether the objective patent publication to be searched in the population falls into and new technical field or not and know the positioning in the technical field and the direction of research and development of the applicant's company in numerical values.

When the user selects the application filing number of the objective publication to be searched, the intended corresponding patent publication (patent information 220) may be derived from the database and displayed on the display means 372 in its entirety or in part, e.g. only "claims", "abstract" and/or "detailed description" of the relevant invention resultantly found out.

FIG. 32 is an illustration of similarity rate (similarity rate determination) calculated when selecting [Application Period Range] of the objective publication to be searched and [All Application] and [Application Period Range] as the population.

As shown in this figure, there is displayed "Similarity Rate Determination" with the conditions of the objective publication and population and the similarity rate resultantly calculated. Consequently, the user can perceive whether the objective patent publication to be searched in the population falls into and new technical field or not and know the positioning in the technical field and the direction of research and development of the applicant's company in numerical values. That is, it is possible to quantitatively perceive whether the applicant's company is involved in new business in the prescribed period and/or staying in previous business in the prescribed period of time in the figures. Besides, continuity of research and development of the applicant's company can also be observed by taking a view of the similarity rate with change in period range.

FIG. 33 is an illustration of similarity rate (similarity rate determination) calculated when selecting [Application Period Range] of the objective publication to be searched and [All Application] as the population.

As shown in this figure, there is displayed "Similarity Rate Determination" with the conditions of the objective publication and population and the similarity rate resultantly calculated. In the illustrated case, there are found a plurality of the patent applications to be researched in the specified period (five identified in the illustration), and the respective similarity rates of the patent publications found on search are displayed. Thus, the user can compare the patent publications found from the population with one another, referring to the respective similarity rates of the patent publications displayed as illustrated.

When the user has a competitive relationship with the applicant's company of the patent publication found on search and the calculated similarity rate of the found publication is low, the user can estimate that there is a possibility that the competitor undertakes a new business project or invests in new business, consequently to consider and implement measures to start or strengthen research and development in the relevant technical field. When the user gives consideration to a purchases of the stock of the applicant's company of the patent publication found on search, the applicant's company of the found patent publication having low similarity rate can be deemed as investable since the competitor likely undertakes a new business project or invests in new business in the light of the result of search.

If the calculated similarity rate of the publication of the applicant's company having a competitive relationship with the user, which is found on search, is high, the user can appreciate that development of the competing products should be contemplated swiftly since the previous development work of the competitor is going on.

In such a case, when selecting the number of the patent publication of interest, a part or full page of the patent publication can be display for confirming the technical field and content of the invention in question by reviewing the content of the patent publication found on search. The patent publications found on search may be automatically displayed in the order of increasing or decreasing similarity rate.

FIG. 34 illustrates a part of the patent publication found on search by way of example.

As shown in the figure, the part or full page of the patent publication found on search may be displayed having the keyword or keywords for obtaining the similarity rate categorized by color, underlined, highlighted, changed in font or surrounded with a frame on the display means 372 for facilitating visualization. This enables the user to easily discern the keyword and investigate the invention associated with the prescribed keyword.

The similarity rate calculated as aforenoted serves as a patent evaluating indicator for evaluating the patent value of the objective patent. The patent information 220 can be categorized according to whether it is in a new technical field (invention having high novelty) or not with reference to the patent evaluating indicator.

FIG. 35 illustrates one example of displaying the number of registrations and relative rate of registrations each the number of years taken for registration. The visual determination means 52 (information processing means 380) serves to visually depict the distribution of the required year number for registration of the objective patent publication to be researched in the whole population. A multiple classification analysis may be effective for such an analysis. There may be applied tertiary qualification of the multiple classification analysis therefor. The term "required year number for registration" means the number of years taken for registration, but the required year number for registration involved in a patent application after the legal revision should be largely shortened in conformity with shortening of the time limit for submitting a request for examination, which was changed from "within seven years" to "within three years" in 2001.

As shown in the figure, there is depicted the relation between the required year number for registration and the number of registrations with respect to the patents contained in the prescribed population. Also, the average and standard deviation of the required year number for registration are shown therein. In addition, relative ratios of other required year number for registration are indicated on the supposition that the most ratio of the number of years taken for registration is 1.

FIG. 36 illustrates the number of registrations and relative rate of registrations each similarity rate with respect to patent. The visual determination means 52 (information processing means 380) serves to visually depict the distribution of the relation between all the patent publications, which are contained in the population formed of the established patent publications and calculated as the objective publications to be researched to obtain the respective similarity rates, and the number of registered patents. In the illustrated chart, the objective patent publication to be researched can be deemed to be a new technology when there are many registered patents in the range of low similarity rate and in the technical field into which the companies possessing the registered patents found have put a lot of developing work. Conversely, the objective patent publication to be researched can be deemed to be continuously and stably developed in the confirmed technical field when there are many registered patents in the range of high similarity rate.

In a case of displaying the number of patent registrations per similarity rate of the patent shown in FIG. 36, the following processing may be carried out.

The similarity rate acquisition means (transmit/receive means 365, input interface 371, record means interface 385, recording medium interface 379 and information processing means 380) serves to acquire the similarity rate based on the prescribed keywords contained in the objective patent publications to be researched. The registration counting means (transmit/receive means 365, input interface 371, record means interface 385, recording medium interface 379 and information processing means 380) serves to acquire the number of the established patent registrations of the patent publications out of the objective patent publications to be researched. The information processing means 380 issues an output for displaying the similarity rate thus acquired in correlation with the number of the established patent registrations of the patent publications.

FIG. 36 further illustrates visually the average and standard deviation value of the similarity rates. This standard deviation value is displayed by a standard deviation value calculation means (information processing means 380), which calculates and delivers the standard deviation of the similarity rate to the display means 372.

By observing the width and position of the standard deviation give the user the information about whether the objective patent publication to be researched covers various technical fields or not, or the patent applicant (company or the like) to be researched undertake development in a specific technical field or not.

FIG. 37 depicts one example of the relation between the similarity rate of the objective patent publication to be researched and the number of years taken for registration (patent distribution chart). The dots shown on the chart are respectively indicative of the similarity rate and the number of years taken until registration of each of the patent publications (technical literatures) in the population. The visual determination means 52 (information processing means 380) enables visible representation of distribution of the relation between the similarity rate of the patent publications in the population and the number of years taken for registration with respect to each number of years taken for registration.

The relation between the similarity rate of the objective patent publication to be researched and the number of years taken for registration, which is shown in FIG 7, may be displayed in the following manner.

The similarity rate acquisition means (transmit/receive means 365, record means interface 385, recording medium interface 379, information processing means 380 and the rest) acquires the similarity rate based on the proportion in which the objective patent publications to be researched containing the prescribed keyword are present in the population of the patent publications. Then, the calculation means (information processing means 380) calculates the required year number for registration from the number of years taken from filing the patent application until establishing registration with respect to each of the respective patent publications to be researched. The patent publications established in registration may be obtained from the objective patent publications to be researched with the registration counting means (transmit/receive means 365, input interface 371, record means interface 385, recording medium interface 379, information processing means 380 and the rest).

And then, the information processing means 380 delivers to the display means 372 instructions to display the calculated similarity rates in correlation with the number of years taken for registration with relation to the respective patent publications.

Also in FIG. 37, the average and standard deviation value of the similarity rate are visually displayed along with the average and standard deviation value of the number of years taken for registration of the respective patent publications. The standard deviation value is represented on the display means 372 by calculating the standard deviation value of the number of the years taken for registration relative to the similarity rate and the standard deviation value of the similarity rate relative to the number of the years taken for registration.

By observing the width and position of the standard deviation give the user the information about whether the objective patent publication to be researched covers various technical fields or not, or the patent applicant (company or the like) to be researched undertake development in a specific technical field or not and enables the user to easily assess the intention and weight of commercialization of patented products of the applicant's company of the patent publication to be researched.

On the chart, the abscissas of the standard deviation value and average with respect to the similarity rate and the number of years taken for registration are respectively demarcated into regions "A", "B", "C" and "D" for easier comprehension. That is, the relation between the similarity rate and the number of years taken for registration in the population of the patent publications to be researched is subdivided into 16 sections in the illustrated embodiment.

When the similarity rate is low and many patent publications to be researched are present in the section of the small number of year taken for registration, the invention with respect to the objective patent publication to be researched is deemed as new technique having a high possibility of early acquisition of patent and productization with respect to the objective patent publication. This means that there is a strong possibility that the invention in question is a new undertaking inspired by the applicant's company or all the industry and is worked early.

Consequently, it can be assumed that a company having a competitive relationship with the applicant's company of the patent publication thus found should reinforce the systems of research and investment with the relevant technology for developing new competing products. Besides, the information thus obtained is solid investment advisory information for a person who considers investment on projects in the applicant's company of the patent publication to be researched about which the technology with respect to the relevant patent publication to be researched is investable or not.

When the similarity rate is low and many patent publications to be researched are present in the section of the large number of years taken for registration, the invention with respect to the objective patent publication to be researched is deemed as original technology, which is not contemplated to be commercialized and need not be patented early or is related to the invention lacking in inventive step to likely miss out on acquiring a patent right. When the patent publication to be researched falls within this subdivided section and the invention described in the publication is not under dispute and bears no competitive relation, the invention with respect to the objective patent publication to be researched has a high possibility of slowing acquisition of a patent registration slowly although under examination, or undergoing an objection, invalidation trial or appeal after obtaining decision to grant a patent upon passing the examination.

When the similarity rate is high and many patent publications to be researched are present in the section of the large number of years taken for registration, the invention with respect to the objective patent publication to be researched is deemed to have many similarities to conventional an invention or inventions. The invention described in the patent publication present in this section has high possibilities of being pertinent to business enterprise, which is worked before and stably developed by the applicant and expected to be early matured into a patent for core products of the applicant's company to build an investment of a patent right.

This means that the relevant invention in question has a high possibility of being relevant to important business enterprise of the applicant's company or the entire industry. Consequently, it can be assumed that a company having a competitive relationship with the applicant's company of the patent publication thus found should reinforce the systems of research and investment with the relevant technology for developing new competing products. Besides, the information thus obtained is solid investment advisory information for a person who considers investment on projects in the applicant's company of the patent publication to be researched about which the technology with respect to the relevant patent publication to be researched is investable or not.

When the similarity rate is high and many patent publications to be researched are present in the section of the large number of years taken for registration, the invention relevant to the patent publication to be researched falls in the technical field of products continuously and stably developed before and has a high possibility of being related to the invention applied as a defensive application or lacking in inventive step to likely miss out on acquiring a patent right.

When the patent publication to be researched falls within this subdivided section and the invention described in the publication is not under dispute and bears no competitive relation, the invention with respect to the objective patent publication to be researched has a high possibility of slowing acquisition of a patent registration slowly although under examination, or undergoing an objection, invalidation trial or appeal after obtaining decision to grant a patent upon passing the examination.

A research for the tendency to the willingness to product development of the respective companies can be performed by comparing the applicants in the distribution chart of FIG. 37.

FIG. 38 shows the averages for the number of patent publications, application years, registration years, number of claims, required year number for registration, similarity rate (of the patent publications of the whole industry), similarity rate (of the company's own patent publications) and other required particulars in each layer in FIG. 37. On the chart of FIG. 37, these items are graphically shown in an easily understood manner, but they are depicted more clearly in FIG. 38 so as to make it possible to directly compare the items in numerical value. The "Layer A", "Layer B", "Layer C" and "Layer D" in relation to the required year number for registration and similarity rate in FIG. 38 correspond to the respective layers in FIG. 37.

In FIG. 38, the averages of the numbers of claims described in the patent publications in each layer are shown. This chart illustrates a case where the required year number for registration is short (Layer A of required year number for registration) and the similarity rate is small (Layer A of similarity rate) of the patent right of the relevant patent publication containing many claims, the rights with relation to the dependent invention and its related peripheral invention thereof can be estimated to be strengthened. This means that there is a strong possibility that the invention with relation to the patent application therefor is important.

The chart of FIG. 38 illustrates another case where the required year number for registration is long (Layer D of required year number for registration) and the similarity rate is large (Layer D of similarity rate) of the patent right of the relevant patent publication containing many claims, the invention described in the relevant patent publication can be estimated to grow into maturity, and therefore, consolidated into one patent application with respect to its related peripheral invention thereof to curtail the cost for filing the patent application.

FIG. 39 is a three-dimensional chart showing the relation between the similarity rate and required year number for registration (transition chart of the similarity rate and required year number for registration) in a manner of facilitating visualization. On the chart, X-axis denotes the similarity rate, Y-axis denotes the year number required for registration, and Z-axis denotes the application filing year of the patent publication to be researched. The major axis and minor axis of the ellipse shown in each year range on the chart are indicative of the standard deviations of the similarity rate and required year number for registration.

On the chart, the ellipses shown in each application filing year are connected to one another with straight or curved lines for easier comprehension of the similarity rate and the year number required for registration in each application year. Although the standard deviations of the similarity rate and required year number for registration in each application year are depicted in the form of ellipses in the illustrated embodiment, the present invention does not contemplate imposing any limitation on the shape depicting the similarity rate and required year number for registration.

The sizes and positions of the ellipses representing the similarity rate and required year number for registration as shown in the illustrated chart can be noted to assess the transition the similarity rate and required year number for registration over years, so that the history and tendency of product development of the applicant's company of the patent publication to be researched.

The relation between the similarity rate and required year number for registration as shown in FIG. 39 may be displayed through the process as noted below.

By the similarity rate acquisition means (transmit/receive means 365, input interface 371, record means interface 385, recording medium interface 379 and information processing means 380), the similarity rate based on the prescribed keywords contained in the objective patent publications to be researched is obtained. Then, the required year number for registration is calculated on the basis of the number of years taken from filing the patent application until establishing patent registration with the calculation means (information processing means 380). The patent publications established in registration may be obtained from the objective patent publications to be researched with the registration counting means (transmit/receive means 365, input interface 371, record means interface 385, recording medium interface 379, information processing means 380 and the rest).

Then, the information processing means 380 gives the display means 372 the instructions to display the calculated similarity rate and required year number for registration in correlation with each other in each application filing year.

FIG. 39 also illustrates visually the average and standard deviation value of the similarity rates over all the patent application years along with the average and standard deviation value of required year numbers for registrations over all the patent application years. These averages and standard deviation values to be displayed on the display means 372 are obtained by calculating the standard deviation value of the required year numbers for registrations relative to the similarity rates in the whole period of filing patent applications and the standard deviation value of the similarity rates relative to the required year numbers for registrations in the whole period of filing patent applications.

From the illustrated chart shown in three dimensions, the averages and standard deviation values base on lots of information makes it possible to accurately appreciate the tendency thereof. Thus, the display of the calculation result based on lots of information on patent publications enables reliable recognition and precise estimation of the given information.

The standard deviations of the similarity rate and required year numbers for registration each shown in the shape of an ellipse on the chart may be displayed continuously or stepwise in dark and light coloring of red according to the similarity rate, the required year numbers for registration may be displayed continuously or stepwise in dark and light coloring of blue according to the number of year, and the years may be displayed continuously or stepwise in dark and light coloring of yellow and superposed on the other information thus displayed. By displaying the information images in different colors with respect to each parameter, the noteworthy similarity rate and required year numbers for registration can easily be found out from the chart. Specifically in investigating the respective companies shown in FIG. 39, the watched company can easily be found. The similarity rate and required year numbers for registration may be provided with threshold values, so that the similarity rate and required year numbers for registration can be displayed in different colors in accordance with the threshold values.

In the illustrated embodiment, future standard deviation and future required year number for registrations (in and after 2003) are predicted and depicted with dotted lines. With a prediction means (information processing means 380), the future standard deviation and future required year number until patent registration are predicted on the basis of one or both of the standard deviation of the similarity rate and standard deviation of the required year number until patent registration every time the patent application is filed by using primary or multidimensional extrapolating calculation. Then, the predicted information data of future standard deviation and future required year number until patent registration are delivered from the information processing means 380 to the display means 372, consequently to allow the user to make estimation of future patent applications based on the past patent information.

FIG. 39 shows the averages of the similarity rates of full years, which are calculated on the basis of the average of the similarity rate of each year. Likewise, the averages of the required year numbers of full years, which are calculated on the basis of the average of the required year number of each year, are shown in the same chart. Although the similarity rate and required year number for registration are calculated and displayed by each year In the illustrated chart, the present invention does not contemplate imposing any limitation on each year as calculation measure, and the similarity rate and required year number for registration may be calculated on a monthly basis with respect to patent application or publication or other relevant period of time in order to achieve the objects of the present invention.

Next, the sequence of processing of the second embodiment of the present invention will be described with reference to the flowchart of FIG. 40. The population is derived on the basis of the basic information from the patent information of the respective companies (S140). Also, a keyword representing the feature of a specific patent publication is extracted from the "abstract" and "claims" described in the patent publication (S141). Similarity rates (① and ② ) with respect to the specific publication and the population are determined by using the keyword (S142). The search is conducted in all the publication contained in the population (S143).

With respect to the specific patent publication which is determined to have low similarity rate and sufficient novelty relative to an arbitrary publication filed before the specific publication (S144), the patent information in the whole technical field classified according to International Patent Classification (IPC) or other basis is retrieved (S145) to determine the novelty of the specific patent publication in the whole technical field (S146).

Consequently, the novelty of the respective patent applications and the trend of patent applications of a specific company or in the whole technical field can be evaluated quantitatively and qualitatively, and visible positioning of the patent applications can be figured out.

Next, the third embodiment of the present invention related to the company evaluating system 12 for exactly evaluating patent values of the respective companies will be described. In describing this embodiment, the same parts as in the first and second embodiments noted above are not described for the sake of simplicity in description. The system in this embodiment runs on a computer in the same manner as the first embodiment and will not be described in detail again.

As shown in FIG. 41, the company evaluating system 12 is provided with database 2 storing information data on business management, financial affairs and technical information such as of patents of companies or enterprises, evaluation means 3' (information processing means 380) for creating evaluating resources serving as reference indicators for evaluating the value of a company or enterprise by analyzing the correlation among the business management, financial affairs and patents on the basis of the business management, financial affairs and technical information stored in the database, and a patent evaluation means 5 (information processing means 380).

The evaluation means 3' includes patent trend analysis means 31, registration trend analysis means 32, registration prediction means 33, patent and economic indicator calculation means 34, patent asset value analysis means 35', patent and economic prediction means 36, and stock adequacy analysis means 37.

The patent asset value analysis means 35' (information processing means 380) has a similar structure to that of the patent asset value analysis means 35 in the first embodiment, and serves to depreciate the patent asset value 350' as a form of assets in order for appreciating the patent asset value 350'. The patent asset value is applied to depreciation rate according to the evaluated patent value on the basis of the patent evaluating indicator calculated by the patent evaluation means 5 provided in the second embodiment described above. That is, distribution of the similarity rate in the patent evaluation means 5 reflects distribution information of patent applications (inventions) mirroring various technical attribute enfolding not merely major technical improvement but also minor technical improvement. Thus, the depreciation rate and other factors of the patent assets are determined severally or on a cluster basis with the patent evaluating indicator calculated by the patent evaluation means 5, so that the patent asset value 350' can be evaluated objectively (or with high accuracy).

Also, the stock adequacy analysis means 37 (information processing means 380) in this embodiment makes a calculation based on the aforementioned patent asset value 350' calculated by the patent asset value analysis means 35'. That is, when the residue value of the cost for acquiring a patent is calculated on the basis of the research and development cost 211 and the expenditures incurred for filing patent applications, obtaining patent registrations and maintaining the registered patents, the patent asset value 350' can be calculated by determining a specific depreciation rate for the respective patents (by cluster) using the similarity rates and the distribution information obtained with the patent evaluation means 5 with regard to the respective patent applications and patent registrations. Consequently, strict evaluation of the patent asset value can be administered.

As one example, the evaluation of the relevant patent or invention can be made in such a manner that a patent having an extremely high similarity rate is estimated to be pertain to a minor technical improvement, thus to set forth a relatively short depreciable period. Alternatively, calculation of the research and development cost 211 per product may be made by using an unbalanced allocation but not simple average.

The intellectual property report means 4' (information processing means 380) serves to compile monthly, annually or quarterly reports on the trends of patents categorized on a company basis and a business basis in conjunction with the analyzed patent trend database 39, patent and economic indicator database 40, registration trend analysis means 32, registration prediction means 33, patent asset value analysis means, patent and economic prediction means 36, and stock adequacy analysis means 37' and further patent evaluation means 5.

Next, the sequence of processing of the company evaluating system 12 in the third embodiment of the present invention will be described with reference to the flowchart of FIG. 42.

Processes S100 to S103 in the flowchart are the same as those in the aforementioned first embodiment and will not be described further here. Only the structures of this embodiment different from the first embodiment will be described hereinafter.

In the process S110, evaluation of a patent is made according to the similarity of the respective patents with the patent evaluation means 5.

In the next process S114 similar to the process S104 in the first embodiment, the patent asset value 350' is calculated by depreciating the cost for obtaining the patent at a prescribed depreciation rate according to the patent evaluating indicator estimated from the patent value with the patent evaluation means 5 (information processing means 380) in the patent asset value analysis means 35' (information processing means 380).

In the next process S115 similar to the process S105 in the first embodiment, with the stock adequacy analysis means 37', adequacy of stock price of the relevant company is evaluated by comparing the patent asset value 350' calculated by the patent asset value analysis means 35' with intangible asset value ("total market value of shares"-"capital stock").

Future patent and economic indicator is calculated with the patent and economic prediction means 36 in a similar manner to the process S106 in the first embodiment

Various information reports are electrically provided in the forms of Internet data or e-mail and furnished to publishers, taking the results obtained with the patent evaluation means 5 into consideration at the process S117 similar to the process S107 in the first embodiment.

In this embodiment, the novelty of the respective patent applications and the trend of patent applications of a specific company or in the whole technical field can be evaluated quantitatively and qualitatively, and the adequacy of the relevant stock price can be validated objectively.

FIG. 43 is a graph showing distribution of the number of technical literatures to be researched and the similarity rate thus calculated.

In the graph, the similarity rate of the technical literatures to be researched is plotted along the abscissa, and the number of the technical literatures pertinent to the similarity rate is plotted along the ordinate. Additionally, the similarity rates of the technical literatures (patent publications) to be researched relative to the population are calculated throughout all the population including the technical literatures (patent publications) to be researched and shown as height in each similarity rate.

The groups of technical literatures can be sorted on the basis of the average and standard deviation of the similarity rates by expressing distribution of the number of the technical literatures based on the similarity rates of the literatures to calculate the average and standard deviation of the similarity rates on the distribution.

The present invention provides further insights into the region out of standard deviation σ in the distribution to determine the technical trend of the of the company from which the technical literatures were issued or the patent application was filed.

As shown on the illustrated chart, a region into which the technical literature having a low similarity rate not exceeding "(average) - σ" falls is defined as a "first digressionary region".

The similarity rate referred to here is an indicator for easily determining the similarity of the objective technical literature (patent publication or the like) to be researched relative to the technical literatures (patent publication or the like) in the population as formulated by the aforementioned formula 3 to formula 5. To be more specific, the similarity rate is the proportion of each keyword contained in the respective technical literatures to the number of the technical literatures in the specified population, which provides an indication of obtaining the average of the literatures per keyword.

It is important to choose the keyword in calculating the similarity rates among the respective technical literatures as the similarity rate ultimately calculated varies with the chosen keyword. For example, a keyword, which is frequently found in the company's own technical literatures, but not frequently found in the technical literatures of the other companies, should be deemed a distinctive keyword featuring the specific technical literatures.

The distinctive keyword characteristically appearing in the objective population can be obtained by calculating the respective probabilities using the keyword in question in two segments of the population of the technical literatures and the entire group of technical literatures including the population, and extracting the keyword distributed in a region on a two-dimensional plane.

There have been so far proposed various methods for parsing the distinctive keywords. The distinctive keywords includes "loading", "redress", "passenger", "boiling water", "plant", "suction port", "riding", "LSI", "MOSFET", "neutron", "cathode-ray tube", "elevator", "MISFET", "cache memory", "nuclear energy", etc.

The keywords extracted from the technical literatures are different in appearance rate from those in each company, but considered to be reflected in number on the properties of the groups of the literatures of the respective company. The company having the technical literatures from which many keywords are extracted can be regarded to have the potential of promoting technological developments concentrating on a specific technology. Conversely, the company having the technical literatures containing a small number of keywords can be regarded to extensively develop the relevant technologies or have so little technologies featuring the company.

The embodiment of the present invention noted herein uses the average and standard deviation σ of the similarity rate, but the present invention does not contemplate imposing any limitation on the category in which the average and standard deviation σ are used as threshold values, and alternatively, 2σ and 3σ or presence proportion of the number of technical literatures may be used as a threshold value in the embodiment of the invention. There may be defined a region deviated by a prescribed amount from the center of the distribution of the average or other values for the same purpose.

The technical literature falling into the first digressionary region has a high propensity to contain a prescribed keyword, which is less likely described in other technical literatures. Therefore, the technical literature falling into the first digressionary region is regarded to have a high probability of being dissimilar in technical direction to the technical literatures in the population and be related to new technology. That is, the technical literature of this type is considered to disclose exceptional technology different from the earlier technology. The technical literature, which has a low similarity rate and falls into the first digressionary region, is herein termed "exceptional technical literature", and the patent publication of the technical literatures in this category is herein termed "exceptional publication".

The region into which the technical literatures having a higher similarity rate more than "(average) + σ" is herein defined as "second digressionary region".

The technical literature falling into the second digressionary region should contain the prescribed keyword commonly used in other technical literatures.

Therefore, the technical literature falling into the second digressionary region is regarded to have a high probability of being similar in technical direction to the technical literatures in the population and be related to commonplace technology. That is, the technical literature of this type is considered to include disclosure about typical common technology such as quintessential improvement in existing techniques. The technical literature, which has a high similarity rate and falls into the second digressionary region, is herein termed "exemplary technical literature", and the patent publication of the technical literatures in this category is herein termed "exemplary publication".

The similarity rate acquisition means comprising the transmit/receive means 365, recording medium interface 379, record means interface 385, record means 384 and information processing means 380 serves to obtain the number of technical literatures containing the prescribed keywords from a database population storing the technical literatures and similarity rate based on the proportion of the technical literatures containing the prescribed keywords thus figured up to the total number of technical literatures in the database population.

The standard deviation calculation means such as the information processing means 380 serves to calculate the average and standard deviation of the similarity rate on the basis of the number of technical literatures and the similarity rate.

The demarcation means such as the information processing means 380 serves to sort out technical literatures into between a region for literatures having a low similarity rate and another region for literatures having a high similarity rate.

The output means comprising the transmit/receive means 365, display means 372, display interface 373, recording medium interface 379, record means interface 385 and information processing means 380 serves to deliver information representing the number of technical literatures and the similarity rate thus obtained in correlation with the regions.

FIG. 44 is a tabulated list showing the exceptional technical literatures among the patent publications involved in the company to be searched, arranged in ascending order of the similarity rate.

In this figure, there is illustrated an instance in that the similarity rate of the technical literature to be researched is calculated on the premise that all the publications of the company's own patent applications are regarded as the population. On the illustrated list, the numbers and titles of the patent publications are arranged in ascending order of number with the similarity rates and standard deviation values. As the patent publications on the list imply that the keyword group used in the objective patent publication to be researched is infrequently used in the company's own publications, the illustrated list shows "Example of company's own exceptional (patent application) publications". The line between the tenth and eleventh places on the list is shown in a heavy line to facilitate understanding of the rank order of the publications, but this heavy line is by no means limited thereto and the items of eleventh place or below may be written in small letters.

On the list, the publications entitled "tin plating bath", "new cerium complex", and "switching element driving circuit" are highly placed as the "exceptional publications". This implies that there are not many publications of the company's own publications, which have similar contents to those of the other publications. Thus, undertaking of the technical development of the each company can be appreciated by comparing the company's own publication with the exceptional publications calculated on the basis of the technical publications of the other companies in the same trade.

When the exceptional publication of the other company is present in the same technological field as the company's own technical field on the list of the exceptional publications, there can be estimated that "advertence of articles under development by other companies in the same technical field should be required." When the exceptional publication of the other company is present in a technological field different from the company's own technical field on the list of the exceptional publication, there can be estimated that "special attention should be paid to technical development of other companies in other technical field."

This system enables a development engineer looking for employment in a company valuing development in the technical field the engineer wishes to engage with to make a search for such a company. Also, it makes possible for an individual or juridical person wanting collaborative development to easily appreciate the movement and trend of technical development of a target company subject to the collaborative development and determine whether or not development under consideration should be advanced jointly with the target company.

The technology evaluating device according to the invention allows a user to formulate management policies and research and development policies of a company to be searched by representing exceptional technical literatures having a low similarity rate in order. Also, it becomes possible for investors in stocks to extract the technical field of technical development the target company are working with, thus to make good use of information resultantly obtained as criterion for short-term investment.

When a small number of technical literatures fall into the exceptional technical field or the standard deviation of the similarity rate is small, there can be obtained determination criterion such that "the objective company to be researched, which is not much engaged in technical development in new technical field, is not investable." In this case, a development engineer looking for employment in a company valuing development can figure out whether or not the objective company to be researched is concerned in the technical development the development engineer hopes for. As well, an individual or juridical person wanting collaborative development can easily appreciate the movement and trend of technical development of a target company subject to the collaborative development and determine whether or not development under consideration should be advanced jointly with the target company.

The demarcation means in the information processing means 380 as shown in FIG. 2 serves to sort out technical literatures into a region for literatures having a low similarity rate according to the calculated similarity rate and standard deviation.

The output means for the transmit/receive means 365, display means 372, recording medium interface 379, record means interface 385 and information processing means 380 serves to deliver information for displaying the technical literatures contained in the regions sorted by the demarcation means in ascending order of the similarity rate, as shown in FIG. 44.

FIG. 45 is a tabulated list showing the typical technical literatures among the patent publications involved in the company to be searched, arranged in descending order of the similarity rate.

Also in the illustrated case, the similarity rate of the technical literatures to be researched on the premise that all the publications of the company's own patent applications are regarded as the population. On the illustrated list, the numbers and titles of the patent publications are arranged in descending order of number with the similarity rates and standard deviation values. As the patent publications on the list imply that the keyword group used in the objective patent publication to be researched is frequently used in the company's own publications, the illustrated list shows "Example of company's own exemplary (patent application) publications". The line between the tenth and eleventh places on the list is shown in a heavy line to facilitate understanding of the rank order of the publications, but this heavy line is by no means limited thereto and the items of eleventh place or below may be written in small letters.

On the illustrated list, the items "metal removing method", "single-side plated aluminum plate" and "powder for continuously casting copper" are highly placed as the "exemplary publications". The publications appearing on the list suggest that there are many other publications similar thereto in the company's own publications (such as patent application publications). Thus, undertaking of the technical development of the each company can be appreciated by comparing the company's own publication with the exemplary publications calculated on the basis of the technical publications of the other companies in the same trade.

When the exemplary publication of the other company is present in the same technological field as the company's own technical field on the list of the exceptional publication, there can be estimated that "measures such as cross license must be contemplated" because the other companies attempt to enhance the products in the same technical field.

Also, it makes possible for an individual or juridical person wanting collaborative development to easily appreciate the movement and trend of technical development of a target company subject to the collaborative development and determine whether or not development under consideration should be advanced jointly with the target company.

When the exemplary publication of the other company is present in a technological field different from the company's own technical field on the list of the exemplary publications, there can be estimated that "attention needs to be paid to the patented inventions of the other companies in advancing the company's own products to the relevant technical field" or "the company's own products should be developed with careful attention to disparity in technical capabilities in advancing the company's own products to the relevant technical field."

Besides, the development engineer looking for employment in a company valuing development in the technical field the engineer wishes can engage with to make a search for such a company.

The technology evaluating device according to the invention allows a user to formulate management policies and research and development policies of a company to be searched by representing exemplary technical literatures having a low similarity rate in order. Also, it becomes possible for investors in stocks to extract the technical field of technical development the target company are working with, thus to make good use of information resultantly obtained as criterion for relatively short-term investment.

Also, it makes possible for an individual or juridical person wanting collaborative development to easily appreciate the movement and trend of technical development of a target company subject to the collaborative development and determine whether or not development under consideration should be advanced jointly with the target company.

When a small number of technical literatures falls into the exemplary technical field or the standard deviation of the similarity rate is large, there can be obtained determination criterion such that the objective company to be researched is not investable for relatively short-term investment due to lack of decisive technical policy. In this case, a development engineer looking for employment in a company valuing development can figure out whether or not the objective company to be researched is concerned in the technical development the development engineer hopes for.

The demarcation means in the information processing means 380 as shown in FIG. 2 serves to sort out technical literatures into a region for literatures having a high similarity rate according to the calculated similarity rate and standard deviation.

The output means for the transmit/receive means 365, display means 372, recording medium interface 379, record means interface 385 and information processing means 380 serves to deliver information for displaying the technical literatures contained in the regions sorted by the demarcation means in descending order of the similarity rate, as shown in FIG. 45.

FIG. 46 shows the distribution of the exceptional technical literatures and exemplary technical literatures classified on a year basis of the similarity rate of the own literatures with respect to that of the "S" company.

On this illustrated chart, the numbers of exemplary technical literatures are depicted by outline bars and the numbers of exceptional technical literatures are depicted by hatching bars on a year basis. The height of each bar on the chart refers to the left scale "Number of literatures". On the same chart, the percentages of the exemplary technical literatures are also indicated by a broken outline and those of the exceptional technical literatures are indicated by a broken solid line. The height of each line refers to the right scale "Percentage of exceptional and exemplary patents".

The illustrated chart represents the number of "exceptional patents" (exceptional publications) and the number of "exemplary patents" (exemplary publications) sorted and categorized on a year basis, whose patent applications were filed in the period of 1994 through 2001, which numbers are based on the averages and standard deviations calculated from the similarity rates of the patent application publications.

The illustrated chart indicates that the number of the exceptional patents is increased from year to year, but the number of the exemplary patents is decreased from year to year. Thus, the fact that the number of the exemplary patents is decreased from year to year and the number of the exceptional patents is increased from year to year in the example of the "S" company indicates a possibility that the "S" company is actively engaged in technical development in a technical field somewhat remote from the core technical region.

On the contrary, when the number of the exemplary patents is increased from year to year and the number of the exceptional patents is decreased from year to year in the example of the "S" company, there is a possibility that the "S" company is active in technical development in related technology of the core technical region.

Looking over the chart, when an target company has the exemplary patents decreased in number from year to year and the exceptional patents increased in number from year to year, rise in the stock price of the target company can be anticipated, because the target company is thought to be actively engaged in technical development in a technical field somewhat remote from the core technical region.

In this case, a development engineer looking for employment in a company valuing development can appreciate that the objective company to be researched is active in technical development in the technical field the engineer wishes to engage with. Moreover, it makes possible for an individual or juridical person wanting collaborative development to easily appreciate the active movement of technical development of a target company subject to the collaborative development and determine whether or not development under consideration should be advanced jointly with the target company.

Conversely, when an target company has the exemplary patents increased in number from year to year and the exceptional patents decreased in number from year to year, the target company is likely active in technical development in related technology of the core technical region, so that it can be determined that the target company is investable because the company is thought to be "unspectacular but steadily advance its technical development over the long term."

In this case, a development engineer looking for employment in a company valuing development can appreciate that the objective company to be researched is active in technical development in the technical field the engineer wishes to engage with. Moreover, it makes possible for an individual or juridical person wanting collaborative development to easily appreciate the active movement of technical development of a target company subject to the collaborative development and determine whether or not development under consideration should be advanced jointly with the target company.

The demarcation means in the information processing means 380 as shown in FIG. 2 serves to sort out technical literatures into a region for literatures having a low similarity rate or a region for literatures of a high similarity rate according to the calculated similarity rate and standard deviation.

The output means for the transmit/receive means 365, display means 372, recording medium interface 379, record means interface 385 and information processing means 380 serves to deliver information for indicating the number the technical literatures contained in the regions sorted by the demarcation means in the form of a graph on an every-filing or every-publishing time basis, as shown in FIG. 46.

FIG. 47 shows the distribution of the similarity rate calculated on the own patent literatures in the form of a circle graph.

On the illustrated graph, the "first digressionary region", which is a region into which the technical literature having a low similarity rate not exceeding "(average) - (standard deviation $\sigma$)" falls, is defined as a "group of publications having a relatively low similarity rate", and the "second digressionary region", which is a region into which the technical literatures having a higher similarity rate more than "(average)+$\sigma$", is defined as a "group of publications having a relatively high similarity rate". The group of the publications in the region of "(average) $\pm$ (standard deviation $\sigma$)" is defined as the "other group of publications".

The illustrated example shows that the percentage of the patent publications present in the "first digressionary region", i.e. "exceptional publications", or "group of publications having a relatively low similarity rate" is 26%, and the percentage of the patent publications present in the "second digressionary region", i.e. "exemplary publications", or "group of publications having a relatively high similarity rate" is 10%.

By representing the distribution of the similarity rate with respect to the technical literatures of the objective company to be researched, the difference in percentage between the number of the "exemplary publications" or "group of publications having a relatively high similarity rate" and "exceptional publications" or "group of publications having a relatively low similarity rate" can easily be perceived from the central angle sectors of the circle graph. Since the "exceptional publications" or "group of publications having a relatively low similarity rate" is larger on the graph, the objective company to be researched is thought to be active in technical development in new technical field rather than the core technical field.

As shown in the illustrated circle graph, when the target company is thought to have a large number of "publications having a relatively low similarity rate" and be actively engaged in technical development in a technical field somewhat remote from the core technical region, rise in the stock price of the target company can be anticipated according to "predictions of the company's success in business in the future in investing in the target company."

When the target company is thought to have a large number of "publications having a relatively high similarity rate" and be actively engaged in technical development in the pertinent core technologies of the company to be searched, it can be determined that the target company is investable because the company is thought to be "unspectacular but steadily advance its technical development over the long term."

Accordingly, the technical engineer or developer can determine if the target company to be searched is engaging with technology development in a new field in or active in technical development in the core technical field. Besides, the engineer can evaluate if a target company has business foundation in well-established technical core region.

Also, it makes possible for an individual or juridical person wanting collaborative development to easily appreciate the active technical development of a target company subject to the collaborative development, and determine whether the target company has the company's core fundamentals as a stable source of income, consequently to determine whether or not development under consideration should be advanced jointly with the target company.

The demarcation means such as the information processing means 380 shown in FIG. 2 serves to sort out technical literatures into a region for the literatures having a low similarity rate or another region for the literatures having a high similarity rate on the basis of the calculated average and standard deviation of the similarity rates.

As shown in the circle graph of FIG. 47, the output means comprising the transmit/receive means 365, display means 372, display interface 373, recording medium interface 379, record means interface 385 and information processing means 380 serves to deliver information representing the percentages of the numbers of the technical literatures contained in the respective sorted regions.

FIG. 48 is a transition diagram showing the distribution of the similarity rate classified on a year basis of the technical literatures of the company to be searched.

The ordinate axis in the graph depicts "similarity rate deviation", which is obtained by dividing the similarity rate calculated with respect to the patent publication of the objective company to be researched by the average of the similarity rates and further the standard deviation $\sigma$ to standardize the similarity rate on the assumption that the average of the similarity rates is 0. The abscissa axis in the graph depicts the application year in which a patent application is filed (or publication year). The patent publication whose patent application is filed in the year on the illustrated chart resides in any of the circles in the diagram. The size of each circle in the diagram denotes the number of patent publications. Although the number of publications is depicted by the height of the bar line in the diagram of FIG. 43, it is depicted by the size of the circle in this two dimensional diagram.

The value of +1 more of the "similarity rate deviation" resides in the region of exemplary publication, and the value of -1 or less of the same resides in the region of exceptional publication. In the example of the company to be researched in the diagram, the exceptional publications having a small deviation of similarity rate are less found within the range roughly from 1992 to 1995 relative to the entire patent publications (smallish circle), and largely found within the range from 1996 to 2001 (larger circle).

Meanwhile, the exemplary publications having a large deviation of similarity rate are found in large number within the range including 1992, 1993, 1996, 2000 and 2001, but there are very few publications within the range from 1994 to 1999.

Thus, the user can recognize the yearly change in distribution of the similarity rate deviation by reference to the illustrated diagram. In the example of the company to be researched in the diagram, since the exceptional publications having a small deviation of similarity rate are less found within the range roughly from 1992 to 1995 relative to the entire patent publications, and largely found within the range from 1996 to 2001, the objective company can be estimated to advance development of products different from those of the other companies in later years.

Meanwhile, patent applications with respect to the exemplary publication having a large value of similarity rate deviation were filed in 1992, 1993, 1996, 2000 and 2001, but there are very few applications filed in 1994, 1995 and 1997 to 1999. Thus, the technical development in the objective company can be thought to have been directed toward commercialization of or improvement in mature products in 1994, 1995 and 1997 to 1999.

Reviewing the diagram as illustrated, the user can investigate the transition of trends of technology each year of each relevant company by viewing the information thus represented and learning the status and stock movements of the relevant company with reference to the evaluation categorized at the time of foundation, development, maturation and decline with respect to products dealt with by the relevant company.

Besides, the technical engineer or developer can determine if the relevant company to be searched is engaging with technology development in a new field in or advancing the development of grown-up products in a technical field, and furthermore, evaluate if a target company has business foundation in well-established technical core categories.

As well, an individual or juridical person wanting collaborative development can easily appreciate the movement and trend of technical development of a target company subject to the collaborative development and determine whether or not development under consideration should be advanced jointly with the target company.

The standardization means as part of the information processing means 380 as shown in FIG. 2 serves to define a standard similarity rate deviation by dividing the similarity rate thus obtained by the average of the similarity rate and the standard deviation.

The demarcation means as part of the information processing means 380 serves to sort out the similarity rate deviation thus standardized into multiple regions based on the standard deviation of the similarity rate.

The output means, which includes the transmit/receive means 365, display means 372, display interface 373, recording medium interface 379, record means interface 385 and information processing means 380, serves to deliver notational information representing symbolically the existence and number of the technical literatures residing in a coordinate area defined by a coordinate axis denoting a similarity rate deviation region and another coordinate axis denoting the time of patent application or public disclosure with respect to the relevant technical literatures.

FIG. 49 is a transition diagram showing the distribution of the similarity rate classified on a year basis of the technical literatures of the company to be searched.

Similarly to FIG. 48, the ordinate axis in the graph depicts "similarity rate deviation", which is obtained by dividing the similarity rate calculated with respect to the patent publication of the objective company to be researched by the average of the similarity rates and further the standard deviation $\sigma$ to standardize the similarity rate on the assumption that the average of the similarity rates is 0. The abscissa axis in the graph depicts the application year in which a patent application is filed (or publication year). The patent publication whose patent application is filed in the year on the illustrated chart is plotted on the chart as illustrated. The size of each circle in the diagram denotes the number of patent publications. Although the number of publications is depicted by the height of the bar line in the diagram of FIG. 43, it is depicted by the size of the circle in this two dimensional diagram. The mark "x" on the chart denotes one patent publication, and the location of "x" is significant for the existence of the patent publication on the chart. Although the number of publications is depicted by the height of the bar line in the diagram of FIG. 43, it is depicted by the marks "x" in this two dimensional diagram to ensure easy perception of the distribution of the patent applications.

In the case of the objective company to be researched as shown on the chart, it can be perceived from the chart that the patent applications with respect to the exceptional publications having a small deviation value of the similarity rate were filed in large numbers in late year or after a lapse of several years from the early period of filing the patent applications, but marginally in the early period of filing the patent applications and during the middle period of filing. Meanwhile, it can be seen that there were seldom filed the patent applications with respect to the exemplary publications having a large deviation value of the similarity rate in other years than in late year or after a lapse of several years from the early period of filing the patent applications.

Reviewing the diagram as illustrated, the user can know variation such as monthly change in distribution of similarity rate deviation with time by viewing the information represented resultantly. Since the patent applications with respect to the exceptional publications having a small deviation value of the similarity rate have been filed in relatively large numbers in late year or after a lapse of several years from the early period of filing the patent applications as touched upon above, the objective company can be estimated to advance development of products different from those of the other companies.

Meanwhile, since there have been seldom filed the patent applications with respect to the exemplary publications having a large deviation value of the similarity rate in other years than in late year or after a lapse of several years from the early period of filing the patent applications, the technical development in the objective company can be thought to have been directed toward commercialization of or improvement in mature products without getting engaged in the same technical field of the company.

Further by classifying the technical fields appertain to the respective patent publications by color, it is possible to manifestly learn when and in which technical field the development of products different from those of the other companies was advanced or directed to commercialization of mature products.

By displaying or printing the technical fields appertain to the respective patent publications by category, it is possible to investigate when and in which technical field the development of products different from those of the other companies was advanced or directed to commercialization of mature products.

By reviewing the illustrated chart, the user can investigate the transition of trends of technology each year of each relevant company by viewing the information thus represented and learning the status and stock movements of the relevant company with reference to the evaluation categorized at the time of foundation, development, maturation and decline with respect to products dealt with by the relevant company.

The output means pertinent to the transmit/receive means 365, display means 372, display interface 373, recording medium interface 379, record means interface 385, and information processing means 380 serves to deliver notational information representing symbolically the existence of the technical literatures residing in a coordinate area defined by a coordinate axis denoting a similarity rate deviation region and another coordinate axis denoting the time of patent application or public disclosure with respect to the relevant technical literatures thus obtained.

INDUSTRIAL APPLICABILITY

As is apparent from the foregoing description, since the technology evaluating device according to the present invention comprises the keyword collection means for collecting prescribed keywords from technical literatures to be searched, the count means for counting the number of technical literatures containing the prescribed keywords from the database population storing the technical literatures, the total count means for figuring out a total of technical literatures in the database population, the similarity rate calculation means for calculating the similarity rate based on the proportion of the technical literatures containing the prescribed keywords thus figured up to the total number of technical literatures in the database population, and an output means for outputting the similarity rate thus calculated to one or more of the display means, record means and transmitting means, quantitative evaluation as to whether the objective technical literature is of a new field of concerned industry or business can be made according to the present invention.

Further, according to another embodiment of the present invention, since the device of the invention is capable of calculating the similarity rate can be calculated by multiplying the proportion calculated with the similarity rate calculation means by the keyword-specific weighting coefficient, it is possible to calculate the similarity rate weighted or averaged to be tailored to keywords, which specify a technical field, but have a low occurrence frequency in the technical literatures.

Moreover, according to the other embodiment of the present invention, since the similarity rate can be obtained by calculating an average of each of keywords figured out by the similarity rate calculation means, definitive calculation of the similarity rate of the keywords in the technical literatures in the database population even when multiple keywords are configured can be performed. Also, a statistically-significant similarity rate of higher reliability suitable for the needs of users can be calculated according to the present invention.

Further, according to the other embodiment of the present invention, since the similarity rate can be obtained by exponentiating the proportion thus calculated with the similarity rate calculation means by the keyword-specific weighting coefficient, there can be performed calculation of the similarity rates of not only common words having a high occurrence frequency in the technical literatures in the database population but also relevant keywords, which specify a technical field, but have a low occurrence frequency in the technical literatures, giving definite meanings to those words and keywords, since the featured device of the invention is capable of obtaining the similarity rate by exponentiating the proportion thus calculated with similarity rate calculation means by the keyword-specific weighting coefficient.

Further, since the device according to the other embodiment of the present invention takes advantage of one or more technical literatures such as patent publications, unexamined patent publications, utility model registration publications, unexamined utility model publications, published Japanese translations of international patent application publication, re-published Japanese translations of international patent application publication, foreign publications, appeal trial publications, progress information, technical disclosure journals issued from Japan institute of invention and innovation, journals of technical disclosure, and literatures on prospective technology, the corporate value can be accurately analyzed, taking the value of intangible properties of the corporate into account quantitatively and qualitatively.

Further, since the device according to the other embodiment of the present invention comprises the similarity rate acquisition means for obtaining the similarity rate based on the proportion in which the more than one technology relevant to the patent information containing the prescribed keyword is present in the database population of the patent information, registration counting means for obtaining the number of registration of established patent information in the information of patents subjected to investigation, and the display means for displaying the similarity rate thus obtained in correlation with the number of registration of the established patents, there can be carried out determination of the relation between the importance of filing a patent application for the technology established in the patent information and the similarity rate thus calculated.

Further, since the device according to the other embodiment of the present invention comprises the similarity rate acquisition means for obtaining the similarity rate based on the proportion in which more than one technology relevant to the patent information containing the prescribed keyword is present in the database population of the patent information, the calculation means for calculating the required year number until patent registration after filing of a patent application for the more than one technology relevant to the patent information to be searched, and the display means for displaying the similarity rate thus obtained in correlation with the period of time thus calculated, the user can know the distribution of the similarity rate and the required year number until patent registration with respect to the more than one technology relevant to the patent information to be searched.

Further, since the device according to the other embodiment of the present invention comprises the similarity rate acquisition means for obtaining the similarity rate based on the proportion in which more than one technology relevant to the patent information containing the prescribed keyword is present in the database population of the patent information, the calculation means for calculating the required year number until patent registration after filing of a patent application for the more than one technology relevant to the patent information to be searched, the standard deviation calculation means for calculating one or both of standard deviation of the similarity rate and standard deviation of the required year number until patent registration, and the display means for displaying the aforesaid one or both of standard deviation of the similarity rate and standard deviation of the required year number until patent registration, the user can know the degree of concentration or dispersion of the similarity rate and the required year number until patent registration in the distribution thereof.

Further, since the device according to the other embodiment of the present invention comprises the similarity rate acquisition means for obtaining the similarity rate based on the proportion in which more than one technology relevant to the patent information containing the prescribed keyword is present in the database population of the patent information every time the patent application is filed, the calculation means for calculating the required year number until patent registration after filing of the patent application for the more than one technology relevant to the patent information to be searched, and the display means for displaying the similarity rate thus obtained in correlation with the period of time thus calculated, the user can know the distribution of the similarity rate and the required year number until patent registration with respect to the patent information to be searched every time a patent application is filed.

Further, since the device according to the other embodiment of the present invention comprises the similarity rate acquisition means for obtaining the similarity rate based on the proportion in which more than one technology relevant to the patent information containing the prescribed keyword is present in the database population of the patent information every time the patent application is filed, the calculation means for calculating the required year number until patent registration after filing of the patent application for the more than one technology relevant to the patent information to be searched, the standard deviation calculation means for calculating one or both of standard deviation of the similarity rate and standard deviation of the required year number until patent registration, and the display means for displaying the aforesaid one or both of standard deviation of the similarity rate and standard deviation of the required year number until patent registration every time the patent application is filed, the user can know the distribution of the similarity rate and the required year number until patent registration with respect to the more than one technology relevant to the patent information to be searched every time a patent application is filed.

Further, since the device according to the other embodiment of the present invention comprises the prediction means for predicting predictive standard deviation and predictive required year number until patent registration on the basis of one or both of standard deviation of the similarity rate and standard deviation of the required year number until patent registration every time the patent application is filed by using primary or multidimensional extrapolating calculation, and the display means for displaying the aforesaid one or both of the predictive standard deviation and the predictive required year number until patent registration, the user can make estimation of future patent applications based on the past patent information.

Further according to the present invention, the user can visually perceive instantaneously the similarity rate, required year number until patent registration and period in which the patent application is filed, thus to easily discern the intended similarity rate, required year number until patent registration and period in which the patent application is filed from plenty of data displayed on the display means.

Further, since the featured program according to the other embodiment of the present invention has the functions of collecting prescribed keywords from technical literatures to be searched, counting the number of technical literatures containing the prescribed keywords from the database population storing the technical literatures, figuring out the total of technical literatures in the database population, calculating the similarity rate based on the proportion of the technical literatures containing the prescribed keywords thus figured up to the total number of technical literatures in the database population, and outputting the similarity rate thus calculated to one or more of the display means, record means and transmitting means, there can be made quantitative evaluation as to whether the technical literature to be searched is of the new field of concerned industry or business.

Further, since the featured program according to the other embodiment of the present invention has the functions of obtaining the similarity rate based on the proportion in which more than one technology relevant to the patent information containing the prescribed keyword is present in the database population of the patent information, calculating required year number until patent registration after filing of a patent application for the more than one technology relevant to the patent information to be searched, and displaying the similarity rate thus obtained in correlation with the period of time thus calculated, the user can know the distribution of the similarity rate and the required year number until patent registration with respect to the more than one technology relevant to the patent information to be searched.

Further according to the present invention, the company's value can be recognized by analyzing the correlation between the patent and the economic figures. Also by quantitatively recognizing the value of the patent, valuation of business enterprise can be correctly determined.

Further according to the present invention, required evaluation can be made by analyzing the asset value of the patent based on its research and development costs in accordance with the current situations, and moreover, it can be exactly estimated by depreciating research and development in accordance with the evaluation of the patent value. In addition, the stock price of the objective company to be researched can be properly evaluated on the basis of the asset value of the patent and the financial information of the company.

Further according to the present invention, by visually determining the similarity of the patent information and the relative position or distribution of the patent information to be researched, it becomes possible to calculate importance of the relevant technical literature and find an indicator for evaluation of the patent. Moreover, the asset values of the patents of the respective companies can be precisely determined by use of the indicator for the evaluation of the patent, consequently to properly evaluate the valuation of business and the stock price of the objective company to be researched.

Further according to the present invention, future stock price can be estimated on the basis of the patent registration ratio, the number of patent registrations and the economical fundamentals and the asset value of the relevant patent as noted above, and beneficial data on the relation between the patent and business management and finance of the objective company and an effect on the business management can be provided.

Further according to the present invention, the movement and trend of the exploitation technology of the other companies can be appreciated, thus to allow the user to know aspects of technologies which have been developed by other companies to use the information obtained by the device of the invention as data for thought in considering employment on investment choices or collaborative development.

## Claims

**1.** A technology evaluating device comprising:

a keyword collection means for collecting prescribed keywords from technical literatures to be searched,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population, and
an output means for outputting said similarity rate thus calculated to one or more of a display means, a record means and transmitting means.

**2.** A technology evaluating device comprising:

a keyword collection means for collecting prescribed keywords from technical literatures to be searched,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population and multiplying said proportion obtained by said similarity rate calculation means by a keyword-specific weighting coefficient, and
an output means for outputting said similarity rate thus calculated to one or more of a display means, a record means and transmitting means.

**3.** A technology evaluating device comprising:

a keyword collection means for collecting prescribed keywords from technical literatures to be searched,

a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population with respect to each of keywords and calculating an average in said proportion with respect to said keywords, and
an output means for outputting said similarity rate thus calculated to one or more of a display means, a record means and transmitting means.

**4.** A technology evaluating device comprising:

a keyword collection means for collecting prescribed keywords from technical literatures to be searched,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population with respect to each of keywords and multiplying said proportion obtained by said similarity rate calculation means by a keyword-specific weighting coefficient, and
an output means for outputting said similarity rate thus calculated to one or more of a display means, a record means and transmitting means.

**5.** A technology evaluating device comprising:

a keyword collection means for collecting prescribed keywords from technical literatures to be searched,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population and exponentiating said proportion obtained by said similarity rate calculation means by a keyword-specific weighting coefficient, and
an output means for outputting said similarity rate thus calculated to one or more of a display means, a record means and transmitting means.

**6.** A technology evaluating device comprising:

a keyword collection means for collecting prescribed keywords from technical literatures to be searched,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population with respect to each of keywords and exponentiating said proportion obtained by said similarity rate calculation means by a keyword-specific weighting coefficient, and
an output means for outputting said similarity rate thus calculated to one or more of a display means, a record means and transmitting means.

**7.** The technology evaluating device set forth in any of claims 1 to 6, wherein said technical literatures are one or more technical literatures such as patent publications, unexamined patent publications, utility model registration publications, unexamined utility model publications, published Japanese translations of international patent application publication, re-published Japanese translations of international patent application publication, foreign publications, appeal trial publications, progress information, technical disclosure journals issued from Japan institute of invention and innovation, journals of technical disclosure, and literatures on prospective technology.

**8.** A technology evaluating device comprising:

a similarity rate acquisition means for obtaining a similarity rate based on the proportion in which more than one technology relevant to patent information containing a prescribed keyword is present in a database population of said patent information,
registration counting means for obtaining the number of registration of established patent information in information of patents subjected to investigation, and
a display means for displaying said similarity rate thus obtained in correlation with the number of registration of said established patents.

**9.** A technology evaluating device comprising:

a similarity rate acquisition means for obtaining a similarity rate based on the proportion in which more than one technology relevant to patent information containing a prescribed keyword is present in a database population of said patent information,
a calculation means for calculating required year number until patent registration after filing of a patent application for more than one technology relevant to said patent information to be searched, and
a display means for displaying said similarity rate thus obtained in correlation with a period of time.

**10.** A technology evaluating device comprising:

a similarity rate acquisition means for obtaining a similarity rate based on the proportion in which more than one technology relevant to patent information containing a prescribed keyword is present in a database population of said patent information,
a calculation means for calculating required year number until patent registration after filing of a patent application for more than one technology relevant to said patent information to be searched,
a standard deviation calculation means for calculating one or both of standard deviation of said similarity rate and standard deviation of the required year number until patent registration, and
a display means for displaying said one or both of standard deviation of said similarity rate and standard deviation of said required year number until patent registration.

**11.** A technology evaluating device comprising:

a similarity rate acquisition means for obtaining a similarity rate based on the proportion in which more than one technology relevant to patent information containing a prescribed keyword is present in a database population of said patent information every time a patent application is filed,
a calculation means for calculating required year number until patent registration after filing of said patent application for more than one technology relevant to said patent information to be searched, and
a display means for displaying said similarity rate thus obtained in correlation with a period of time.

**12.** A technology evaluating device comprising:

a similarity rate acquisition means for obtaining a similarity rate based on the proportion in which more than one technology relevant to patent information containing a prescribed keyword is present in a database population of said patent information every time a patent application is filed,
a calculation means for calculating required year number until patent registration after filing of a patent application for more than one technology relevant to said patent information to be searched,
a standard deviation calculation means for calculating one or both of standard deviation of said similarity rate and standard deviation of a required year number until patent registration, and
a display means for displaying said one or both of standard deviation of said similarity rate and standard deviation of said required year number until patent registration every time said patent application is filed.

**13.** A technology evaluating device comprising:

a similarity rate acquisition means for obtaining a similarity rate based on the proportion in which more than one technology relevant to patent information containing a prescribed keyword is present in a database population of said patent information every time a patent application is filed,
a calculation means for calculating required year number until patent registration after filing of a patent application for more than one technology relevant to said patent information to be searched,
a standard deviation calculation means for calculating one or both of standard deviation of said similarity rate and standard deviation of a required year number until patent registration,
a prediction means for predicting predictive standard deviation and predictive required year number until patent registration based on one or both of standard deviation of said similarity rate and standard deviation of said required year number until patent registration every time said patent application is filed by using primary or multidimensional extrapolating calculation, and
a display means for displaying said one or both of predictive standard deviation of said similarity rate and predictive standard deviation of said required year number until patent registration every time said patent application is filed.

**14.** The technology evaluating device set forth in any of claims 11 to 13, wherein one or more of said similarity rate, required year number until patent registration and period in which a patent application is filed are identified on said display means with different colors with respect of one or more degrees of said similarity rate, required year number until patent registration and period in which said patent application is filed.

**15.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of collecting prescribed keywords from technical literatures to be searched,
said count means having a function of counting the number of technical literatures containing said prescribed keywords from said database population storing said technical literatures,
said total count means having a function of figuring out said total of technical literatures in said database population,
said similarity rate calculation means having a function of calculating said similarity rate based on the proportion of the technical literatures containing said prescribed keywords thus figured up to the total number of technical literatures in said database population, and
said output means having a function of outputting said similarity rate thus calculated to one or more of said display means, said record means and said transmitting means.

**16.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of collecting prescribed keywords from technical literatures to be searched,
said count means having a function of counting the number of technical literatures containing said prescribed keywords from said database population storing said technical literatures,
said total count means having a function of figuring out said total of technical literatures in said database population,
said similarity rate calculation means having a function of calculating a similarity rate based on said proportion of said technical literatures containing said prescribed keywords thus figured up to the total number of technical literatures in said database population and multiplying said proportion obtained by said similarity rate calculation means by a keyword-specific weighting coefficient, and
said output means having a function of outputting said similarity rate thus calculated to one or more of said display means, said record means and said transmitting means.

**17.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of collecting prescribed keywords from technical literatures to be searched,
said count means having a function of counting the number of technical literatures containing said prescribed keywords from said database population storing said technical literatures,
said total count means having a function of figuring out said total of technical literatures in said database population,
said similarity rate calculation means having a function of calculating said similarity rate based on the proportion of said technical literatures containing said prescribed keywords thus figured up to the total number of technical literatures in said database population with respect to each of keywords and calculating an average in said proportion with respect to said keywords, and
said output means having a function of outputting said similarity rate thus calculated to one or more of said display means, said record means and said transmitting means.

**18.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of collecting prescribed keywords from technical literatures to be searched,
said count means having a function of counting the number of technical literatures containing said prescribed keywords from said database population storing said technical literatures,
said total count means having a function of figuring out said total of technical literatures in said database population,
said similarity rate calculation means having a function of calculating said similarity rate based on the proportion of said technical literatures containing said prescribed keywords thus figured up to the total number of technical literatures in said database population with respect to each of keywords and multiplying said proportion obtained by said similarity rate calculation means by a keyword-specific weighting coefficient, and
said output means having a function of outputting said similarity rate thus calculated to one or more of said display means, said record means and said transmitting means.

**19.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of collecting prescribed keywords from technical literatures to be searched,

said count means having a function of counting the number of technical literatures containing said prescribed keywords from said database population storing said technical literatures,
said total count means having a function of figuring out said total of technical literatures in said database population,
said similarity rate calculation means having a function of calculating said similarity rate based on the proportion of said technical literatures containing said prescribed keywords thus figured up to the total number of technical literatures in said database population and exponentiating said proportion obtained by said similarity rate calculation means by a keyword-specific weighting coefficient, and
said output means having a function of outputting said similarity rate thus calculated to one or more of said display means, said record means and said transmitting means.

**20.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of collecting prescribed keywords from technical literatures to be searched,
said count means having a function of counting the number of technical literatures containing said prescribed keywords from said database population storing said technical literatures,
said total count means having a function of figuring out said total of technical literatures in said database population,
said similarity rate calculation means having a function of calculating said similarity rate based on the proportion of said technical literatures containing said prescribed keywords thus figured up to the total number of technical literatures in said database population with respect to each of keywords and exponentiating said proportion obtained by said similarity rate calculation means by a keyword-specific weighting coefficient, and
said output means having a function of outputting said similarity rate thus calculated to one or more of said display means, said record means and said transmitting means.

**21.** The technology evaluating program set forth in any of claims 15 to 20, wherein said technical literatures are one or more technical literatures such as patent publications, unexamined patent publications, utility model registration publications, unexamined utility model publications, published Japanese translations of international patent application publication, re-published Japanese translations of international patent application publication, foreign publications, appeal trial publications, progress information, technical disclosure journals issued from Japan institute of invention and innovation, journals of technical disclosure, and literatures on prospective technology.

**22.** A technology evaluating program executed in an information processing means of a technology evaluating device comprising a similarity rate acquisition means for obtaining a similarity rate, registration counting means for obtaining the number of registration of established patent information, a display means for displaying said similarity rate thus obtained in correlation with the number of registration of said established patents, and information processing means for controlling said similarity rate acquisition means, said registration counting means and said display means, wherein
said information processing means executes
the function of said similarity rate acquisition means to obtain said similarity rate based on said proportion in which more than one technology relevant to said patent information containing a prescribed keyword is present in said database population of said patent information,
the function of said registration counting means to obtain the number of registration of established patent information in said information of patents subjected to investigation, and
the function of said display means to display said similarity rate thus obtained in correlation with the number of registration of said established patents.

**23.** A technology evaluating program executed in an information processing means of a technology evaluating device comprising a similarity rate acquisition means for obtaining a similarity rate, a calculation means for obtaining required year number for registration calculated from the number of years taken from filing until gaining registration of a patent application with respect to an objective patent information to be searched, a display means for displaying said similarity rate thus obtained in correlation with the number of registration of said established patents, and information processing means for controlling said similarity rate acquisition means, said calculation means and said display means, wherein

said information processing means executes

the function of said similarity rate acquisition means to obtain said similarity rate based on the proportion in which more than one technology relevant to the patent information containing a prescribed keyword is present in said database population of said patent information,

the function of said calculation means to obtain required year number for registration calculated from the number of years taken from filing of a patent application until gaining registration for more than one technology relevant to said patent information to be searched, and

the function of said display means to display said similarity rate thus obtained in correlation with a period of time thus calculated.

**24.** A technology evaluating program executed in an information processing means of a technology evaluating device comprising a similarity rate acquisition means for obtaining a similarity rate, a calculation means for obtaining required year number for registration calculated from the number of years taken from filing until gaining registration of a patent application with respect to an objective patent information to be searched, a standard deviation calculation means for calculating one or both of standard deviation of the similarity rate and standard deviation of the required year number until patent registration, a display means for displaying one or both of standard deviation of the similarity rate and standard deviation of the required year number until patent registration, and information processing means for controlling said similarity rate acquisition means, said calculation means and said display means, wherein

said information processing means executes

the function of said similarity rate acquisition means to obtain said similarity rate based on the proportion in which more than one technology relevant to the patent information containing a prescribed keyword is present in said database population of said patent information,

the function of said calculation means to obtain required year number for registration calculated from the number of years taken from filing of the patent application until gaining registration for more than one technology relevant to said patent information to be searched,

the function of said standard deviation calculation means to calculate one or both of standard deviation of the similarity rate and standard deviation of the required year number until patent registration, and

the function of said display means to display said one or both of standard deviation of the similarity rate and standard deviation of the required year number until patent registration.

**25.** A technology evaluating program executed in an information processing means of a technology evaluating device comprising a similarity rate acquisition means for obtaining a similarity rate based on the proportion in which more than one technology relevant to patent information containing a prescribed keyword is present in a database population of said patent information every time a patent application is filed, a calculation means for calculating required year number until patent registration after filing of said patent application for more than one technology relevant to said patent information to be searched, a display means for displaying said similarity rate thus obtained in correlation with a period of time, and information processing means for controlling said similarity rate acquisition means, said calculation means and said display means, wherein

said information processing means executes

the function of said similarity rate acquisition means to obtain said similarity rate based on the proportion in which more than one technology relevant to patent information containing said prescribed keyword is present in said database population of said patent information,

the function of said calculation means to calculate required year number until patent registration after filing of the patent application for more than one technology relevant to said patent information to be searched, and

the function of said display means to display said similarity rate thus obtained in correlation with the period of time.

**26.** A technology evaluating program executed in an information processing means of a technology evaluating device comprising a similarity rate acquisition means for obtaining a similarity rate based on the proportion in which more than one technology relevant to patent information containing a prescribed keyword is present in a database population of said patent information every time a patent application is filed, a calculation means for calculating required year number until patent registration after filing of said patent application for more than one technology relevant to said patent information to be searched, a standard deviation calculation means for calculating one or both of standard deviation of said similarity rate and standard deviation of the required year number until patent registration, a display means for displaying said similarity rate thus obtained in correlation with a period of time, and information processing means for controlling said similarity rate acquisition means, said calculation means and said display means, wherein

said information processing means executes

the function of said similarity rate acquisition means to obtain said similarity rate based on the proportion in which more than one technology relevant to patent information containing said prescribed keyword is present in said database population of said patent information,

the function of said calculation means to calculate required year number until patent registration after filing of the patent application for more than one technology relevant to said patent information to be searched,

the function of said standard deviation calculation means to calculate said one or both of standard deviation of said similarity rate and standard deviation of the required year number until patent registration, and

the function of said display means to display said similarity rate thus obtained in correlation with the period of time.

**27.** A technology evaluating program executed in an information processing means of a technology evaluating device comprising a similarity rate acquisition means for obtaining a similarity rate based on the proportion in which more than one technology relevant to patent information containing a prescribed keyword is present in a database population of said patent information every time a patent application is filed, a calculation means for calculating required year number until patent registration after filing of said patent application for more than one technology relevant to said patent information to be searched, a standard deviation calculation means for calculating one or both of standard deviation of said similarity rate and standard deviation of the required year number until patent registration, a display means for displaying said similarity rate thus obtained in correlation with a period of time, a prediction means for predicting predictive standard deviation and predictive required year number until patent registration based on one or both of standard deviation of said similarity rate and standard deviation of said required year number until patent registration every time said patent application is filed by using primary or multidimensional extrapolating calculation, and information processing means for controlling said similarity rate acquisition means, said calculation means and said display means, wherein

said information processing means executes

the function of said similarity rate acquisition means to obtain said similarity rate based on the proportion in which more than one technology relevant to patent information containing said prescribed keyword is present in said database population of said patent information,

the function of said calculation means to calculate required year number until patent registration after filing of the patent application for more than one technology relevant to said patent information to be searched,

the function of said standard deviation calculation means to calculate said one or both of standard deviation of said similarity rate and standard deviation of the required year number until patent registration,

the function of said prediction means to predict predictive standard deviation and predictive required year number until patent registration based on one or both of standard deviation of said similarity rate and standard deviation of said required year number until patent registration every time said patent application is filed by using primary or multidimensional extrapolating calculation, and

the function of said display means to display one or both of said predictive standard deviation and said predictive required year number on said display means.

**28.** The technology evaluating program set forth in any of claims 25 to 27, wherein one or more of said similarity rate, required year number until patent registration and period in which a patent application is filed are identified on said display means with different colors with respect of one or more degrees of said similarity rate, required year number until patent registration and period in which said patent application is filed.

**29.** A technology evaluating method using a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, and an output means for outputting said similarity rate thus calculated to one or more of a display means, a record means and transmitting means, which method comprises:

collecting prescribed keywords by said keyword collection means,

counting the number of technical literatures containing said prescribed keywords by said count means by said total count means,
figuring out a total of technical literatures in said database population,
calculating the similarity rate based on the proportion of said technical literatures to the total number of technical literatures in said database population by said similarity rate calculation means, and
outputting said similarity rate thus calculated to one or more of said display means, record means and transmitting means by said output means.

**30.** A technology evaluating method using a technology evaluating device with a information processing means comprising a similarity rate acquisition means for obtaining a similarity rate, registration counting means for obtaining the number of registration of established patent information, and a display means for displaying said similarity rate thus obtained in correlation with the number of registration of said established patents, which method comprises:

obtaining a similarity rate based on the proportion in which more than one technology relevant to patent information containing a prescribed keyword is present in a database population of said patent information by said similarity rate acquisition means,
obtaining the number of registration of established patent information in information of patents subjected to investigation by said registration counting means, and
displaying said similarity rate thus obtained in correlation with the number of registration of said established patents on said display means.

**31.** A technology evaluating method using a technology evaluating device with a information processing means comprising a similarity rate acquisition means for obtaining a similarity rate, a calculation means for obtaining required year number for registration calculated from the number of years taken from filing until gaining registration of a patent application with respect to an objective patent information to be searched, a display means for displaying said similarity rate thus obtained in correlation with the number of registration of said established patents, and information processing means for controlling said similarity rate acquisition means, said calculation means and said display means, which method comprises:

obtaining said similarity rate based on the proportion in which more than one technology relevant to the patent information containing a prescribed keyword is present in said database population of said patent information by said similarity rate acquisition means,
obtaining required year number for registration calculated from the number of years taken from filing of a patent application until gaining registration for more than one technology relevant to said patent information to be searched by said calculation means, and
displaying said similarity rate thus obtained in correlation with a period of time thus calculated on said display means.

**32.** A technology evaluating method using a technology evaluating device with a information processing means comprising a similarity rate acquisition means for obtaining a similarity rate, a calculation means for obtaining required year number for registration calculated from the number of years taken from filing until gaining registration of a patent application with respect to an objective patent information to be searched, a standard deviation calculation means for calculating one or both of standard deviation of the similarity rate and standard deviation of the required year number until patent registration, and a display means for displaying one or both of standard deviation of the similarity rate and standard deviation of the required year number until patent registration, which method comprises:

obtaining said similarity rate based on the proportion in which more than one technology relevant to the patent information containing a prescribed keyword is present in said database population of said patent information by said similarity rate acquisition means,
obtaining required year number for registration calculated from the number of years taken from filing of the patent application until gaining registration for more than one technology relevant to said patent information to be searched by said calculation means,
calculating one or both of standard deviation of the similarity rate and standard deviation of the required year number until patent registration by said standard deviation calculation means, and
displaying said one or both of standard deviation of the similarity rate and standard deviation of the required year number until patent registration on said display means.

**33.** A technology evaluating method using a technology evaluating device with a information processing means comprising a similarity rate acquisition means for obtaining a similarity rate based on the proportion in which more than one technology relevant to patent information containing a prescribed keyword is present in a database population of said patent information every time a patent application is filed, a calculation means for calculating required year number until patent registration after filing of said patent application for more than one technology relevant to said patent information to be searched, and a display means for displaying said similarity rate thus obtained in correlation with a period of time, which method comprises:

obtaining said similarity rate based on the proportion in which more than one technology relevant to patent information containing said prescribed keyword is present in said database population of said patent information by said similarity rate acquisition means,
calculating required year number until patent registration after filing of the patent application for more than one technology relevant to said patent information to be searched by said calculation means, and
displaying said similarity rate thus obtained in correlation with the period of time on said display means.

**34.** A technology evaluating method using a technology evaluating device with a information processing means comprising a similarity rate acquisition means for obtaining a similarity rate based on the proportion in which more than one technology relevant to patent information containing a prescribed keyword is present in a database population of said patent information every time a patent application is filed, a calculation means for calculating required year number until patent registration after filing of said patent application for more than one technology relevant to said patent information to be searched, a standard deviation calculation means for calculating one or both of standard deviation of said similarity rate and standard deviation of the required year number until patent registration, and a display means for displaying said similarity rate thus obtained in correlation with a period of time, which method comprises:

obtaining said similarity rate based on the proportion in which more than one technology relevant to patent information containing said prescribed keyword is present in said database population of said patent information by said similarity rate acquisition means,
calculating required year number until patent registration alter filing of the patent application for more than one technology relevant to said patent information to be searched by said calculation means,
calculating said one or both of standard deviation of said similarity rate and standard deviation of the required year number until patent registration by said standard deviation calculation means, and
displaying said similarity rate thus obtained in correlation with the period of time on said display means.

**35.** A technology evaluating method using a technology evaluating device with a information processing means comprising a similarity rate acquisition means for obtaining a similarity rate based on the proportion in which more than one technology relevant to patent information containing a prescribed keyword is present in a database population of said patent information every time a patent application is filed, a calculation means for calculating required year number until patent registration after filing of said patent application for more than one technology relevant to said patent information to be searched, a standard deviation calculation means for calculating one or both of standard deviation of said similarity rate and standard deviation of the required year number until patent registration, a display means for displaying said similarity rate thus obtained in correlation with a period of time, and a prediction means for predicting predictive standard deviation and predictive required year number until patent registration based on one or both of standard deviation of said similarity rate and standard deviation of said required year number until patent registration every time said patent application is filed by using primary or multidimensional extrapolating calculation, which method comprises:

obtaining said similarity rate based on the proportion in which more than one technology relevant to patent information containing said prescribed keyword is present in said database population of said patent information by said similarity rate acquisition means,
calculating required year number until patent registration after filing of the patent application for more than one technology relevant to said patent information to be searched by said calculation means,
calculating said one or both of standard deviation of said similarity rate and standard deviation of the required year number until patent registration by said standard deviation calculation means,
predicting predictive standard deviation and predictive required year number until patent registration based on one or both of standard deviation of said similarity rate and standard deviation of said required year number until patent registration every time said patent application is filed by using primary or multidimensional extrapolating calculation by said prediction means, and
displaying one or both of said predictive standard deviation and said predictive required year number on said display means.

**36.** The technology evaluating method set forth in any of claims 33 to 35, wherein one or more of said similarity rate, required year number until patent registration and period in which a patent application is filed are identified on said display means with different colors with respect of one or more degrees of said similarity rate, required year number until patent registration and period in which said patent application is filed.

**37.** A technology evaluating device comprising:

a similarity rate acquisition means for obtaining the number of technical literatures containing prescribed keywords from a database population storing said technical literatures and similarity rate based on a proportion of said technical literatures containing said prescribed keywords thus figured up to the total number of technical literatures in said database population,
a standard deviation calculation means for calculating the average and standard deviation of said similarity rate on the basis of the number of technical literatures and said similarity rate,
a demarcation means for sorting out technical literatures into between a region for literatures having a low similarity rate and another region for literatures having a high similarity rate, and
an output means for outputting information representing the number of technical literatures and said similarity rate thus obtained in correlation with said regions to one or more of a display means, a record means and transmitting means.

**38.** A technology evaluating device comprising:

a similarity rate acquisition means for obtaining the number of technical literatures containing prescribed keywords from a database population storing said technical literatures and similarity rates based on a proportion of said technical literatures containing said prescribed keywords thus figured up to the total number of technical literatures in said database population,
a standard deviation calculation means for calculating the average and standard deviation of said similarity rates on the basis of the number of technical literatures and said similarity rates,
a demarcation means for sorting out technical literatures into between a region for literatures having a low similarity rate and another region for literatures having a high similarity rate, and
an output means for outputting information representing the number of technical literatures and said similarity rates thus obtained in accordance with the order of said similarity rates of said technical literatures residing in said regions to one or more of a display means, a record means and transmitting means.

**39.** A technology evaluating device comprising:

a similarity rate acquisition means for obtaining the number of technical literatures containing prescribed keywords from a database population storing said technical literatures and similarity rates based on a proportion of said technical literatures containing said prescribed keywords thus figured up to the total number of technical literatures in said database population,
a standard deviation calculation means for calculating the average and standard deviation of said similarity rates on the basis of the number of technical literatures and said similarity rates,
a demarcation means for sorting out technical literatures into between a region for literatures having a low similarity rate and another region for literatures having a high similarity rate each time technology disclosed a relevant technical literature is applied for patent protection or publicly disclosed, and
an output means for outputting information representing in graph form the number of technical literatures and said similarity rates thus calculated each time the technology disclosed said relevant technical literature is applied for patent protection or publicly disclosed in accordance with the order of said similarity rates of said technical literatures residing in said regions to one or more of a display means, a record means and transmitting means.

**40.** A technology evaluating device comprising:

a similarity rate acquisition means for obtaining the number of technical literatures containing prescribed keywords from a database population storing said technical literatures and similarity rates based on a proportion of said technical literatures containing said prescribed keywords thus figured up to the total number of technical literatures in said database population,

a standard deviation calculation means for calculating the average and standard deviation of said similarity rates on the basis of the number of technical literatures and said similarity rates,
a demarcation means for sorting out technical literatures into between a region for literatures having a low similarity rate and another region for literatures having a high similarity rate, and
an output means for outputting information representing in graph form said proportion of the number of technical literatures residing in said regions to one or more of a display means, a record means and transmitting means.

**41.** A technology evaluating device comprising:

a similarity rate acquisition means for obtaining the number of technical literatures containing prescribed keywords from a database population storing said technical literatures and a similarity rate based on a proportion of said technical literatures containing said prescribed keywords thus figured up to the total number of technical literatures in said database population,
a standard deviation calculation means for calculating the average and standard deviation of said similarity rate on the basis of the number of technical literatures and said similarity rate,
a standardization means for defining a standard similarity rate deviation by dividing said similarity rate thus obtained by the average of said similarity rate and said standard deviation,
a demarcation means for sorting out said similarity rate deviation thus standardized into multiple regions based on said standard deviation of said similarity rate, and
an output means for outputting notational information representing symbolically existence and number of said technical literatures residing in a coordinate area defined by a coordinate axis denoting a similarity rate deviation region and another coordinate axis denoting the time of patent application or public disclosure with respect to said relevant technical literatures to one or more of a display means, a record means and transmitting means.

**42.** A technology evaluating device comprising:

a similarity rate acquisition means for obtaining the number of technical literatures containing prescribed keywords from a database population storing said technical literatures and a similarity rate based on a proportion of said technical literatures containing said prescribed keywords thus figured up to the total number of technical literatures in said database population,
a standard deviation calculation means for calculating the average and standard deviation of said similarity rate on the basis of the number of technical literatures and said similarity rate,
a standardization means for defining a standard similarity rate deviation by dividing said similarity rate thus obtained by said average of said similarity rate and said standard deviation, and
an output means for outputting notational information representing symbolically existence of said technical literatures residing in a coordinate area defined by a coordinate axis denoting a similarity rate deviation region and another coordinate axis denoting the time of patent application or public disclosure with respect to said relevant technical literatures thus obtained to one or more of a display means, a record means and transmitting means.

**43.** A technology evaluating program executed in an information processing means of a technology evaluating device comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures, an output means for outputting information representing the number of technical literatures and said similarity rate thus obtained in correlation with said regions, and information processing means for controlling said similarity rate acquisition means, standard deviation calculation means, demarcation means and output means, wherein

said information processing means executes

the function of said similarity rate acquisition means to obtain the number of technical literatures containing prescribed keywords from a database population storing said technical literatures and similarity rates based on a proportion of said technical literatures containing said prescribed keywords thus figured up to the total number of technical literatures in said database population,

the function of said standard deviation calculation means to calculate the average and standard deviation of said similarity rates on the basis of the number of technical literatures and said similarity rates,

the function of said demarcation means to sort out technical literatures into between a region for literatures having a low similarity rate and another region for literatures having a high similarity rate, and

the function of said output means to output information representing the number of technical literatures and said similarity rates thus obtained in correlation with said regions to one or more of a display means, a record means and transmitting means.

**44.** A technology evaluating program executed in an information processing means of a technology evaluating device comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures, an output means for outputting information representing the number of technical literatures and said similarity rate thus obtained in accordance with the order of said similarity rates of said technical literatures, and information processing means for controlling said similarity rate acquisition means, standard deviation calculation means, demarcation means and output means, wherein

said information processing means executes

the function of said similarity rate acquisition means to obtain the number of technical literatures containing prescribed keywords from a database population storing said technical literatures and similarity rates based on a proportion of said technical literatures containing said prescribed keywords thus figured up to the total number of technical literatures in said database population,

the function of said standard deviation calculation means to calculate the average and standard deviation of said similarity rates on the basis of the number of technical literatures and said similarity rates,

the function of said demarcation means to sort out technical literatures into between a region for literatures having a low similarity rate and another region for literatures having a high similarity rate, and

the function of said output means to output information representing the number of technical literatures and said similarity rates thus obtained in accordance with the order of said similarity rates of said technical literatures residing in said regions to one or more of a display means, a record means and transmitting means.

**45.** A technology evaluating program executed in an information processing means of a technology evaluating device comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures,
an output means for outputting information representing in graph form the number of technical literatures, and information processing means for controlling said similarity rate acquisition means, standard deviation calculation means, demarcation means and output means, wherein

said information processing means executes

the function of said similarity rate acquisition means to obtain the number of technical literatures containing prescribed keywords from a database population storing said technical literatures and similarity rates based on a proportion of said technical literatures containing said prescribed keywords thus figured up to the total number of technical literatures in said database population,

the function of said standard deviation calculation means to calculate the average and standard deviation of said similarity rates on the basis of the number of technical literatures and said similarity rates,

the function of said demarcation means to sort out technical literatures into between a region for literatures having a low similarity rate and another region for literatures having a high similarity rate, and

the function of said output means to output information representing in graph form the number of technical literatures and the similarity rates thus calculated each time the technology disclosed the relevant technical literature is applied for patent protection or publicly disclosed in accordance with the order of the similarity rates of the technical literatures residing in the aforesaid regions to one or more of a display means, a record means and transmitting means.

**46.** A technology evaluating program executed in an information processing means of a technology evaluating device comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures,
an output means for outputting information representing in graph form the proportion of the number of technical literatures, and information processing means for controlling said similarity rate acquisition means, standard deviation calculation means, demarcation means and output means, wherein

said information processing means executes

the function of said similarity rate acquisition means to obtain the number of technical literatures containing prescribed keywords from a database population storing said technical literatures and similarity rates based on a proportion of said technical literatures containing said prescribed keywords thus figured up to the total number of technical literatures in said database population,

the function of said standard deviation calculation means to calculate the average and standard deviation of said similarity rates on the basis of the number of technical literatures and said similarity rates,

the function of said demarcation means to sort out technical literatures into between a region for literatures having a low similarity rate and another region for literatures having a high similarity rate, and

the function of said output means to output information representing in graph form the proportion of the number of technical literatures and the similarity rates thus calculated each time the technology disclosed the relevant technical literature is applied for patent protection or publicly disclosed in accordance with the order of the similarity rates of the technical literatures residing in the aforesaid regions to one or more of a display means, a record means and transmitting means.

**47.** A technology evaluating program executed in an information processing means of a technology evaluating device comprising a similarity rate acquisition means for obtaining a similarity rate, a standard deviation calculation means for calculating the average and standard deviation of said similarity rate, a standardization means for defining a standard similarity rate deviation, a demarcation means for sorting out technical literatures in accordance with the similarity rate deviation of said technical literatures, an output means for outputting information representing symbolically existence and number of said technical literatures and said similarity rate thus obtained in correlation with said regions, and information processing means for controlling said similarity rate acquisition means, standard deviation calculation means, standardization means demarcation means, and output means, wherein

said information processing means executes

the function of said similarity rate acquisition means to obtain the number of technical literatures containing prescribed keywords from said database population storing said technical literatures and similarity rates based on a proportion of said technical literatures containing said prescribed keywords thus figured up to the total number of technical literatures in said database population,

the function of said standard deviation calculation means to calculate the average and standard deviation of said similarity rates on the basis of the number of technical literatures and said similarity rates,

the function of said standardization means to define a standard similarity rate deviation by dividing said similarity rate thus obtained by the average of said similarity rate and said standard deviation,

the function of said demarcation means to sort out said similarity rate deviation thus standardized into multiple regions based on said standard deviation of said similarity rate, and

the function of said output means to output notational information representing symbolically existence and number of said technical literatures residing in a coordinate area defined by a coordinate axis denoting said similarity rate deviation region and another coordinate axis denoting the time of patent application or public disclosure with respect to said relevant technical literatures to one or more of a display means, a record means and transmitting means.

**48.** A technology evaluating program executed in an information processing means of a technology evaluating device comprising a similarity rate acquisition means for obtaining a similarity rate, a standard deviation calculation means for calculating the average and standard deviation of said similarity rate, a standardization means for defining a standard similarity rate deviation, a demarcation means for sorting out technical literatures in accordance with the similarity rate deviation of said technical literatures, an output means for outputting information representing symbolically existence of said similarity rate thus obtained in correlation with said regions, and information processing means for controlling said similarity rate acquisition means, standard deviation calculation means, standardization means, demarcation means and output means, wherein

said information processing means executes

the function of said similarity rate acquisition means to obtain the number of technical literatures containing prescribed keywords from said database population storing said technical literatures and similarity rates based on a proportion of said technical literatures containing said prescribed keywords thus figured up to the total number of technical literatures in said database population,

the function of said standard deviation calculation means to calculate the average and standard deviation of said similarity rates on the basis of the number of technical literatures and said similarity rates,

the function of said standardization means to define a standard similarity rate deviation by dividing said similarity rate thus obtained by the average of said similarity rate and said standard deviation,

the function of said demarcation means to sort out said similarity rate deviation thus standardized into multiple regions based on said standard deviation of said similarity rate, and

the function of said output means to output notational information representing symbolically existence of said technical literatures residing in a coordinate area defined by a coordinate axis denoting said similarity rate deviation and another coordinate axis denoting the time of patent application or public disclosure with respect to said relevant technical literatures to one or more of a display means, a record means and transmitting means.

**49.** A technology evaluating method using a technology evaluating device with a information processing means comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures, and a output means for outputting information representing the number of technical literatures and said similarity rates thus obtained in correlation with said regions, which method comprises:

obtaining the number of technical literatures containing prescribed keywords from a database population storing said technical literatures and similarity rates based on a proportion of said technical literatures containing said prescribed keywords thus figured up to the total number of technical literatures in said database population by said similarity rate acquisition means,
calculating the average and standard deviation of said similarity rates on the basis of the number of technical literatures and said similarity rates by said standard deviation calculation means, and
outputting information representing the number of technical literatures and said similarity rates thus obtained in correlation with said regions to one or more of a display means, a record means and transmitting means by said output means.

**50.** A technology evaluating method using a technology evaluating device with a information processing means comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures, and an output means for outputting information representing the number of technical literatures and said similarity rates thus obtained in accordance with the order of said similarity rates of said technical literatures residing in said regions, which method comprises:

obtaining the number of technical literatures containing prescribed keywords from a database population storing said technical literatures and similarity rates based on a proportion of said technical literatures containing said prescribed keywords thus figured up to the total number of technical literatures in said database population by said similarity rate acquisition means,
calculating the average and standard deviation of said similarity rates on the basis of the number of technical literatures and said similarity rates by said standard deviation calculation means, and
outputting information representing the number of technical literatures and said similarity rates thus obtained in accordance with the order of said similarity rates of said technical literatures residing in said regions to one or more of a display means, a record means and transmitting means by said output means.

**51.** A technology evaluating method using a technology evaluating device with a information processing means comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures, and an output means for outputting information representing in graph form the number of technical literatures, which method comprises:

obtaining the number of technical literatures containing prescribed keywords from a database population storing said technical literatures and similarity rates based on a proportion of said technical literatures containing said prescribed keywords thus figured up to the total number of technical literatures in said database population by said similarity rate acquisition means,
calculating the average and standard deviation of said similarity rates on the basis of the number of technical literatures and said similarity rates by said standard deviation calculation means, and
outputting information representing in graph form the number of technical literatures and the similarity rates thus calculated each time the technology disclosed the relevant technical literature is applied for patent protection or publicly disclosed in accordance with the order of the similarity rates of the technical literatures residing in the aforesaid regions to one or more of a display means, a record means and transmitting means by said output means.

**52.** A technology evaluating method using a technology evaluating device with a information processing means comprising a similarity rate acquisition means for obtaining a similarity rate, a standard deviation calculation means for calculating the average and standard deviation of said similarity rate, a demarcation means for sorting out technical literatures in accordance with the similarity rate of said technical literatures, and an output means for outputting information representing in graph form said proportion of the number of technical literatures residing in said regions, which method comprises:

obtaining the number of technical literatures containing prescribed keywords from a database population storing said technical literatures and similarity rates based on a proportion of said technical literatures containing said prescribed keywords thus figured up to the total number of technical literatures in said database population by said similarity rate acquisition means,
calculating the average and standard deviation of said similarity rates on the basis of the number of technical literatures and said similarity rates by said standard deviation calculation means, and
outputting information representing in graph form said proportion of the number of technical literatures residing in said regions to one or more of a display means, a record means and transmitting means by said output means.

**53.** A technology evaluating method using a technology evaluating device with a information processing means comprising a similarity rate acquisition means for obtaining a similarity rate, a standard deviation calculation means for calculating the average and standard deviation of said similarity rate, a standardization means for defining a standard similarity rate deviation, a demarcation means for sorting out technical literatures in accordance with the similarity rate deviation of said technical literatures, and an output means for outputting information representing symbolically existence and number of said technical literatures and said similarity rate thus obtained in correlation with said regions, which method comprises:

the function of said similarity rate acquisition means to obtain the number of technical literatures containing prescribed keywords from said database population storing said technical literatures and similarity rates based on a proportion of said technical literatures containing said prescribed keywords thus figured up to the total number of technical literatures in said database population,
calculating the average and standard deviation of said similarity rates on the basis of the number of technical literatures and said similarity rates by said standard deviation calculation means,
defining a standard similarity rate deviation by dividing said similarity rate thus obtained by the average of said similarity rate and said standard deviation by said standardization means,
sorting out said similarity rate deviation thus standardized into multiple regions based on said standard deviation of said similarity rate by said demarcation means, and
outputting notational information representing symbolically existence and number of said technical literatures residing in a coordinate area defined by a coordinate axis denoting said similarity rate deviation region and another coordinate axis denoting the time of patent application or public disclosure with respect to said relevant technical literatures to one or more of a display means, a record means and transmitting means by said output means.

**54.** A technology evaluating method using a technology evaluating device with a information processing means comprising a similarity rate acquisition means for obtaining a similarity rate, a standard deviation calculation means for calculating the average and standard deviation of said similarity rate, a standardization means for defining a standard similarity rate deviation, a demarcation means for sorting out technical literatures in accordance with the similarity rate deviation of said technical literatures, an output means for outputting information representing symbolically existence of said similarity rate thus obtained in correlation with said regions, which method comprises:

obtaining the number of technical literatures containing prescribed keywords from said database population storing said technical literatures and similarity rates based on a proportion of said technical literatures containing said prescribed keywords thus figured up to the total number of technical literatures in said database population by said similarity rate acquisition means,
calculating the average and standard deviation of said similarity rates on the basis of the number of technical literatures and said similarity rates by said standard deviation calculation means,
defining a standard similarity rate deviation by dividing said similarity rate thus obtained by the average of said similarity rate and said standard deviation by said standardization means,
sorting out said similarity rate deviation thus standardized into multiple regions based on said standard deviation of said similarity rate by said demarcation means, and
outputting notational information representing symbolically existence of said technical literatures residing in a coordinate area defined by a coordinate axis denoting said similarity rate deviation and another coordinate axis denoting the time of patent application or public disclosure with respect to said relevant technical literatures to one or more of a display means, a record means and transmitting means by said output means.

## Amended claims under Art. 19.1 PCT

**1.** Amended) A technology evaluating device comprising:

a keyword collection means for leaving spaces between words in the description of a technical literature to be searched and collecting prescribed keywords from the technical literature,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population, and
an output means for outputting said similarity rate thus calculated to one or more of a display means, a record means and transmitting means.

**15.** (Amended) A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of leaving spaces between words in the description of a technical literature to be searched and collecting prescribed keywords from the technical literature,
said count means having a function of counting the number of technical literatures containing said prescribed keywords from said database population storing said technical literatures,
said total count means having a function of figuring out said total of technical literatures in said database population,
said similarity rate calculation means having a function of calculating said similarity rate based on the proportion of the technical literatures containing said prescribed keywords thus figured up to the total number of technical literatures in said database population, and
said output means having a function of outputting said similarity rate thus calculated to one or more of said display means, said record means and said transmitting means.

**29.** (Amended) A technology evaluating method using a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, and an output means for outputting said similarity rate thus calculated to one or more of a display means, a record means and transmitting means, which method comprises:

collecting prescribed keywords by said keyword collection means,
leaving spaces between words in the description of a technical literature to be searched to collect prescribed keywords from the technical literature,
figuring out a total of technical literatures in said database population,
calculating the similarity rate based on the proportion of said technical literatures to the total number of technical literatures in said database population by said similarity rate calculation means, and
outputting said similarity rate thus calculated to one or more of said display means, record means and transmitting means by said output means.

**55.** (Amended) A technology evaluating device comprising:

a keyword collection means for extracting a prescribed keyword by clipping out word strings from the description of a technical literature to be researched and deleting postposition, last portion of a verb, conjunction and/or exclamation in the clipped word strings,
a count means for counting the number of technical literatures containing said prescribed keyword from a database population storing said technical literatures,
a total count means for figuring out a total of technical literatures in said database population,
a similarity rate calculation means for calculating a similarity rate based on the proportion of said technical literatures containing said prescribed keyword thus figured up to the total number of technical literatures in said database population, and
an output means for outputting said similarity rate thus calculated to one or more of a display means, a record means and transmitting means.

**56.** A technology evaluating program executed in a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, an output means for outputting said similarity rate thus calculated to one or more of a display means, a record means and transmitting means, and information processing means for controlling said similarity rate acquisition means, said registration counting means and said display means, wherein
said information processing means includes:

said keyword collection means having a function of extracting the prescribed keyword by clipping out word strings from the description of a technical literature to be researched and deleting postposition, last portion of a verb, conjunction and/or exclamation in the clipped word strings,
said count means having a function of counting the number of technical literatures containing said prescribed keyword from said database population storing said technical literatures,
said total count means having a function of figuring out said total of technical literatures in said database population,
said similarity rate calculation means having a function of calculating said similarity rate based on the proportion of the technical literatures containing said prescribed keyword thus figured up to the total number of technical literatures in said database population, and
said output means having a function of outputting said similarity rate thus calculated to one or more of said display means, said record means and said transmitting means.

**57.** A technology evaluating method using a technology evaluating device with a information processing means comprising a keyword collection means for collecting prescribed keywords, a count means for counting the number of technical literatures containing said prescribed keywords, a total count means for figuring out a total of technical literatures in said database population, a similarity rate calculation means for calculating a similarity rate based on the proportion of said technical literatures to the total number of technical literatures in said database population, and an output means for outputting said similarity rate thus calculated to one or more of a display means, a record means and transmitting means, which method comprises:

extracting the prescribed keyword by clipping out word strings from the description of a technical literature to be researched and deleting postposition, last portion of a verb, conjunction and/or exclamation in the clipped word strings by said keyword collection means,
counting the number of technical literatures containing said prescribed keyword by said count means by said total count means,
figuring out a total of technical literatures in said database population,
calculating the similarity rate based on the proportion of said technical literatures to the total number of technical literatures in said database population by said similarity rate calculation means, and
outputting said similarity rate thus calculated to one or more of said display means, record means and transmitting means by said output means.

**Statement under Article 19.1 PCT**

**1.** The Amendment as filed is made to further define the subject matter of the invention by rewriting the structure or operation of the "keyword collection means" in claims 1, 15 and 29 so as to have a function of "leaving spaces between words in the description of a technical literature to be searched and collecting prescribed keywords from the technical literature". The amendment of these claims may be found in lines 16-17, page 35 of the specification on file (corresponding to lines 19-20, page 40 of the English-language translation of the Japanese specification).

The Amendment as filed is made to further define the subject matter of the invention by adding claims 55, 56 and 57, in which the "keyword collection means" of the invention is defined by a function of "extracting the prescribed keyword by clipping out word strings from the description of a technical literature to be researched and deleting postposition, last portion of a verb, conjunction and/or exclamation in the clipped word strings". The amendment of these claims may be found in lines 18-21, page 35 of the specification on file (corresponding to lines 21-24, page 40 of the English-language translation of the Japanese specification).

**2.** The invention set forth in newly amended claims 1, 15 and 29 has a beneficial effect on extraction of the significant keywords, namely, makes it possible to automatically extract the required keywords in an objective fashion without arbitrarily selecting the words. The population mentioned in claims 1, 15, 29 is not exclusively limited only to a search using FI(File Index) as adopted in Japanese Patent Office. Thus, the invention enables designation of a specific literature of a company, e.g. a consumer-electronics maker "A", as the population of the technical literatures or calculation of the similarity rate of the technical literatures of the company together with those of other company, e.g. a consumer-electronics maker "B", (literatures to be researched). The effects brought about by this invention will be seen particularly from FIG 26 to FIG 29 of the accompanying drawings of the specification on file.

FIG. 1

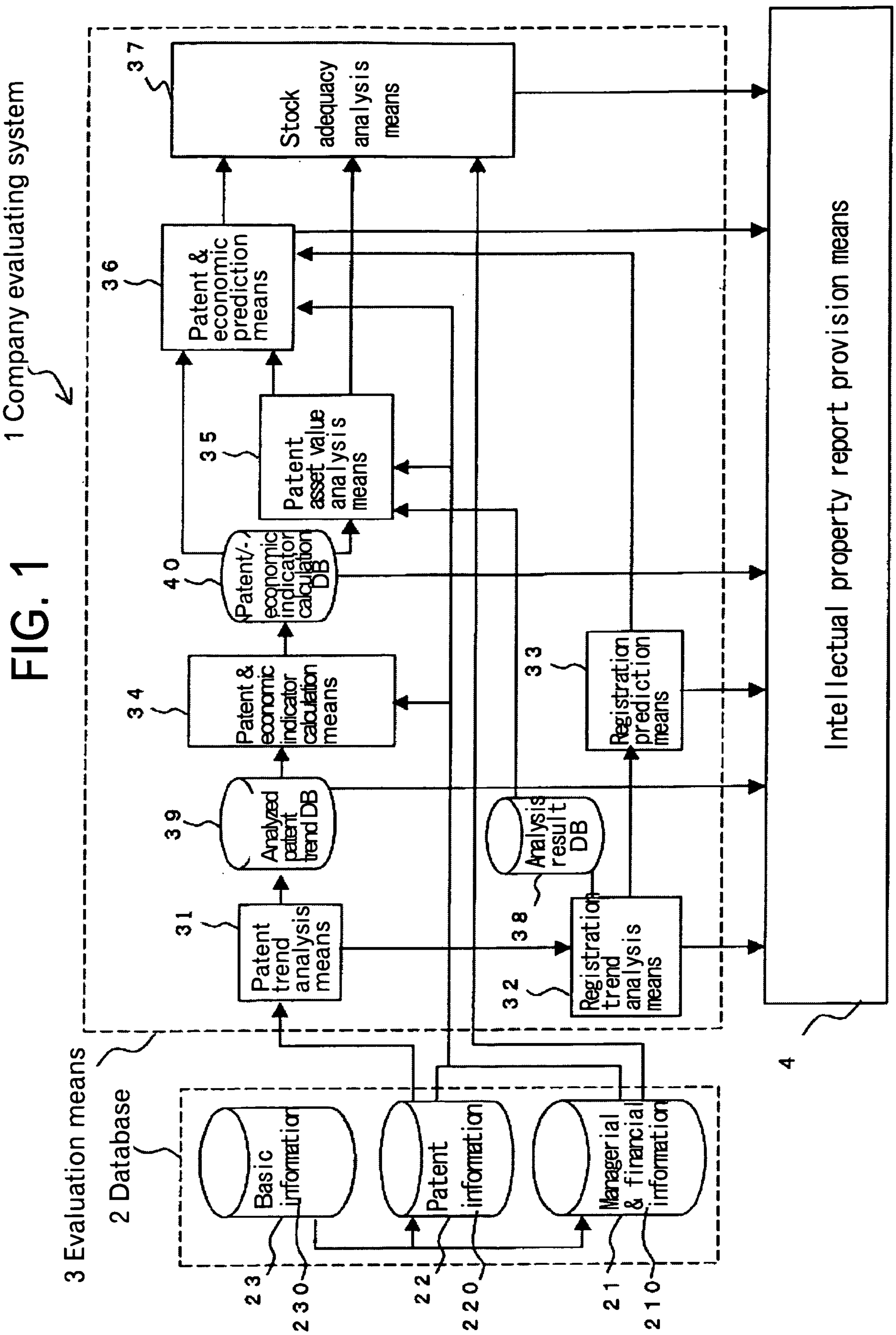
1 Company evaluating system
3 Evaluation means
2 Database
Basic information
Patent information
Managerial & financial information
Patent trend analysis means
Analyzed patent trend DB
Patent & economic indicator calculation means
Patent/-economic indicator calculation DB
Patent asset value analysis means
Patent & economic prediction means
Stock adequacy analysis means
Registration trend analysis means
Analysis result DB
Registration prediction means
Intellectual property report provision means
1
2
3
4
21
22
23
31
32
33
34
35
36
37
38
39
40
210
220
230

FIG. 2

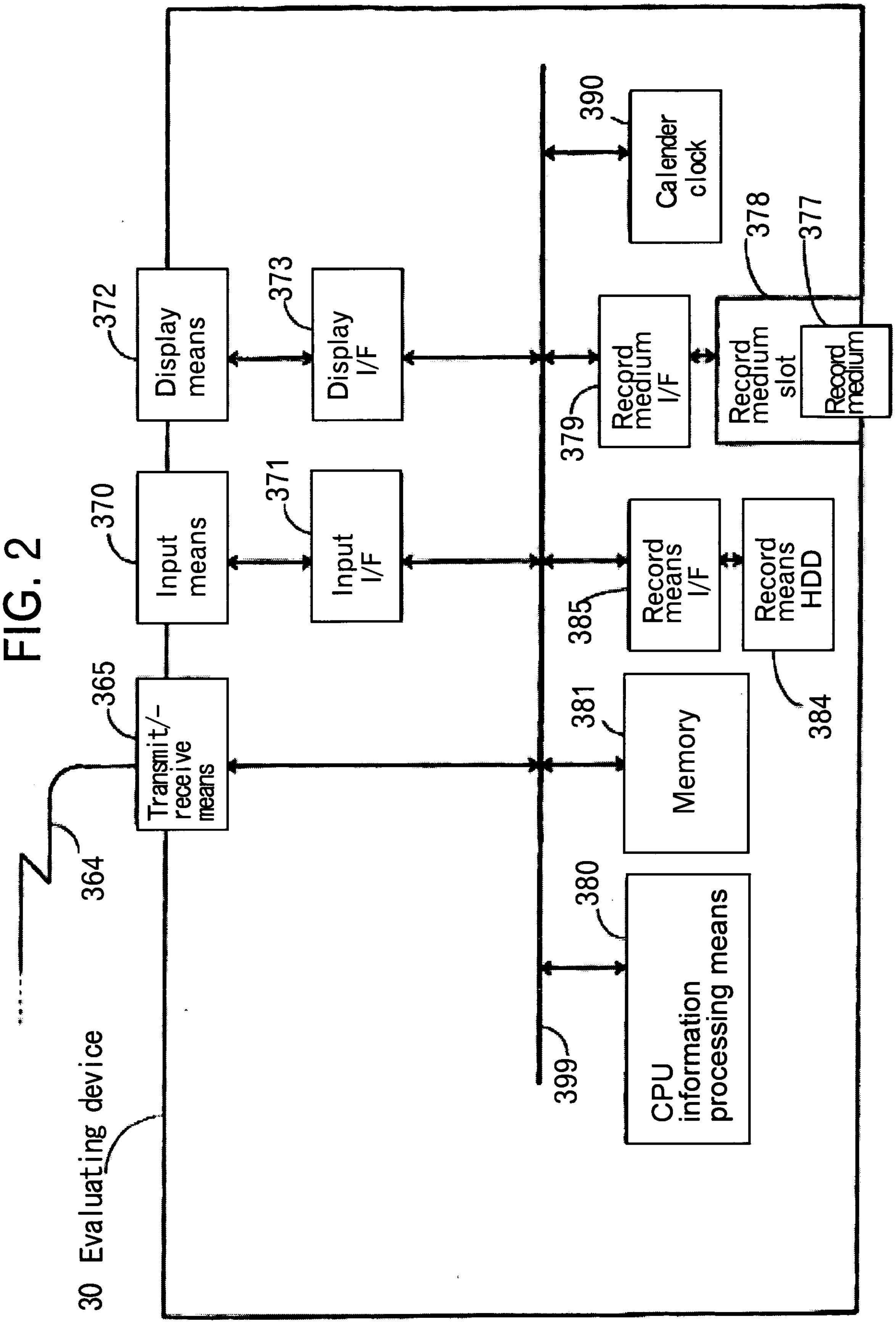
30 Evaluating device
364
365
Transmit/-
receive
means
370
Input
means
371
Input
I/F
372
Display
means
373
Display
I/F
399
380
CPU
information
processing means
381
Memory
385
Record
means
I/F
384
Record
means
HDD
379
Record
medium
I/F
378
377
Record
medium
slot
Record
medium
390
Calender
clock

FIG. 3

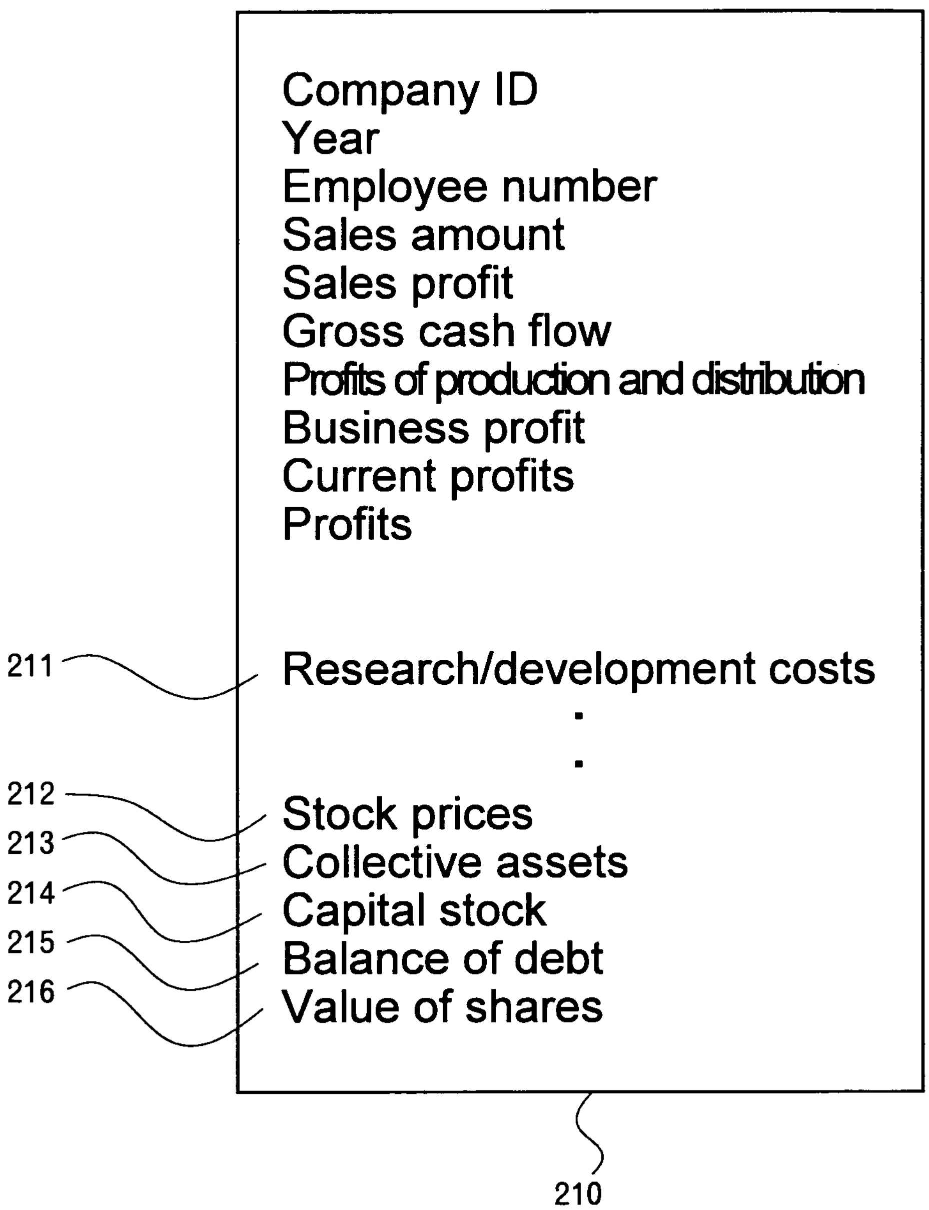
Company ID
Year
Employee number
Sales amount
Sales profit
Gross cash flow
Profits of production and distribution
Business profit
Current profits
Profits
211
Research/development costs
212
Stock prices
213
Collective assets
214
Capital stock
215
Balance of debt
216
Value of shares
210

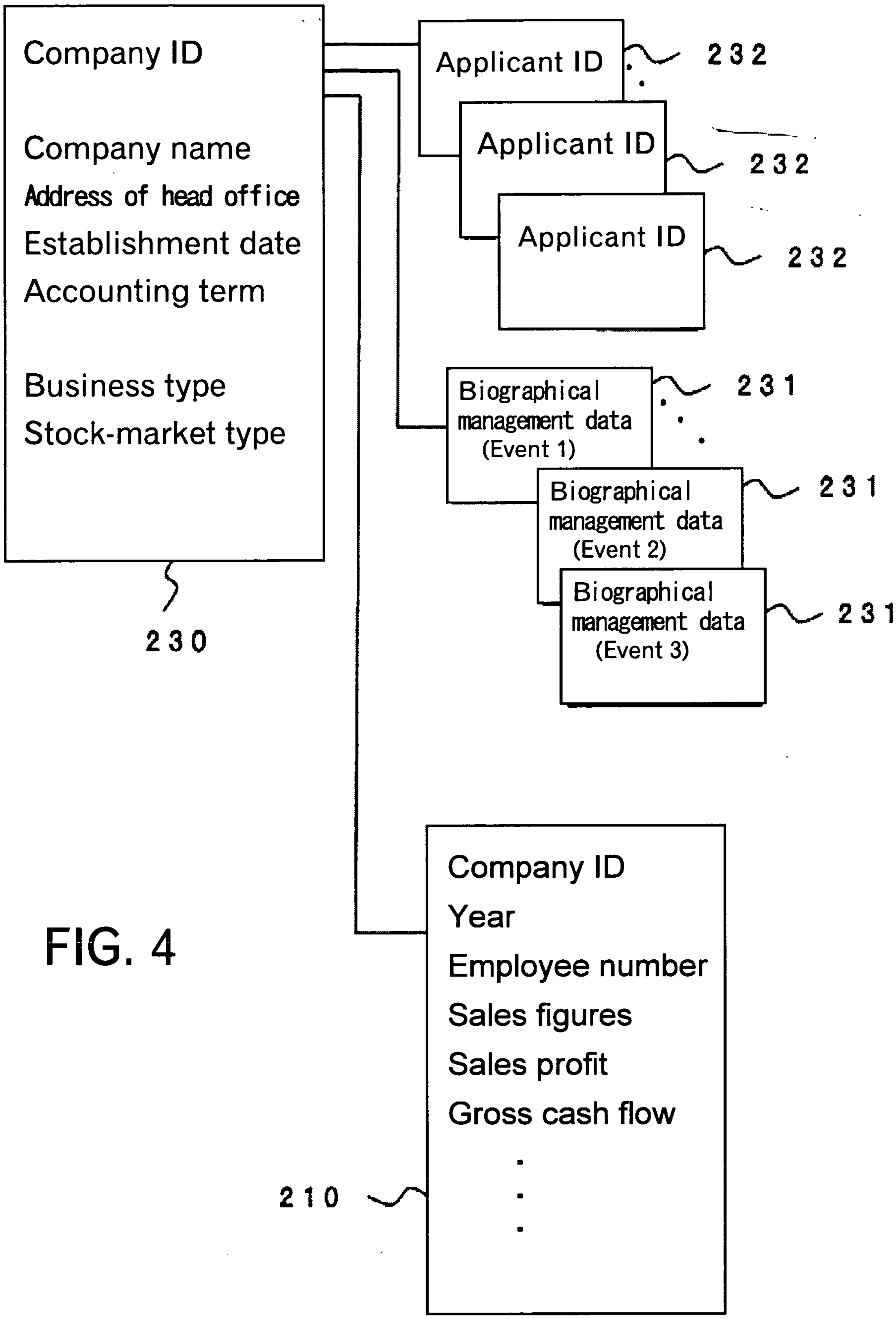
Company ID
Company name
Address of head office
Establishment date
Accounting term
Business type
Stock-market type
230
Applicant ID
232
Applicant ID
232
Applicant ID
232
Biographical management data (Event 1)
231
Biographical management data (Event 2)
231
Biographical management data (Event 3)
231
Company ID
Year
Employee number
Sales figures
Sales profit
Gross cash flow
210

FIG. 4

FIG. 5

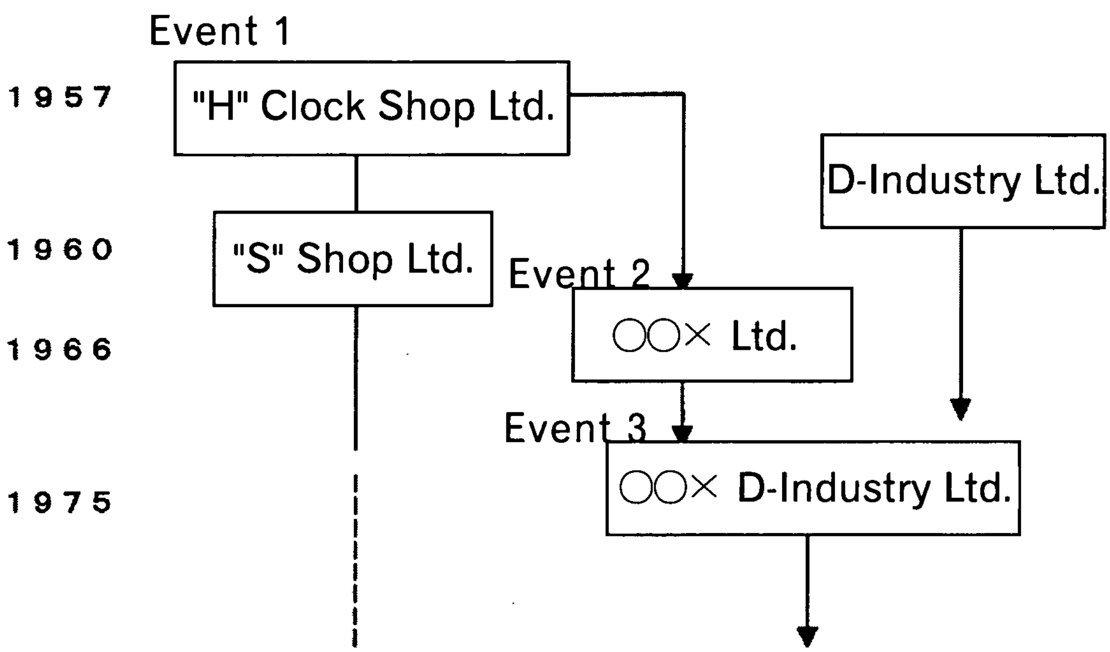
Event 1
1957
"H" Clock Shop Ltd.
D-Industry Ltd.
1960
"S" Shop Ltd.
Event 2
1966
○○× Ltd.
Event 3
1975
○○× D-Industry Ltd.

FIG. 6

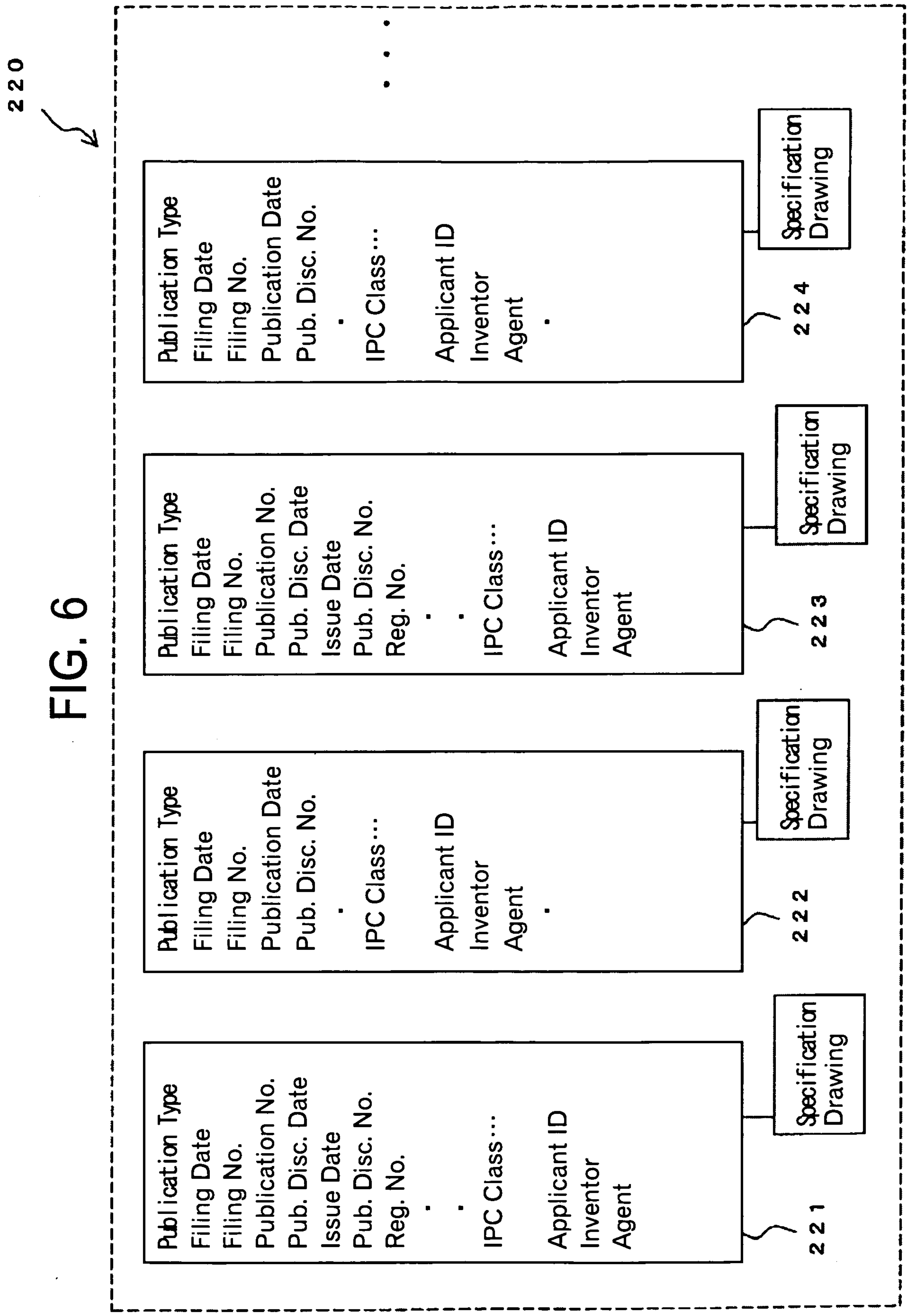
220
Publication Type
Filing Date
Filing No.
Publication No.
Pub. Disc. Date
Issue Date
Pub. Disc. No.
Reg. No.
IPC Class ···
Applicant ID
Inventor
Agent
Specification
Drawing
221
Publication Type
Filing Date
Filing No.
Publication Date
Pub. Disc. No.
IPC Class ···
Applicant ID
Inventor
Agent
Specification
Drawing
222
Publication Type
Filing Date
Filing No.
Publication No.
Pub. Disc. Date
Issue Date
Pub. Disc. No.
Reg. No.
IPC Class ···
Applicant ID
Inventor
Agent
Specification
Drawing
223
Publication Type
Filing Date
Filing No.
Publication Date
Pub. Disc. No.
IPC Class ···
Applicant ID
Inventor
Agent
Specification
Drawing
224

FIG. 7

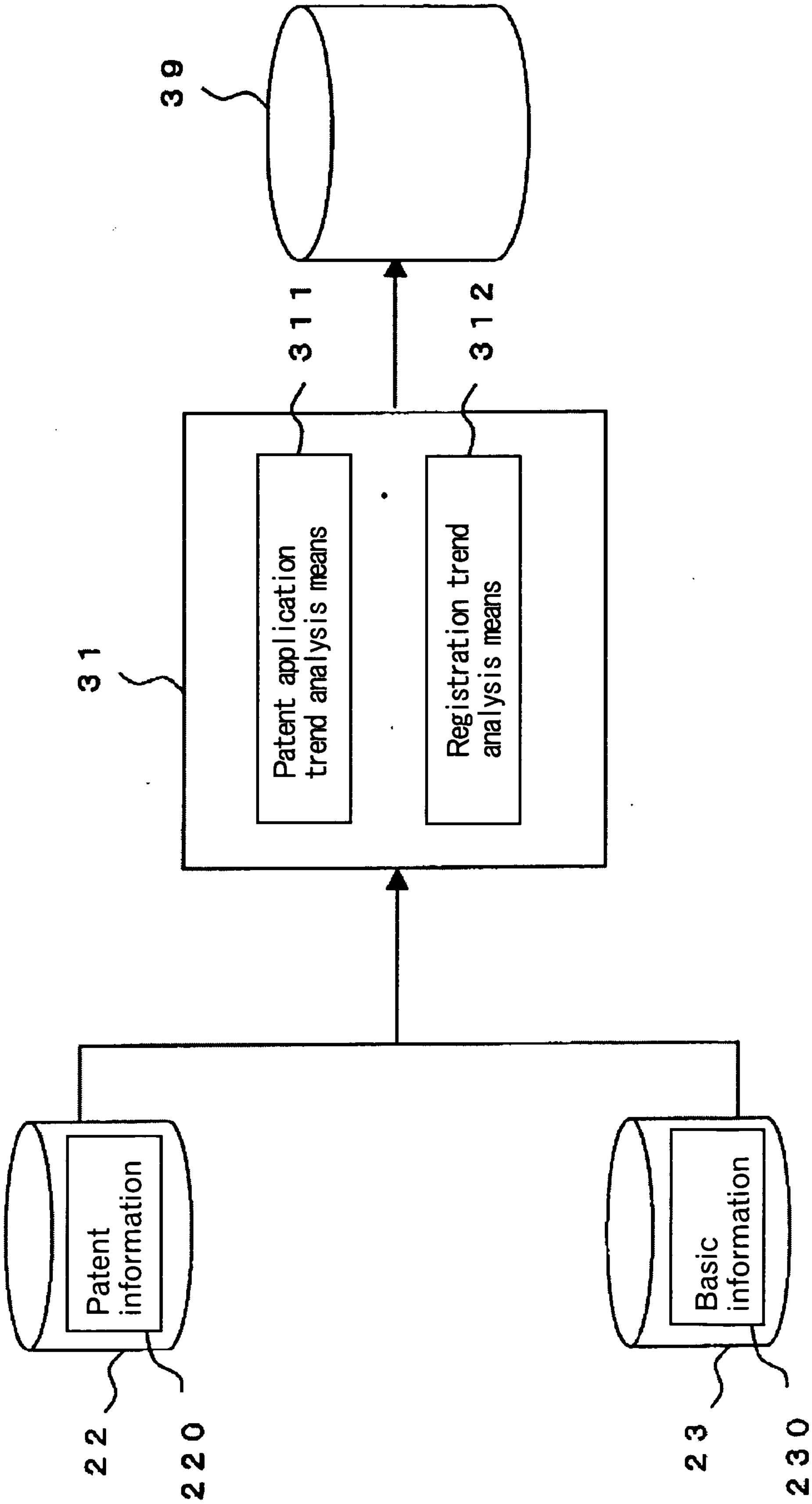
39
311
312
31
Patent application trend analysis means
Registration trend analysis means
Patent information
22
220
Basic information
23
230

FIG. 8

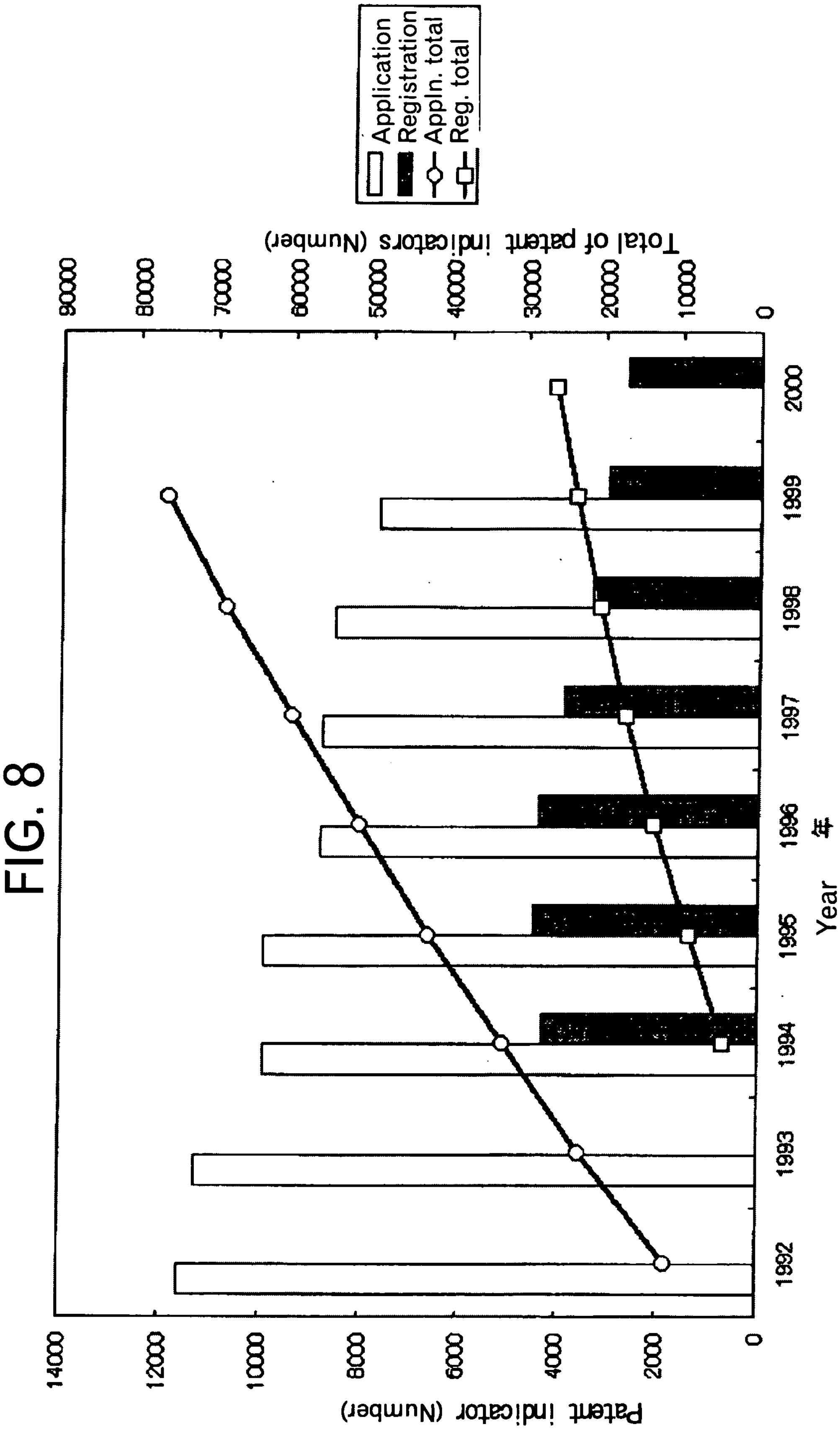
Application
Registration
Appln. total
Reg. total
Total of patent indicators (Number)
Patent indicator (Number)
Year 年
1992
1993
1994
1995
1996
1997
1998
1999
2000

FIG. 9

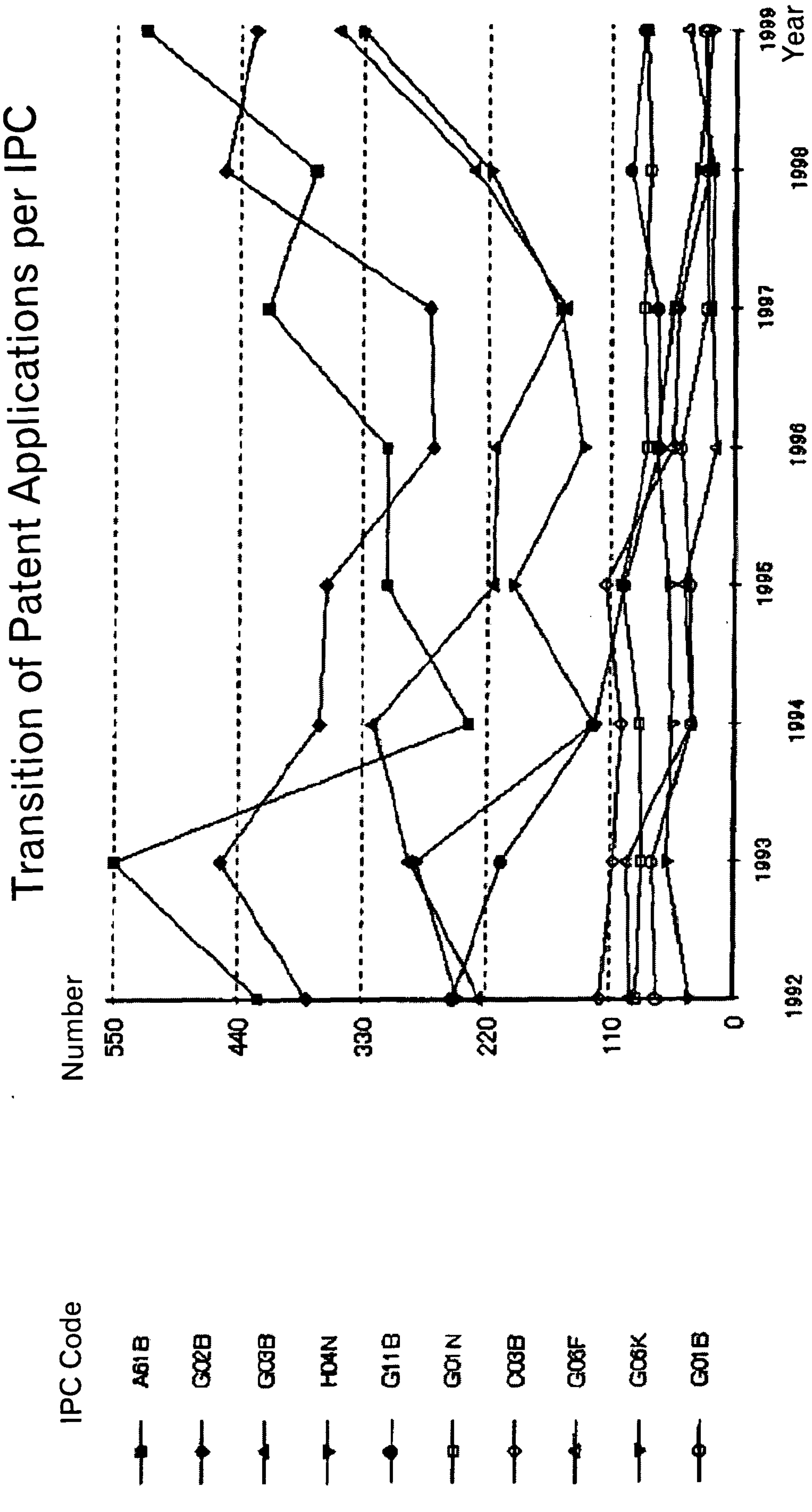
Transition of Patent Applications per IPC
Number
550
440
330
220
110
0
1992
1993
1994
1995
1996
1997
1998
1999
Year
IPC Code
A61B
G02B
G03B
H04N
G11B
G01N
C03B
G06F
G06K
G01B

FIG. 10

| Rank | Stock index | Stock ticker number | Corporate name | Number of applications | Annual average of applications |
|---|---|---|---|---|---|
| 1 | N0001208 | 6752 | M Electric Co. | 87,455 | 10,932 |
| 2 | N0001162 | 6502 | IROHA Electric | 79,337 | 9,917 |
| 3 | N0001161 | 6501 | ABC Manufacturing Co. | 76,453 | 9,557 |
| 4 | N0001458 | 7751 | CBC | 70,465 | 8,808 |
| 5 | N0001190 | 6701 | N Electric Co. | 62,293 | 7,787 |
| ⋮ | ⋮ | ⋮ | ⋮ | ⋮ | ⋮ |

FIG. 11 Transition of registration rates

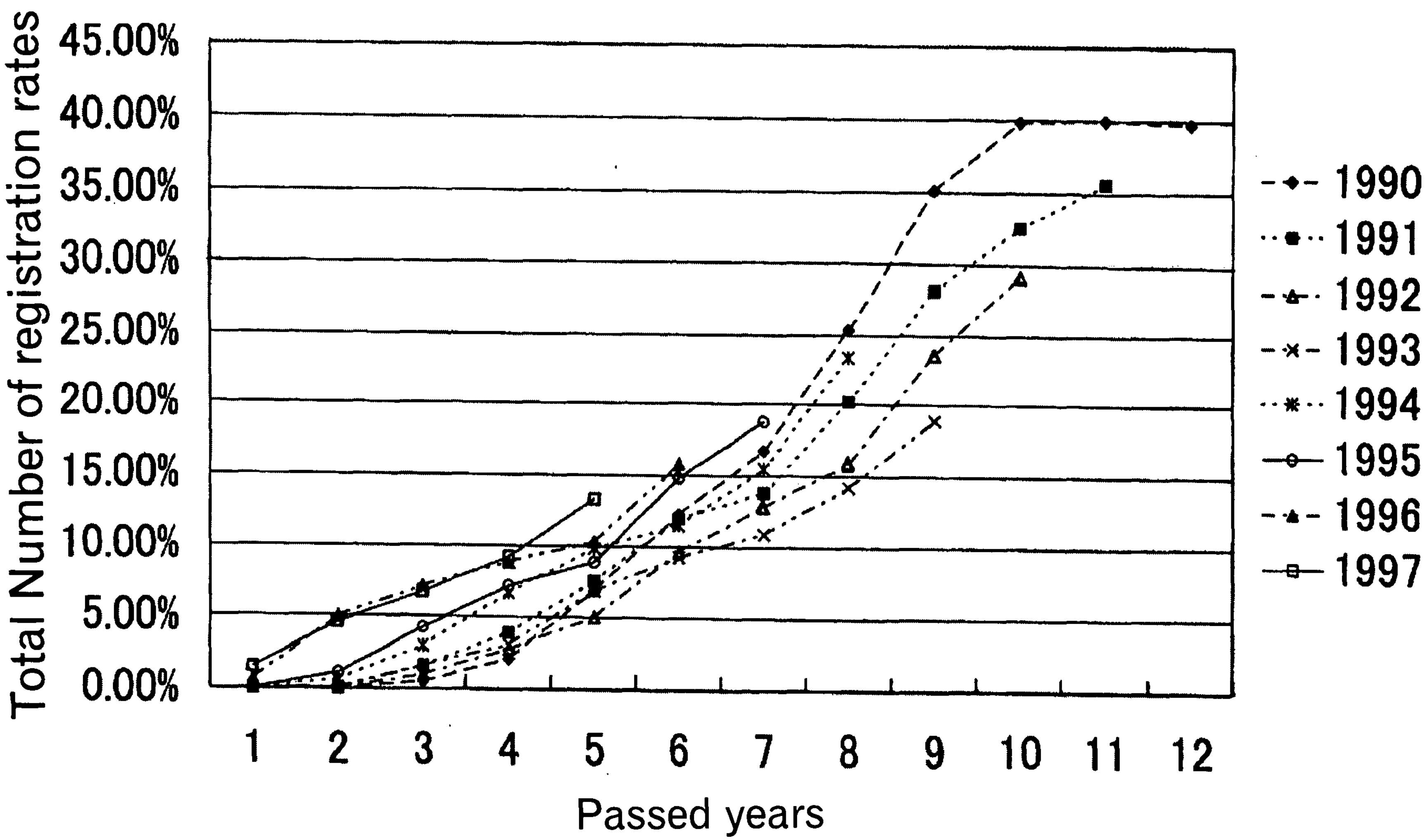

FIG. 12 Transition of Patent Applications

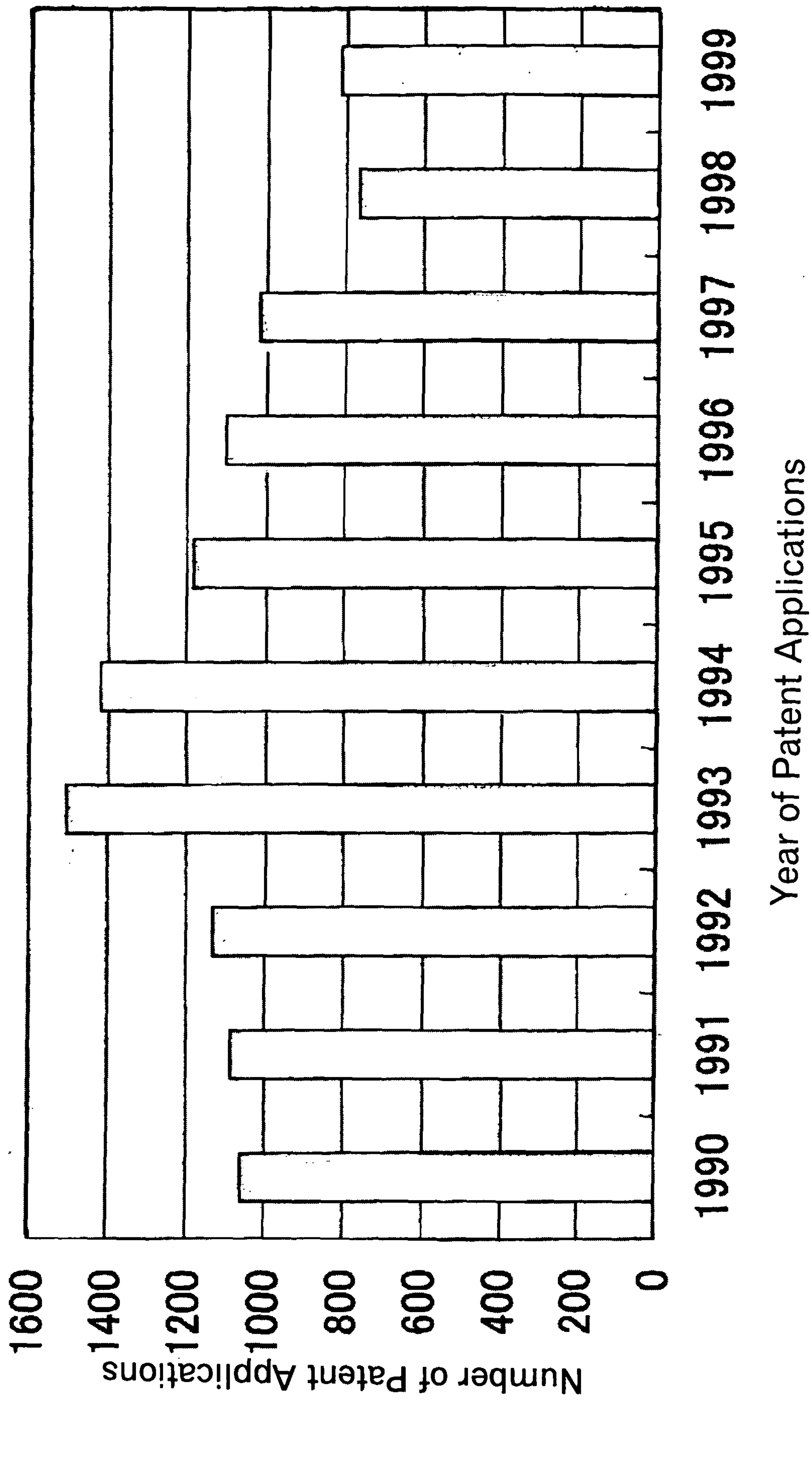

FIG. 13

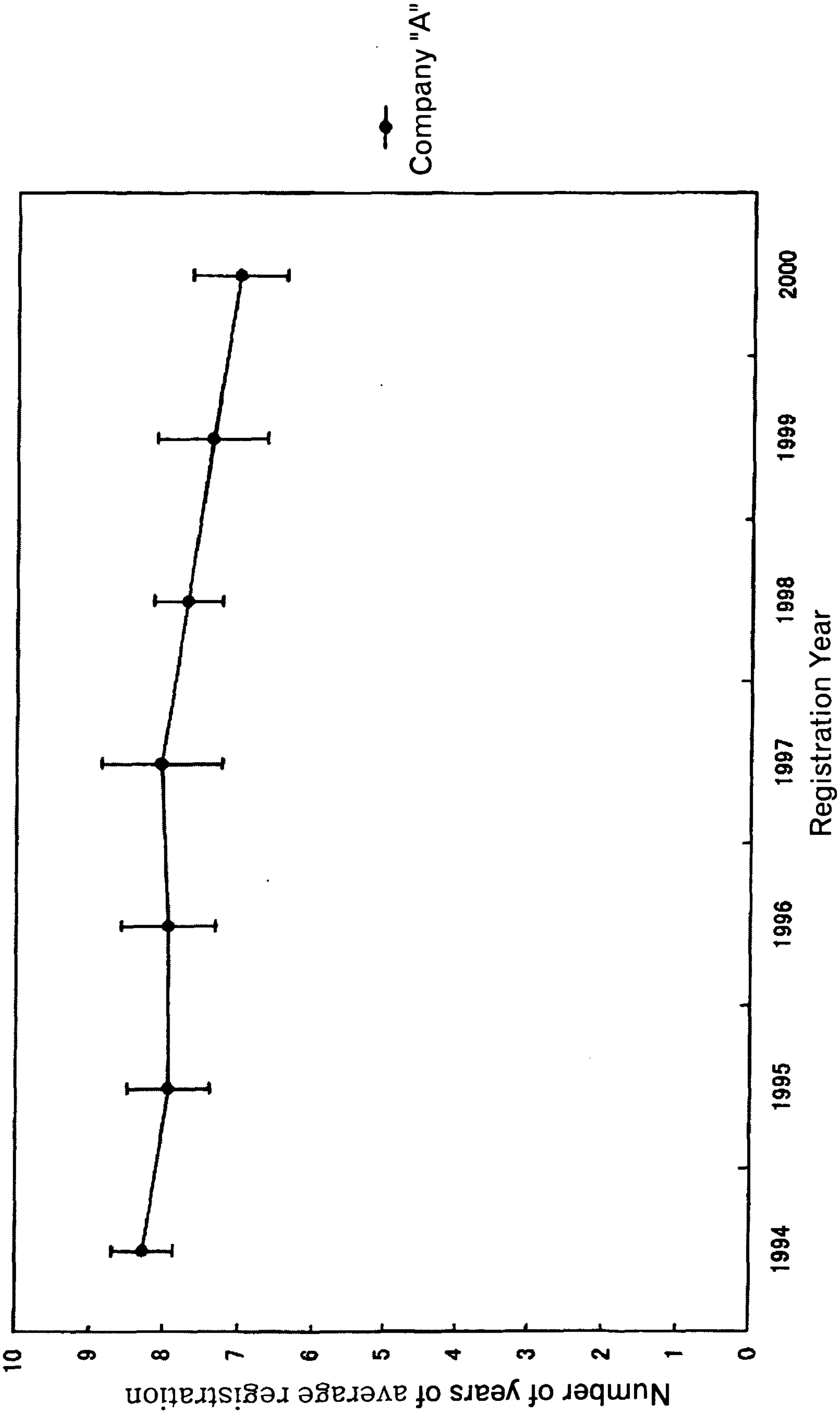

Company "A"
Number of years of average registration
10
9
8
7
6
5
4
3
2
1
0
1994
1995
1996
1997
1998
1999
2000
Registration Year

FIG. 14

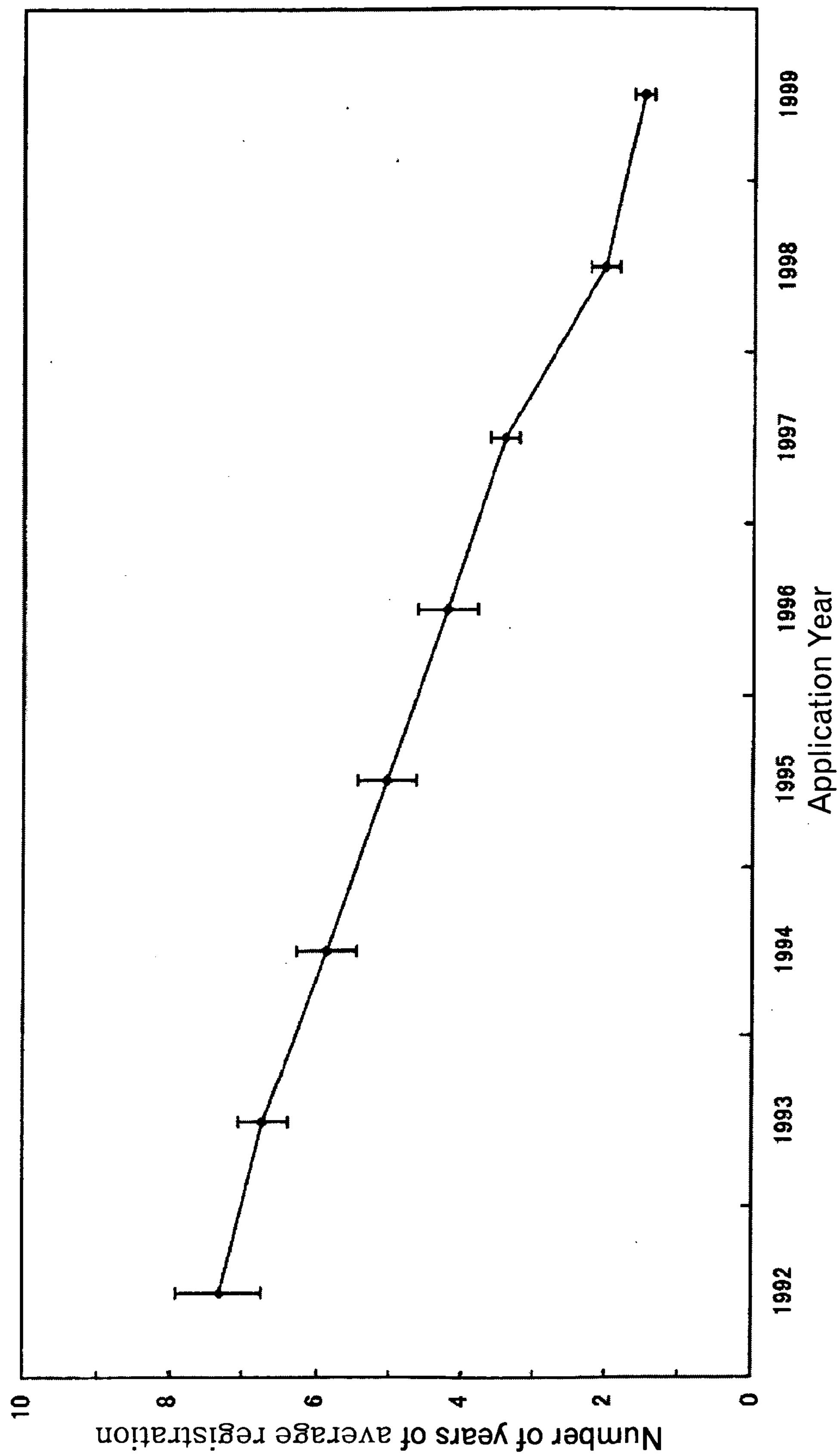
Number of years of average registration
0
2
4
6
8
10
Application Year
1992
1993
1994
1995
1996
1997
1998
1999

FIG. 15

| Economic figures | Correlation coefficient between the number of PATENT APPLICATIONS and economic figures | | | | | | | | |
|---|---|---|---|---|---|---|---|---|---|
| | Whole | Textiles | Chemicals | Pharma-ceuticals | Steel | Machinery | Electrical machinery | Precision machinery | Other manufac-turing |
| Sales amount | 0.417 | 0.940 | 0.804 | 0.763 | 0.944 | 0.897 | 0.954 | 0.968 | 0.961 |
| Sales profit | 0.473 | 0.873 | 0.793 | 0.741 | 0.939 | 0.844 | 0.931 | 0.970 | 0.859 |
| Business profit | 0.336 | 0.871 | 0.681 | 0.754 | 0.924 | 0.536 | 0.789 | 0.841 | 0.918 |
| Research/ development cost | 0.716 | 0.933 | 0.877 | 0.645 | 0.940 | 0.769 | 0.809 | 0.948 | 0.873 |
| Research/ development cost per employee | 0.271 | 0.817 | 0.588 | 0.383 | 0.538 | 0.179 | 0.278 | 0.537 | 0.061 |
| Proportion of research/ development cost to sales amount | 0.165 | 0.730 | 0.311 | 0.132 | 0.362 | 0.116 | 0.115 | 0.290 | 0.043 |

FIG. 16

| Economic figures | Correlation coefficient between the number of PATENT REGISTRATIONS and economic figures | | | | | | | | |
|---|---|---|---|---|---|---|---|---|---|
| | Whole | Textiles | Chemicals | Pharma-ceuticals | Steel | Machinery | Electrical machinery | Precision machinery | Other manufac-turing |
| Sales amount | 0.414 | 0.936 | 0.835 | 0.815 | 0.943 | 0.838 | 0.937 | 0.634 | 0.852 |
| Sales profit | 0.481 | 0.913 | 0.799 | 0.787 | 0.936 | 0.846 | 0.950 | 0.613 | 0.823 |
| Gain in sales | 0.556 | 0.964 | 0.793 | 0.781 | 0.939 | 0.649 | 0.852 | 0.521 | 0.794 |
| Business profit | 0.316 | 0.903 | 0.733 | 0.776 | 0.930 | 0.529 | 0.736 | 0.514 | 0.794 |
| Current profit | 0.368 | 0.923 | 0.740 | 0.775 | 0.828 | 0.473 | 0.685 | 0.449 | 0.802 |
| Ordinary profit | 0.227 | 0.453 | 0.484 | 0.758 | 0.012 | -0.118 | 0.613 | 0.281 | 0.663 |
| Research/ development cost per employee | 0.041 | 0.271 | 0.457 | 0.554 | 0.222 | 0.022 | 0.066 | 0.155 | 0.044 |

FIG. 17

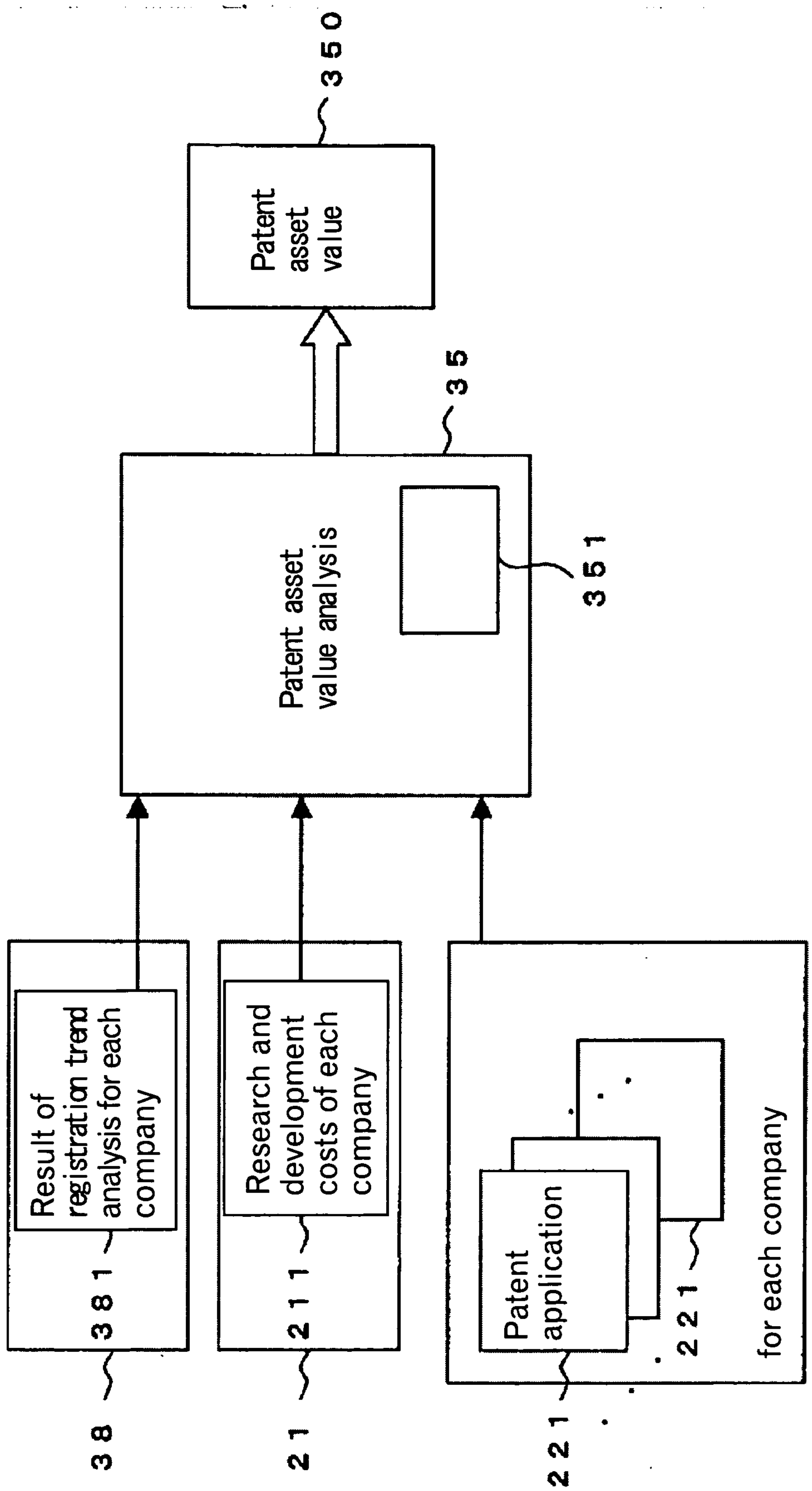
Patent asset value
350
Patent asset value analysis
35
351
Result of registration trend analysis for each company
38
381
Research and development costs of each company
21
211
Patent application
221
221
for each company

FIG. 18

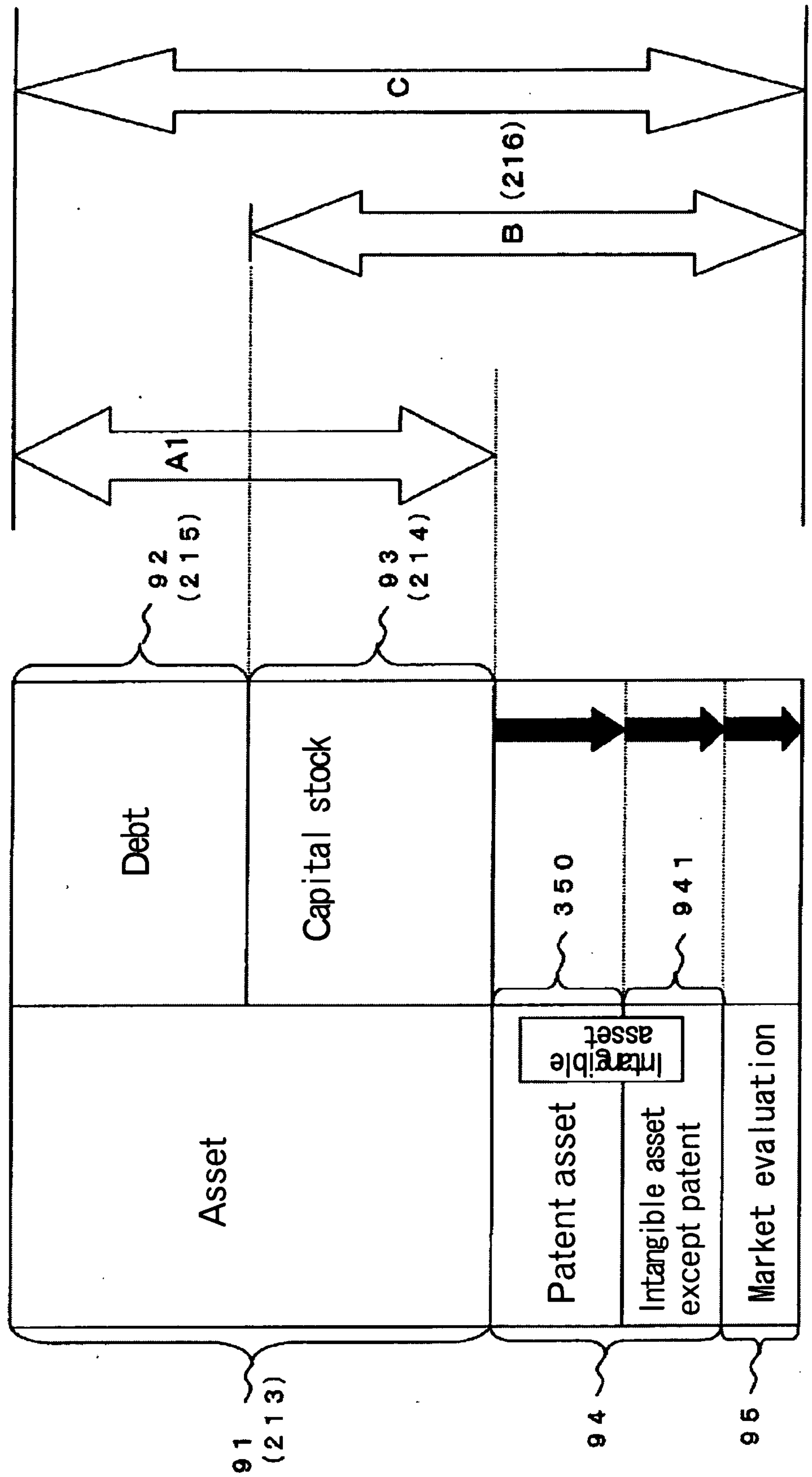
C
B (216)
A1
92 (215)
93 (214)
Debt
Capital stock
350
941
Asset
Patent asset
Intangible asset
Intangible asset except patent
Market evaluation
91 (213)
94
95

FIG. 19

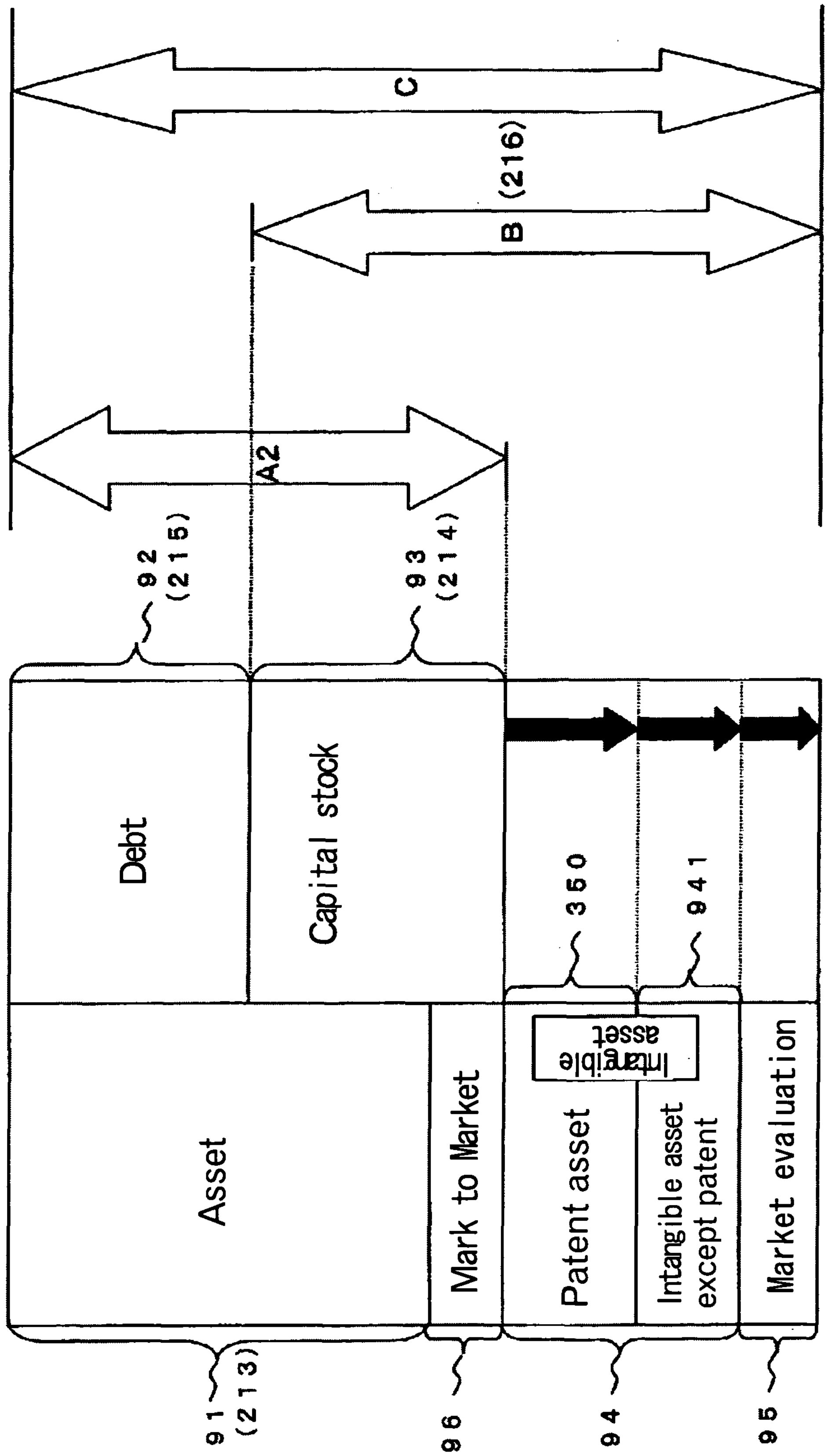
C
B (216)
A2
92 (215)
93 (214)
Debt
Capital stock
350
941
Asset
Mark to Market
Intangible asset
Patent asset
Intangible asset except patent
Market evaluation
91 (213)
96
94
95

FIG. 20

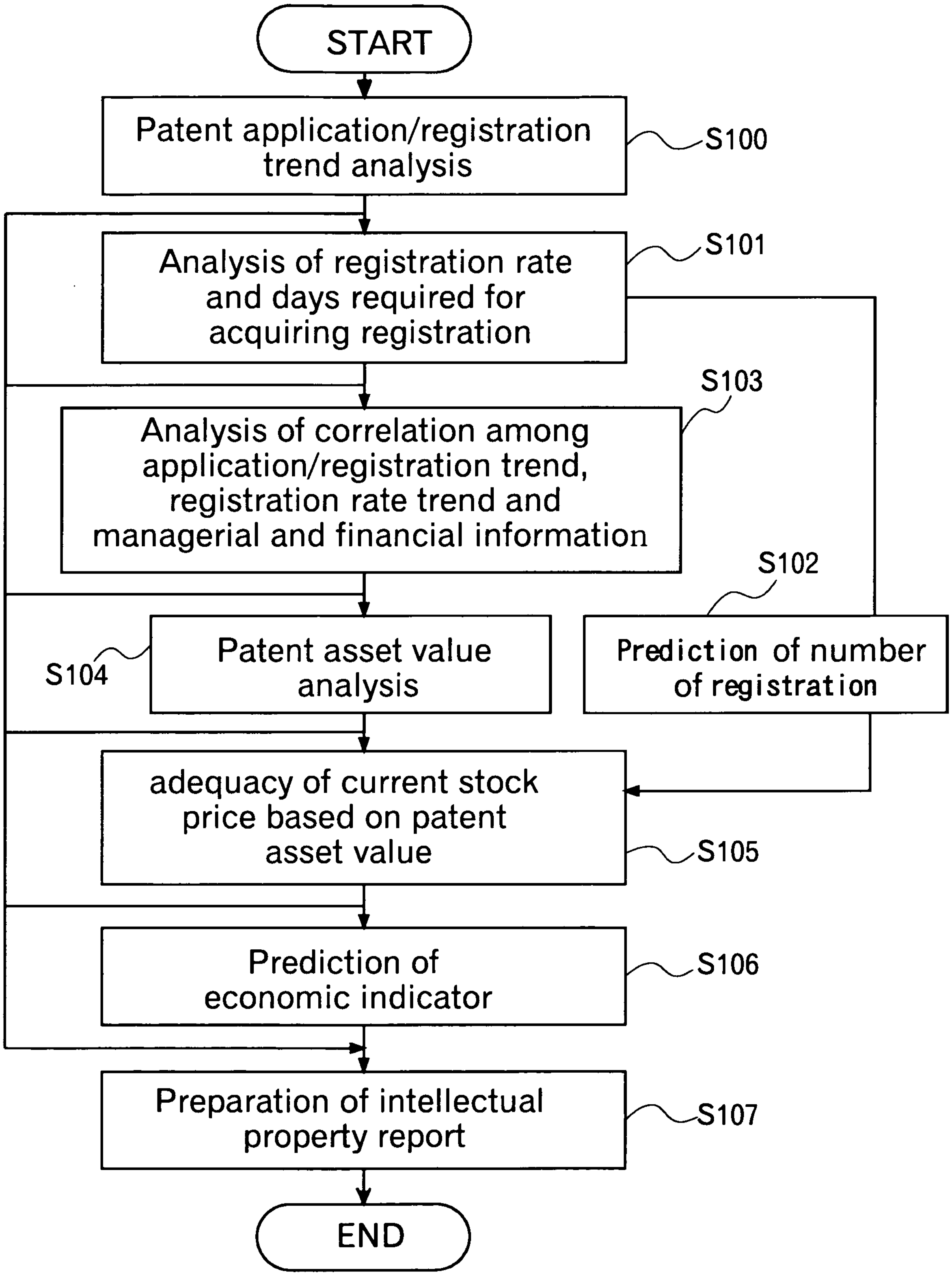
START
Patent application/registration trend analysis
S100
Analysis of registration rate and days required for acquiring registration
S101
S103
Analysis of correlation among application/registration trend, registration rate trend and managerial and financial information
S102
S104
Patent asset value analysis
Prediction of number of registration
adequacy of current stock price based on patent asset value
S105
Prediction of economic indicator
S106
Preparation of intellectual property report
S107
END

FIG. 21

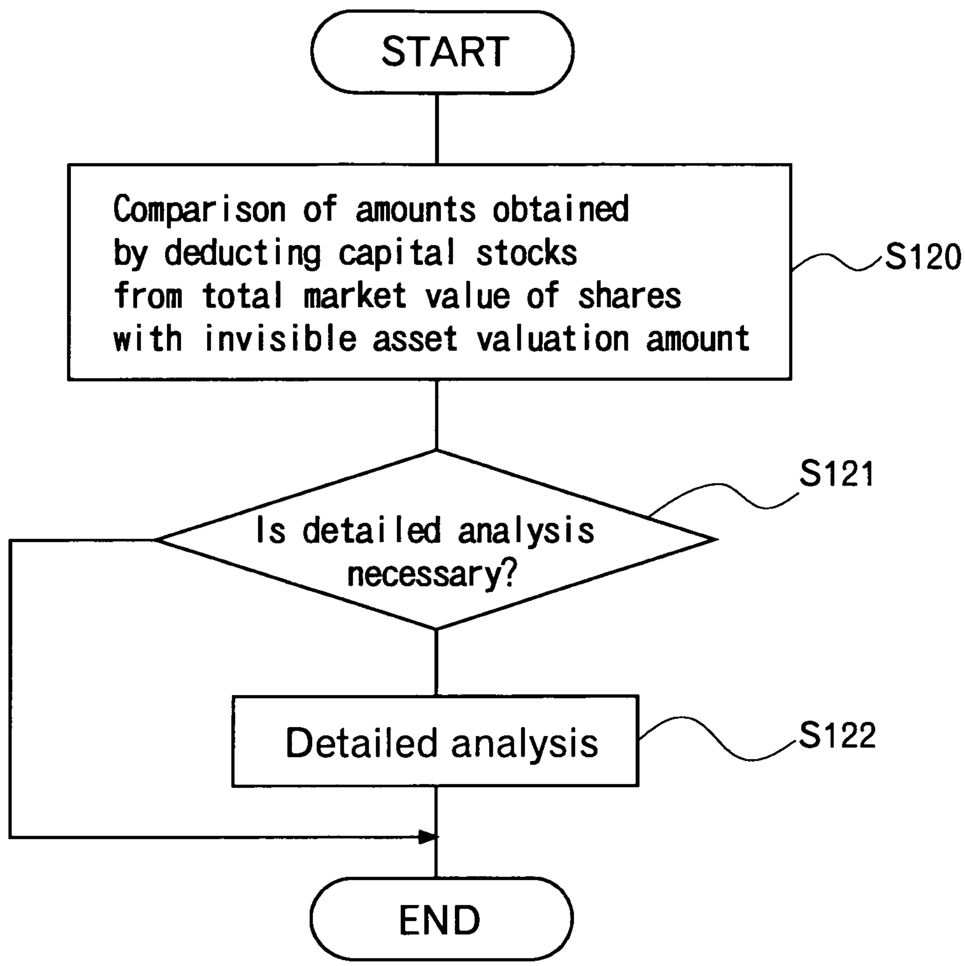
START
Comparison of amounts obtained by deducting capital stocks from total market value of shares with invisible asset valuation amount
S120
Is detailed analysis necessary?
S121
Detailed analysis
S122
END

FIG. 22

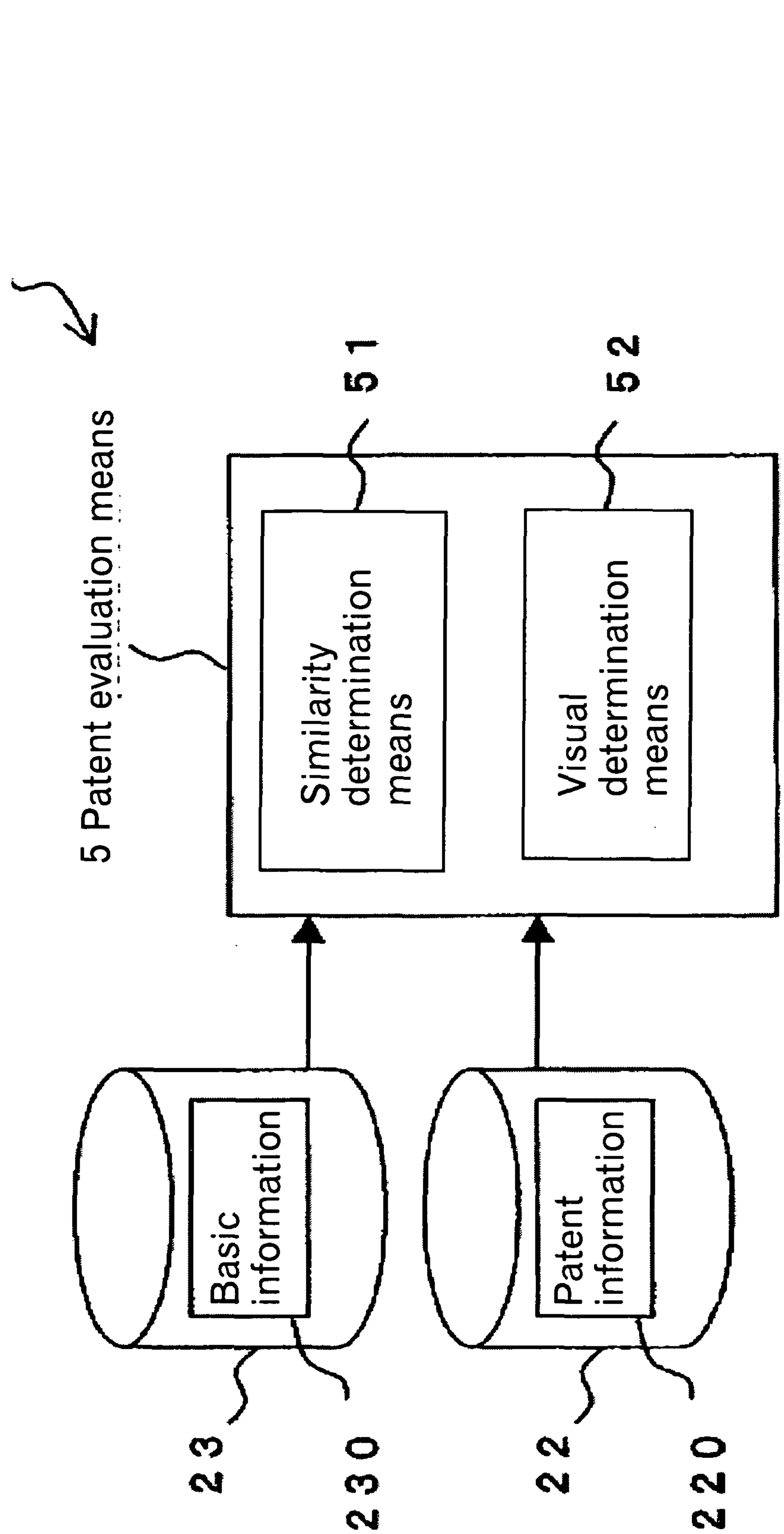
11 Patent evaluating system
5 Patent evaluation means
Similarity determination means
51
Visual determination means
52
Basic information
23
230
Patent information
22
220

FIG. 23

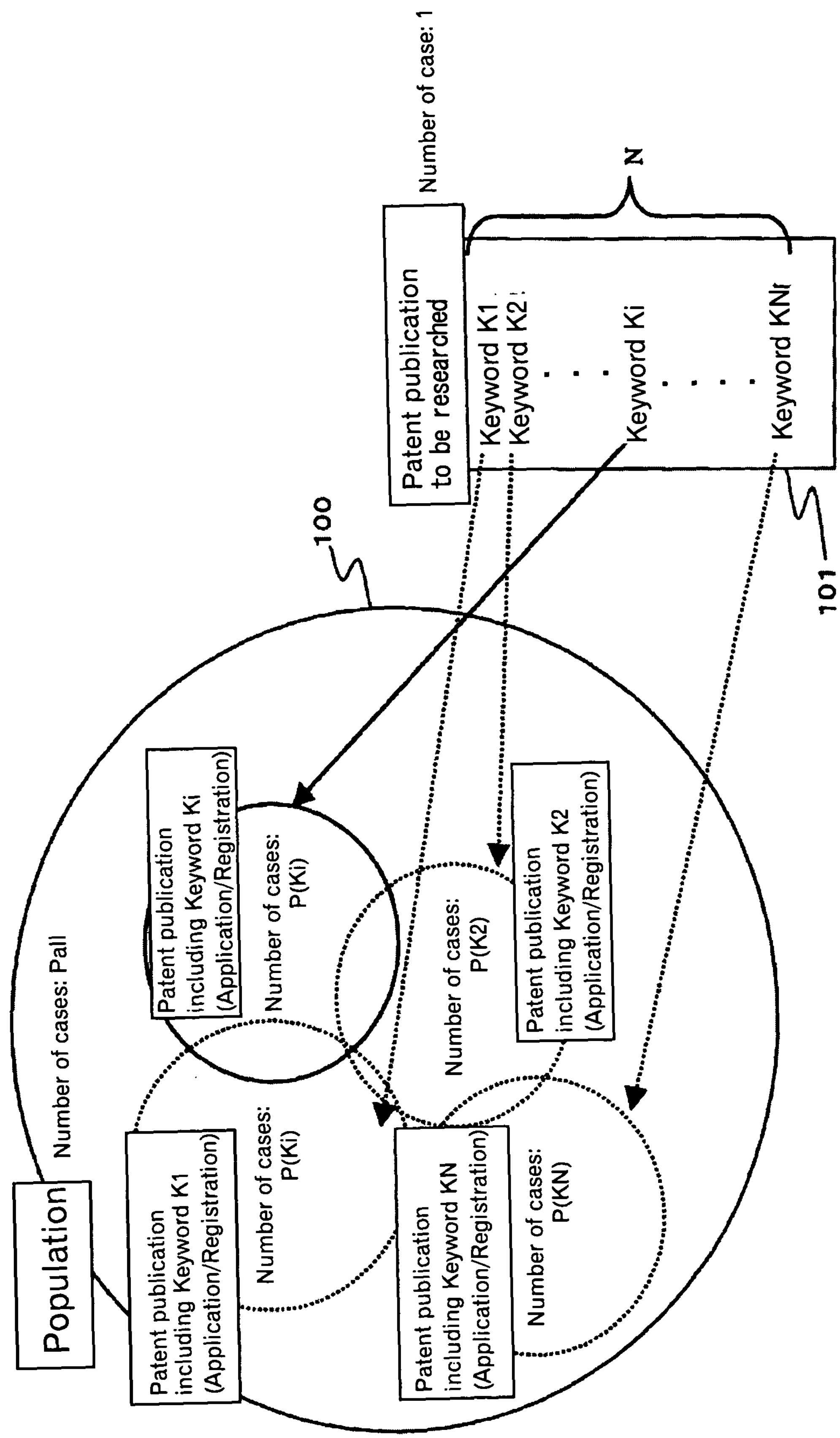
Population
Number of cases: Pall
Patent publication including Keyword K1 (Application/Registration)
Number of cases: P(Ki)
Patent publication including Keyword Ki (Application/Registration)
Number of cases: P(Ki)
Patent publication including Keyword K2 (Application/Registration)
Number of cases: P(K2)
Patent publication including Keyword KN (Application/Registration)
Number of cases: P(KN)
100
Patent publication to be researched
Number of case: 1
Keyword K1
Keyword K2
Keyword Ki
Keyword KN
N
101

FIG. 24

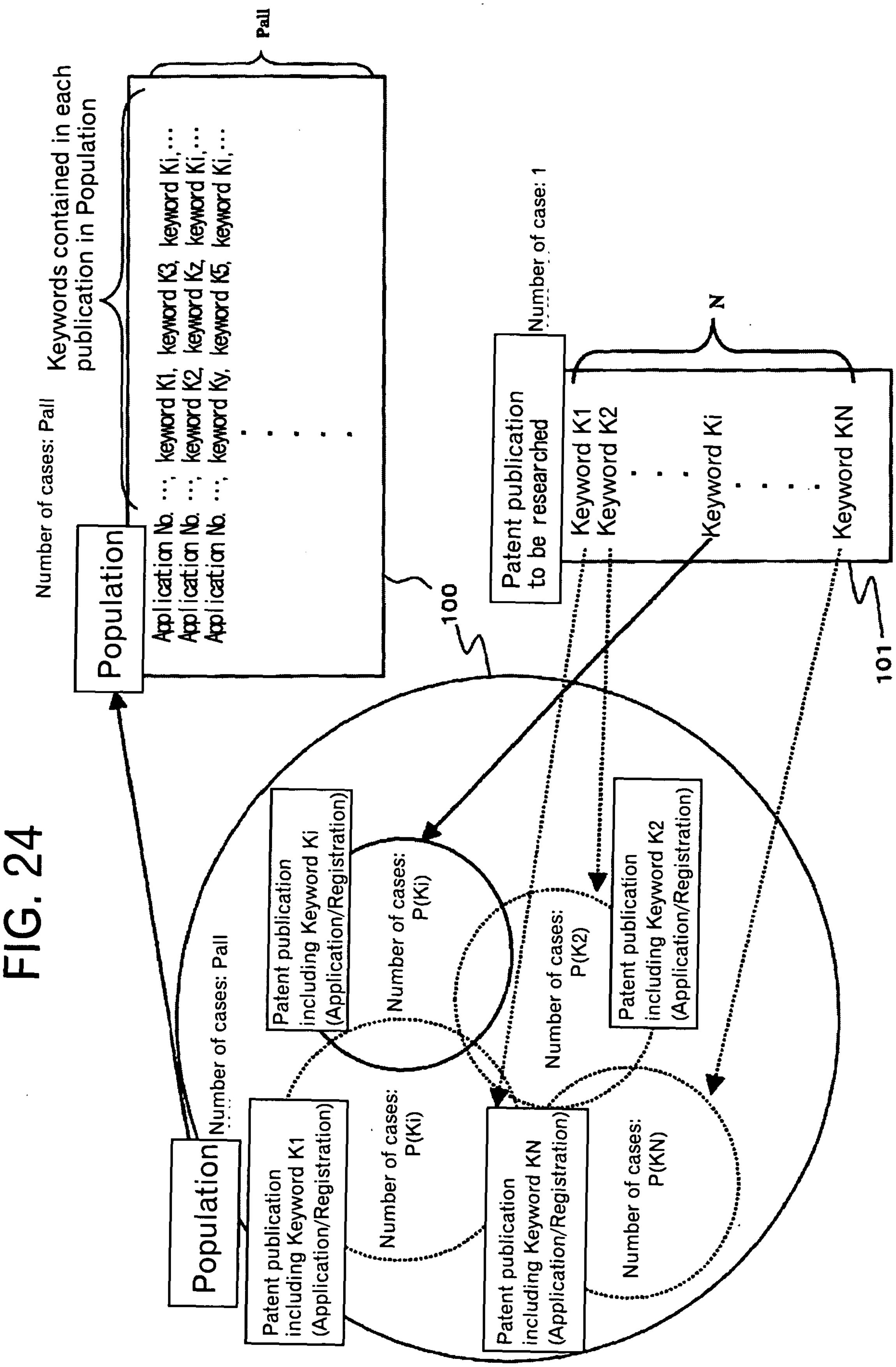

Pall
Keywords contained in each publication in Population
Number of cases: Pall
Population
Application No. …; keyword K1, keyword K3, keyword Ki, …
Application No. …; keyword K2, keyword Kz, keyword Ki, …
Application No. …; keyword Ky, keyword K5, keyword Ki, …
100
Number of case: 1
N
Patent publication to be researched
Keyword K1
Keyword K2
Keyword Ki
Keyword KN
101
Patent publication including Keyword Ki (Application/Registration)
Number of cases: P(Ki)
Patent publication including Keyword K2 (Application/Registration)
Number of cases: P(K2)
Number of cases: Pall
Population
Patent publication including Keyword K1 (Application/Registration)
Number of cases: P(Ki)
Patent publication including Keyword KN (Application/Registration)
Number of cases: P(KN)

FIG. 25

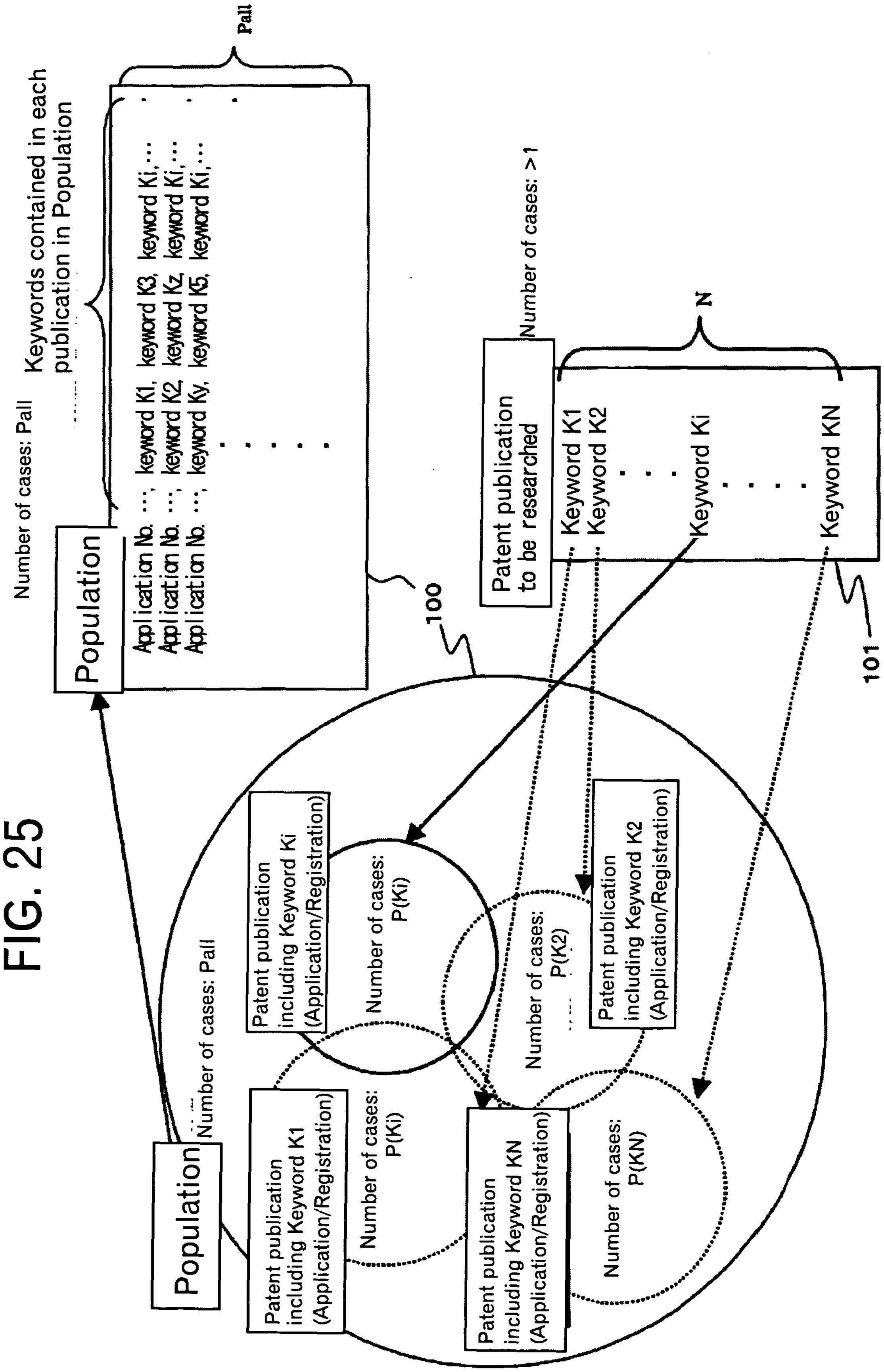

Number of cases: Pall
Population
Keywords contained in each publication in Population
Application No. ..., keyword K1, keyword K3, keyword Ki, ...
Application No. ..., keyword K2, keyword Kz, keyword Ki, ...
Application No. ..., keyword Ky, keyword K5, keyword Ki, ...
Pall
100
Patent publication to be researched
Number of cases: >1
N
Keyword K1
Keyword K2
Keyword Ki
Keyword KN
101
Population
Number of cases: Pall
Patent publication including Keyword Ki (Application/Registration)
Number of cases: P(Ki)
Patent publication including Keyword K2 (Application/Registration)
Number of cases: P(K2)
Patent publication including Keyword K1 (Application/Registration)
Number of cases: P(Ki)
Patent publication including Keyword KN (Application/Registration)
Number of cases: P(KN)

# FIG. 26

Intended use of similarity rate (Patent registration / Application-Registration)

| | | Population (including patent applications and registrations) | | |
|---|---|---|---|---|
| | | Company's own patents | Other companies' patents | Global patents |
| Patents to be searched (Registered) | Company's own patents | Positioning of company's own patent registration to be researched in its own company can be known. When the similarity rate is low, a subject theme is deemed new. When the similarity rate is high, the subject theme is deemed as existing one. (It can be determined whether product development of its own company is worked up or steady by evaluating the distribution repeatedly each year.) | Company's own patent to be researched can be compared with the tendencies of development and productization planning of the other companies. When the similarity rate is low, a subject theme is deemed different from the other companies' tendencies of productization. When the similarity rate is high, the subject theme is deemed similar to those of the other companies. (It can be determined whether product development of its own company is worked up or steady by evaluating the distribution repeatedly each year.) | It can be determined whether the company's own patent to be researched has a distinctive feature in product development compared to those of the whole industry. When the similarity rate is low, a subject theme is deemed different from industry-wide global themes. (It can be determined whether product development of its own company is worked up or steady by evaluating the distribution repeatedly each year.) |
| | Other companies' patents | The patent to be researched can be compared with the tendencies of development and productization planning of the own company. When the similarity rate is low, a subject theme is deemed different from the company's own tendencies of productization. When the similarity rate is high, the subject theme is deemed similar to the company's own theme. (It can be determined whether product development of its own company is worked up or steady by evaluating the distribution repeatedly each year.) | Positioning the objective patent publication to be researched in the other companies can be known. When the similarity rate is low, a subject theme is deemed new. When the similarity rate is high, the subject theme is deemed as existing one. (It can be determined whether product development of its own company is worked up or steady by evaluating the distribution repeatedly each year.) | It can be determined whether the patent to be researched has a distinctive feature in product development compared to those of the whole industry. When the similarity rate is low, a subject theme is deemed different from industry-wide global themes. (It can be determined whether product development of its own company is worked up or steady by evaluating the distribution repeatedly each year.) |

FIG. 27

Intended use of similarity rate (Registration / Registration)

| | | Population (including patent applications and registrations) | | |
|---|---|---|---|---|
| | | Company's own patents | Other companies' patents | Global patents |
| Patents to be searched (Registered) | Company's own patents | Positioning the company's own patent registration to be researched in its own company can be known. When the similarity rate is high, a subject theme is deemed new. When the similarity rate is low, the subject theme is deemed existing one. (It can be determined whether product development of its own company is worked up or steady by evaluating the distribution repeatedly each year.) | Company's own patent to be researched can be compared with the corporate philosophy and the tendencies of productization of the other companies. When the similarity rate is low, a subject theme is deemed different from the other companies' tendencies of productization. When the similarity rate is high, the subject theme is deemed similar to those of the other companies. (It can be determined whether product development of its own company is worked up or steady by evaluating the distribution repeatedly each year.) | It can be determined whether the company's own patent to be researched has a distinctive feature in product development compared to those of the whole industry. When the similarity rate is low, a subject theme is deemed different from industry-wide global themes. (It can be determined whether product development of its own company is worked up or steady by evaluating the distribution repeatedly each year.) |
| | Other companies' patents | Patent to be researched can be compared with the corporate philosophy and the tendencies of productization of the own company. When the similarity rate is low, a subject theme is deemed different from the company's own tendencies of productization. When the similarity rate is high, the subject theme is deemed similar to the company's own theme. (It can be determined whether product development of its own company is worked up or steady by evaluating the distribution repeatedly each year.) | Positioning the objective patent publication to be researched in the other companies can be known. When the similarity rate is low, a subject theme is deemed new. When the similarity rate is high, the subject theme is deemed as existing one. (It can be determined whether product development of its own company is worked up or steady by evaluating the distribution repeatedly each year.) | It can be determined whether the patent to be researched has a distinctive feature in product development compared to those of the whole industry. When the similarity rate is low, a subject theme is deemed different from industry-wide global themes. (It can be determined whether product development of its own company is worked up or steady by evaluating the distribution repeatedly each year.) |

FIG. 28

Intended use of similarity rate (Application / Application-Registration)

| | | Population (including patent applications and registrations) | | |
|---|---|---|---|---|
| | | Company's own patents | Other companies' patents | Global patents |
| Patents to be searched (Registered) | Company's own patents | Positioning the company's own patent application to be researched in its own company can be known. When the similarity rate is high, the patent application is thought to be pertinent to a basic research. When the similarity rate is low, the patent application is thought to be pertinent to an applied research. (It can be determined whether research and development of its own company is worked up or steady by evaluating the distribution repeatedly each year.) | Company's own patent to be researched can be compared with the tendencies of development and productization planning of the other companies. When the similarity rate is low, a research work is deemed different from the other companies' tendencies of research work. When the similarity rate is high, the research work is deemed similar to those of the other companies. (It can be determined whether research and development of its own company is worked up or steady by evaluating the distribution repeatedly each year.) | It can be determined whether the company's own patent application to be researched has a distinctive feature in product development compared to those of the whole industry. When the similarity rate is low, a research work is deemed different from industry-wide global research work. (It can be determined whether product development of its own company is worked up or steady by evaluating the distribution repeatedly each year.) |
| | Other companies' patents | Patent application to be researched can be compared with the tendencies of development and productization planning of the own company. When the similarity rate is low, a research work is deemed different from the own company's tendencies of research work. When the similarity rate is high, the research work is deemed similar to those of the own company. (It can be determined whether research and development of its own company is worked up or steady by evaluating the distribution repeatedly each year.) | Positioning the company's own patent application to be researched in its own company can be known. When the similarity rate is high, the patent application is thought to be pertinent to a basic research. When the similarity rate is low, the patent application is thought to be pertinent to an applied research. (It can be determined whether research and development of its own company is worked up or steady by evaluating the distribution repeatedly each year.) | It can be determined whether the company's own patent application to be researched has a distinctive feature in product development compared to those of the whole industry. When the similarity rate is low, a research work is deemed different from industry-wide global research work. (It can be determined whether product development of its own company is worked up or steady by evaluating the distribution repeatedly each year.) |

FIG. 29

Intended use of similarity rate (Application / Registration)

| | | Population (including patent applications and registrations) | | |
|---|---|---|---|---|
| | | Company's own patents | Other companies' patents | Global patents |
| Patents to be searched (Registered) | Company's own patents | Positioning the company's own patent application to be researched in its own company can be known. When the similarity rate is high, the patent application is thought to be pertinent to a basic research. When the similarity rate is (It can be determined whether research and development of its own company is worked up or steady by evaluating the distribution repeatedly each year.) | Company's own patent application to be researched can be compared with the tendencies of development and productization planning of the other companies. When the similarity rate is low, a research work is deemed different from the other companies' tendencies of research work. When the similarity rate is high, the research work is deemed as similar to those of the other companies. (It can be determined whether research and development of its own company is worked up or steady by evaluating the distribution repeatedly each year.) | It can be determined whether the company's own patent application to be researched has a distinctive feature in product development compared to those of the whole industry. When the similarity rate is low, a research work is deemed different from industry-wide global research work. (It can be determined whether research and development of its own company is worked up or steady by evaluating the distribution repeatedly each year.) |
| | Other companies' patents | Patent application to be researched can be compared with the corporate philosophy and the tendencies of productization of the own company. When the similarity rate is low, a research work is deemed different from the own company's tendencies of research work. When the similarity rate is high, the research work is deemed as similar to those of the own company. (It can be determined whether research and development of its own company is worked up or steady by evaluating the distribution repeatedly each year.) | Positioning the objective patent application publication to be researched in the other companies can be known. When the similarity rate is low, the patent application is thought to be pertinent to a basic research. When the similarity rate is high, the patent application is thought to be pertinent to an applied research. (It can be determined whether research and development of its own company is worked up or steady by evaluating the distribution repeatedly each year.) | It can be determined whether the patent application to be researched has a distinctive feature in product development compared to those of the whole industry. When the similarity rate is low, a research work is deemed different from industry-wide global research work. (It can be determined whether product development of its own company is worked up or steady by evaluating the distribution repeatedly each year.) |

FIG. 30

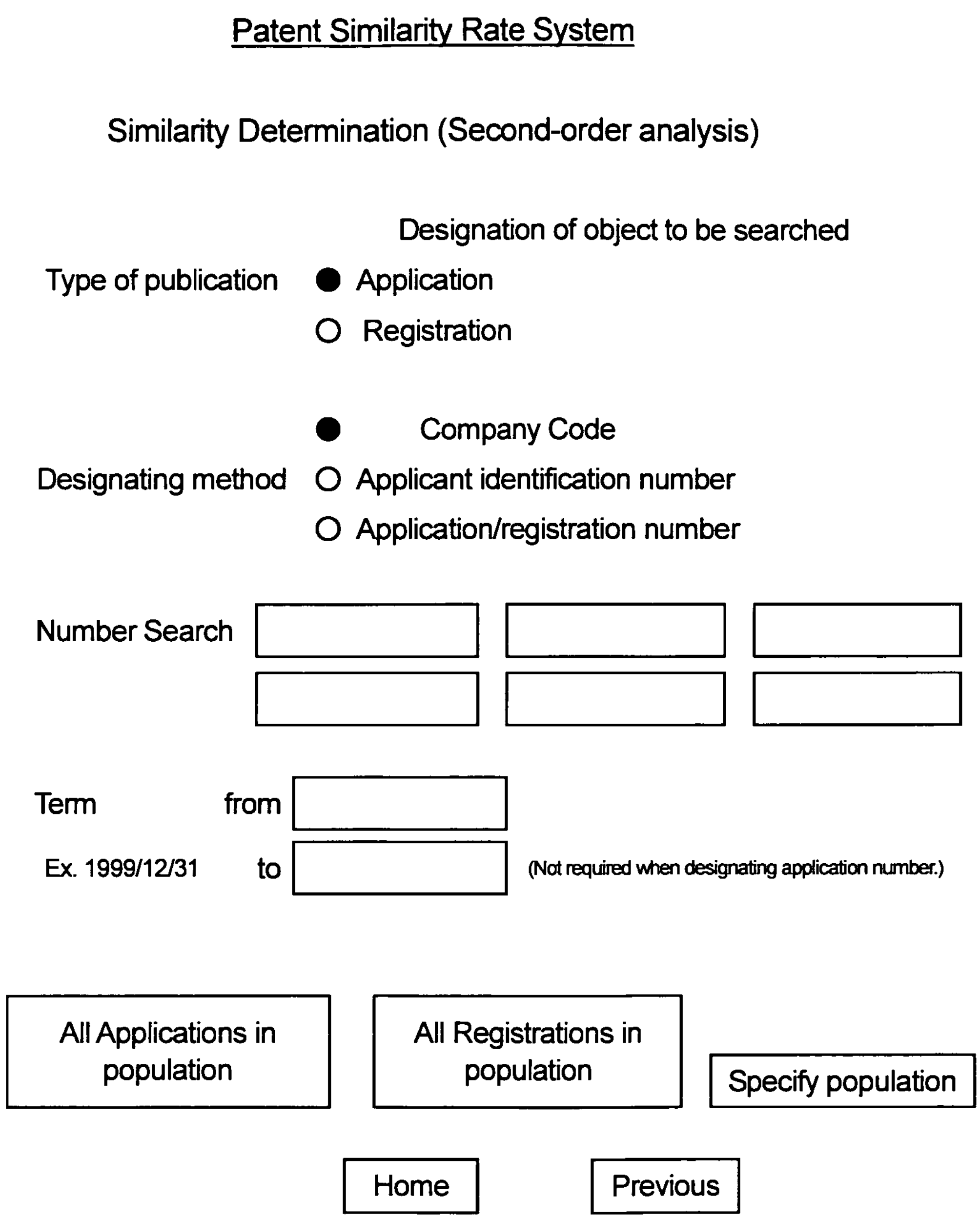
Patent Similarity Rate System
Similarity Determination (Second-order analysis)
Designation of object to be searched
Type of publication
Application
Registration
Company Code
Designating method
Applicant identification number
Application/registration number
Number Search
Term
from
Ex. 1999/12/31
to
(Not required when designating application number.)
All Applications in population
All Registrations in population
Specify population
Home
Previous

FIG. 31

Patent Similarity Rate System

Result of Similarity Rate Determination

| Objective publications | | Population | |
|---|---|---|---|
| Publication Type: | Application | Publication Type: | All Applications |
| Specified No: | H11-XXXX1 | Specified No: | |
| Term From: | | Term From: | |
| To: | | To: | |

| Application No. | Similarity Rate | Title of Invention |
|---|---|---|
| H11-XXXX1(A) | 0.8959 | Preventive/curative medicine for sleep disturbance |

Home

Previous

FIG. 32

Patent Similarity Rate System

Result of Similarity Rate Determination

| Objective publications | | Population | |
|---|---|---|---|
| Publication Type: Application | | Publication Type: All Applications | |
| Term | From: 2001/07/01 | Term | From: 1994/06/01 |
| | To: 2001/09/31 | | To: 1994/09/30 |

| Application No. | Similarity Rate | Title of Invention |
|---|---|---|
| H13-XXXX0(A) | 11.0157 | Ceramic resistor and producing method therefor, and electrostatic chuck |

Home

Previous

FIG. 33

Patent Similarity Rate System

Result of Similarity Rate Determination

| Objective publications | | Population | |
|---|---|---|---|
| Publication Type: Application | | Publication Type: All Applications | |
| | | Specified No: | |
| Term From: | 2001/01/01 | Term From: | |
| To: | 2001/12/31 | To: | |

| Application No. | Similarity Rate | Title of Invention |
|---|---|---|
| H13-XXXX1(A) | 0.5348 | Inhibitory agent for fungal metabolite |
| H13-XXXX2(A) | 5.4076 | Liquid finishing compound for textile |
| H13-XXXX3(A) | 12.4001 | Cleaning device and clearing sheet |
| H13-XXXX4(A) | 15.6163 | Cleaning reinforcement compound and cleaning compound |
| H13-XXXX5(A) | 19.5100 | Facial packing mask and cosmetic facial sheet |

Home    Previous

# FIG. 34

## Patent Similarity Rate System

| | |
|---|---|
| Application Filing Number | 2002-xxxx |
| Registration Number | 2003-xxxx |
| Application Filing Date | 2002/12/26 |
| Date of Registration | 2003/12/26 |
| Similarity Rate | 2.4079 |

【Title】 Technology evaluation device
【Applicant】 ABC Co. Ltd.

【Abstract】
【Problems to be solved】 There is disclosed a technical information evaluating device for determining whether an objective technique such as of intangible assets of a target company is a new technology or not by making use of easily available technical literatures disclosing the technical information of the objective technique. The technical evaluating device of the invention makes it possible to adequately analyzing the value of the company to be researched by taking the value of the intangible property of the company into quantitative and qualitative consideration on the basis of the technical literatures.

Similarity rates of the technical literatures, which provides an indication for making the analysis, can be obtained by acquiring keywords contained in the technical literatures to be researched, counting the number of technical literatures containing the prescribed keywords in a population of technical literatures, and calculating the proportion of the technical literatures containing the prescribed keywords to the total number of technical literatures in the population.

【Claims】
【Claim 1】 A technology evaluating device comprising:
a keyword collection means for collecting prescribed keywords from technical literatures to be searched,
a count means for counting the number of technical literatures containing said prescribed keywords from a database population storing said technical literatures,
a total count means for figuring out a total of technical literatures in said database population,
a similarity rate calculation means for calculating a similarity rate based on the proportion of said technical literatures containing said prescribed keywords thus figured up to the total number of technical literatures in said database population, and
an output means for outputting said similarity rate thus calculated to one or more of a display means, a record means and transmitting means.
【Claim 2】 The technology evaluating device according to claim 1, wherein said similarity rate calculation means serves to calculate the similarity rate based on the proportion of said technical literatures containing said prescribed keywords thus figured up to the total number of technical literatures in said database population and multiplying said proportion obtained by said similarity rate calculation means by a keyword-specific weighting coefficient.
【Claim 3】 The technology evaluating device according to claim 1 or claim 2, wherein said similarity rate calculation means serves to calculate the similarity rate based on the proportion of said technical literatures containing said prescribed keywords thus figured up to the total number of technical literatures in said database population with respect to each of keywords and calculating an average in said proportion with respect to said keywords.

FIG. 35

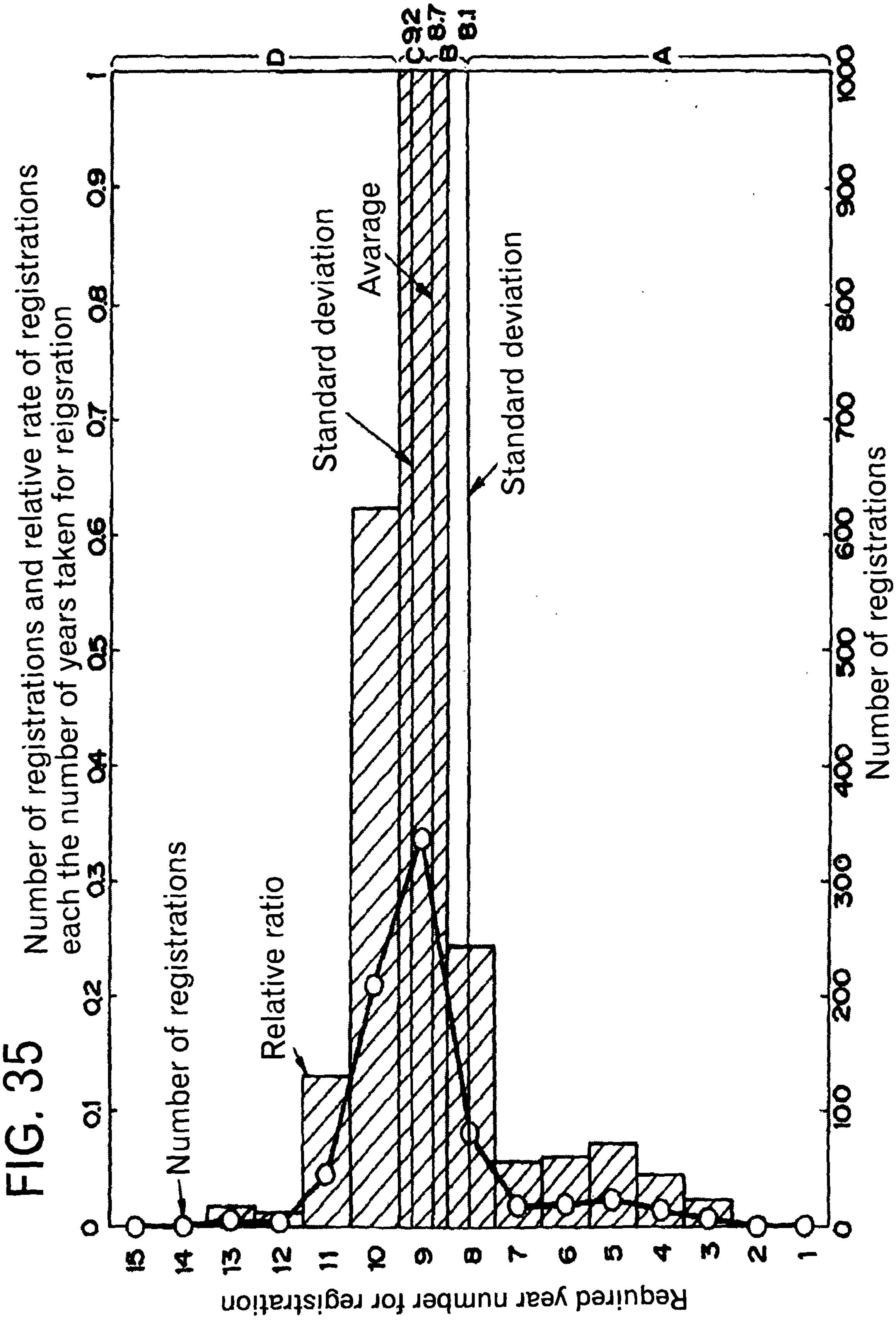
Number of registrations and relative rate of registrations
each the number of years taken for reigsration
Number of registrations
Relative ratio
Standard deviation
Avarage
Standard deviation
Number of registrations
Required year number for registration
D
C
B
B
A
9.2
8.7
8.1
0
0.1
0.2
0.3
0.4
0.5
0.6
0.7
0.8
0.9
1
0
100
200
300
400
500
600
700
800
900
1000
15
14
13
12
11
10
9
8
7
6
5
4
3
2
1

FIG. 36

Number of registrations and relative rate of registrations each similarity rate for patent

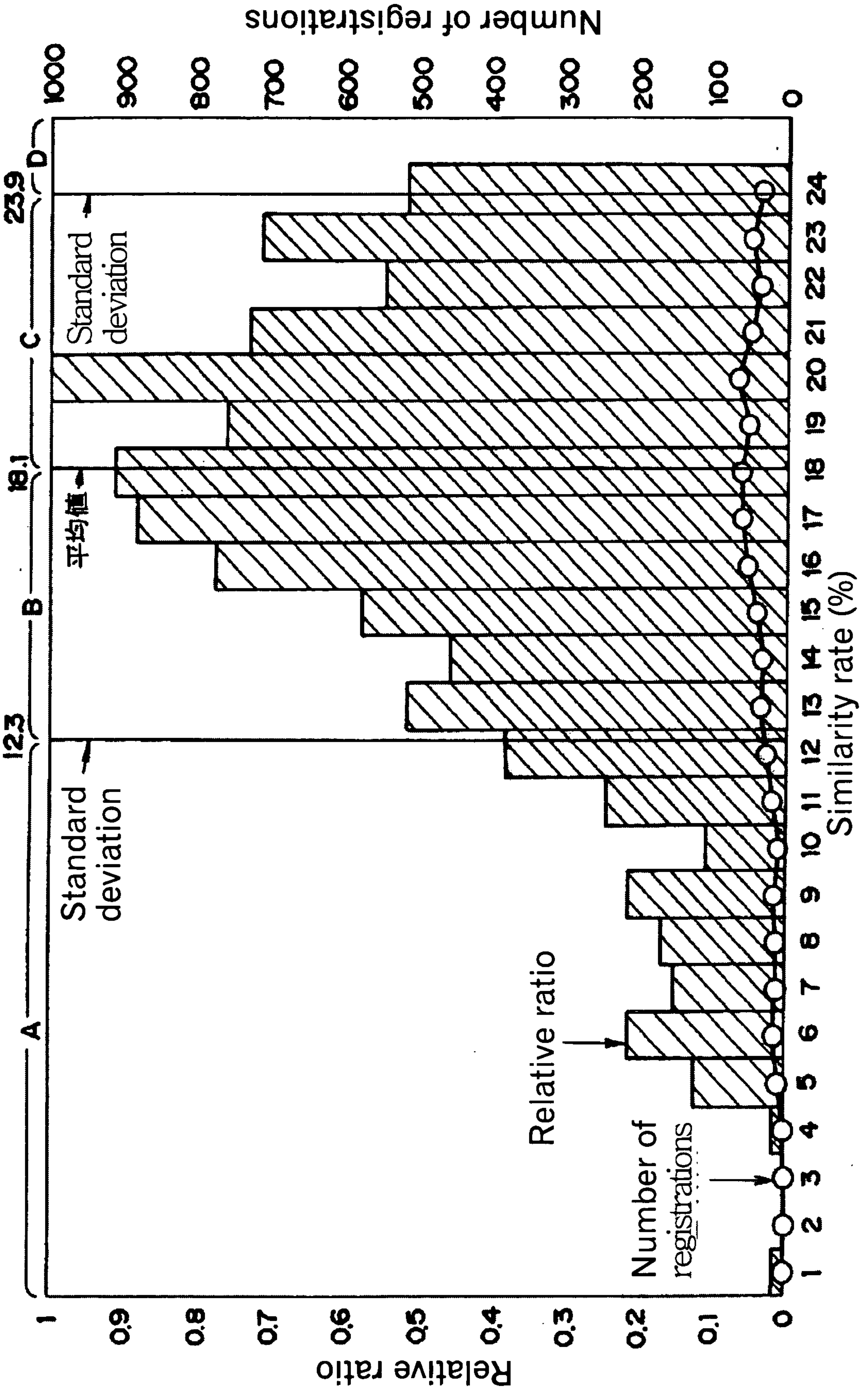

FIG. 37

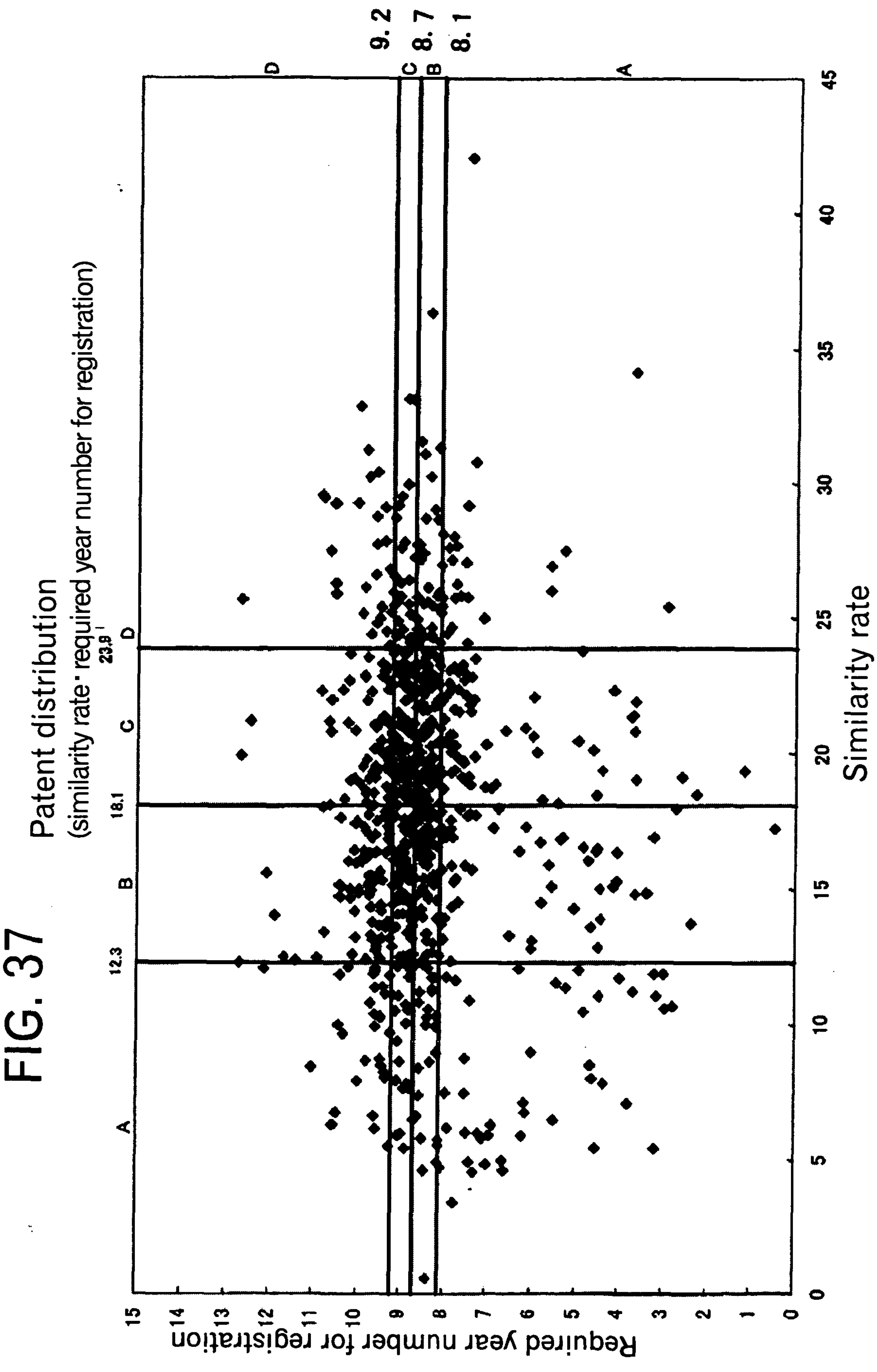
Patent distribution
(similarity rate・required year number for registration)
Required year number for registration
Similarity rate
A
B
C
D
12.3
18.1
23.9
9. 2
8. 7
8. 1
0
5
10
15
20
25
30
35
40
45
1
2
3
4
5
6
7
8
9
10
11
12
13
14
15

# FIG. 38

Table of averages of hierarchies of
Required year number for registration × Similarity rate

| | | | Similarity Rate | | | | Total |
|---|---|---|---|---|---|---|---|
| | | | A-layer | B-layer | C-layer | D-layer | |
| Required year number for registration | D-layer | Number of cases (Ratio) | 28(3.63%) | 75(9.73%) | 62(8.04%) | 27(3.50%) | 192(24.90%) |
| | | Application year | 1986.893 | 1986.933 | 1987.000 | 1986.519 | 1986.891 |
| | | Registration year | 1996.964 | 1996.867 | 1996.855 | 1996.481 | 1996.823 |
| | | Number of claims | 1.357 | 1.507 | 1.323 | 1.074 | 1.365 |
| | | Number of IPC | 3.036 | 2.107 | 2.226 | 1.667 | 2.219 |
| | | Years until patent | 9.856 | 9.905 | 9.809 | 9.946 | 9.873 |
| | | Similarity rate (whole) | 8.632 | 8.411 | 9.781 | 11.615 | 9.336 |
| | | Similarity rate (individual) | 9.532 | 15.354 | 20.565 | 27.411 | 17.883 |
| | C-layer | Number of cases (Ratio) | 22(2.85%) | 66(8.56%) | 77(9.99%) | 28(3.63%) | 193(25.03%) |
| | | Application year | 1988.364 | 1987.818 | 1987.844 | 1987.357 | 1987.824 |
| | | Registration year | 1997.455 | 1996.833 | 1996.818 | 1996.357 | 1996.829 |
| | | Number of claims | 1.545 | 1.515 | 1.325 | 1.143 | 1.389 |
| | | Number of IPC | 2.045 | 2.424 | 2.377 | 1.964 | 2.295 |
| | | Years until patent | 8.950 | 8.922 | 8.949 | 8.949 | 8.940 |
| | | Similarity rate (whole) | 8.531 | 8.604 | 9.369 | 10.822 | 9.223 |
| | | Similarity rate (individual) | 9.389 | 15.385 | 20.737 | 26.770 | 18.489 |
| | B-layer | Number of cases (Ratio) | 23(2.98%) | 66(8.56%) | 73(9.47%) | 31(4.02%) | 193(25.03%) |
| | | Application year | 1988.652 | 1988.076 | 1988.986 | 1988.516 | 1988.560 |
| | | Registration year | 1997.348 | 1996.621 | 1997.548 | 1997.226 | 1997.155 |
| | | Number of claims | 1.609 | 1.682 | 1.288 | 1.194 | 1.446 |
| | | Number of IPC | 2.261 | 2.333 | 2.205 | 2.290 | 2.269 |
| | | Years until patent | 8.384 | 8.430 | 8.425 | 8.435 | 8.423 |
| | | Similarity rate (whole) | 9.238 | 8.867 | 8.934 | 9.864 | 9.097 |
| | | Similarity rate (individual) | 9.181 | 16.041 | 20.878 | 26.755 | 18.774 |
| | A-layer | Number of cases (Ratio) | 45(5.84%) | 57(7.39%) | 65(8.43%) | 26(3.37%) | 193(25.03%) |
| | | Application year | 1991.533 | 1991.439 | 1990.646 | 1989.577 | 1990.943 |
| | | Registration year | 1997.489 | 1997.632 | 1997.385 | 1996.962 | 1997.425 |
| | | Number of claims | 3.289 | 2.544 | 1.646 | 1.462 | 2.269 |
| | | Number of IPC | 2.644 | 2.912 | 2.431 | 2.654 | 2.653 |
| | | Years until patent | 5.894 | 6.158 | 6.608 | 7.144 | 6.381 |
| | | Similarity rate (whole) | 9.883 | 8.843 | 8.572 | 11.172 | 9.308 |
| | | Similarity rate (individual) | 8.052 | 15.652 | 20.795 | 27.441 | 17.200 |
| Total | | | 118(15.30%) | 264(34.24%) | 277(35.93%) | 112(14.53%) | 771(100.00%) |
| | | | 1989.280 | 1988.413 | 1988.614 | 1987.991 | 1988.556 |
| | | | 1997.331 | 1996.962 | 1997.162 | 1996.768 | 1997.058 |
| | | | 2.178 | 1.777 | 1.390 | 1.214 | 1.617 |
| | | | 2.551 | 2.417 | 2.310 | 2.143 | 2.359 |
| | | | 7.889 | 8.482 | 8.454 | 8.628 | 8.402 |
| | | | 9.208 | 8.666 | 9.159 | 10.829 | 9.241 |
| | | | 8.873 | 15.598 | 20.749 | 27.076 | 18.087 |

FIG. 39

Relationship between similarity rate and number of years taken for reigsration

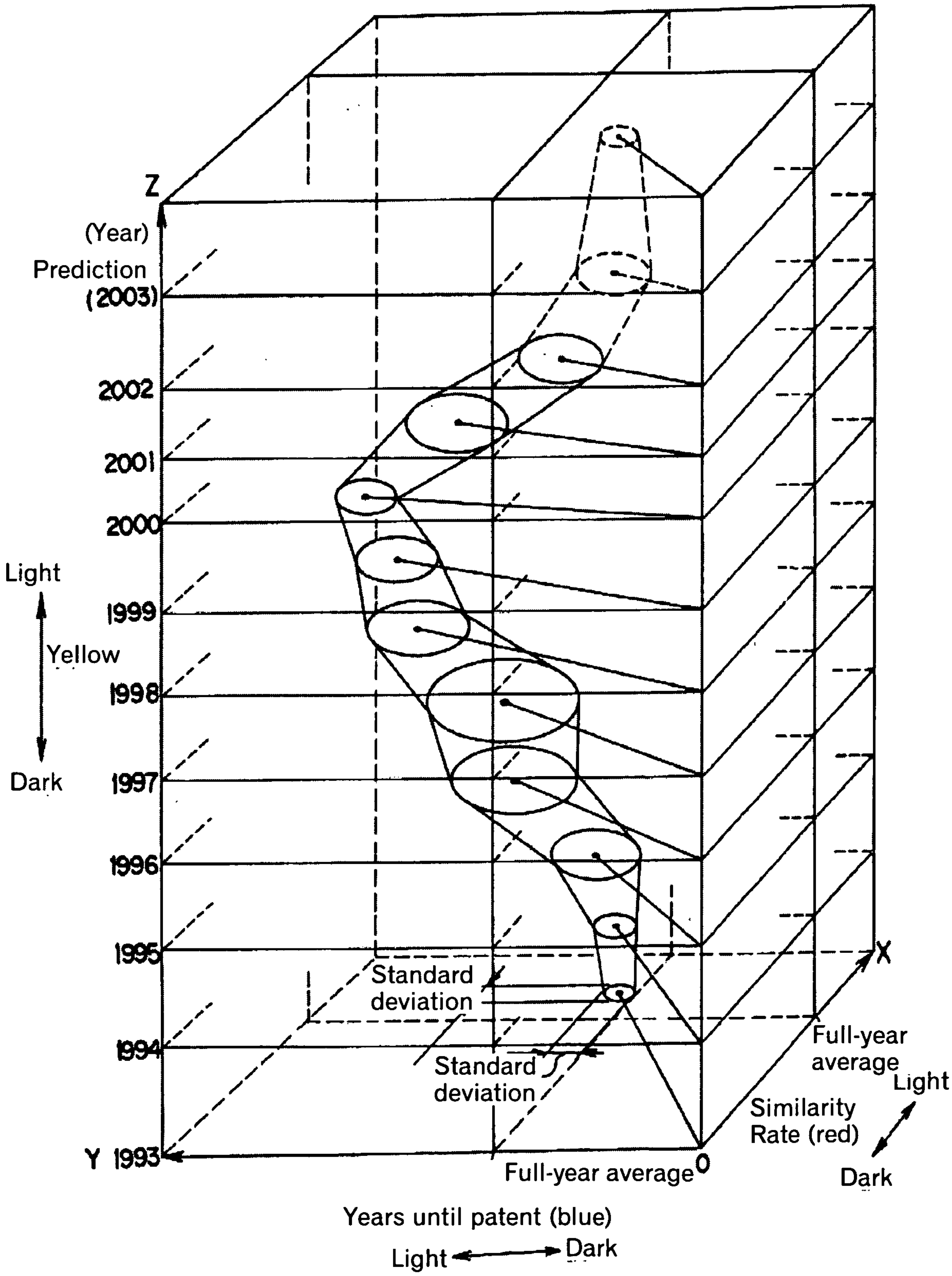

FIG. 40

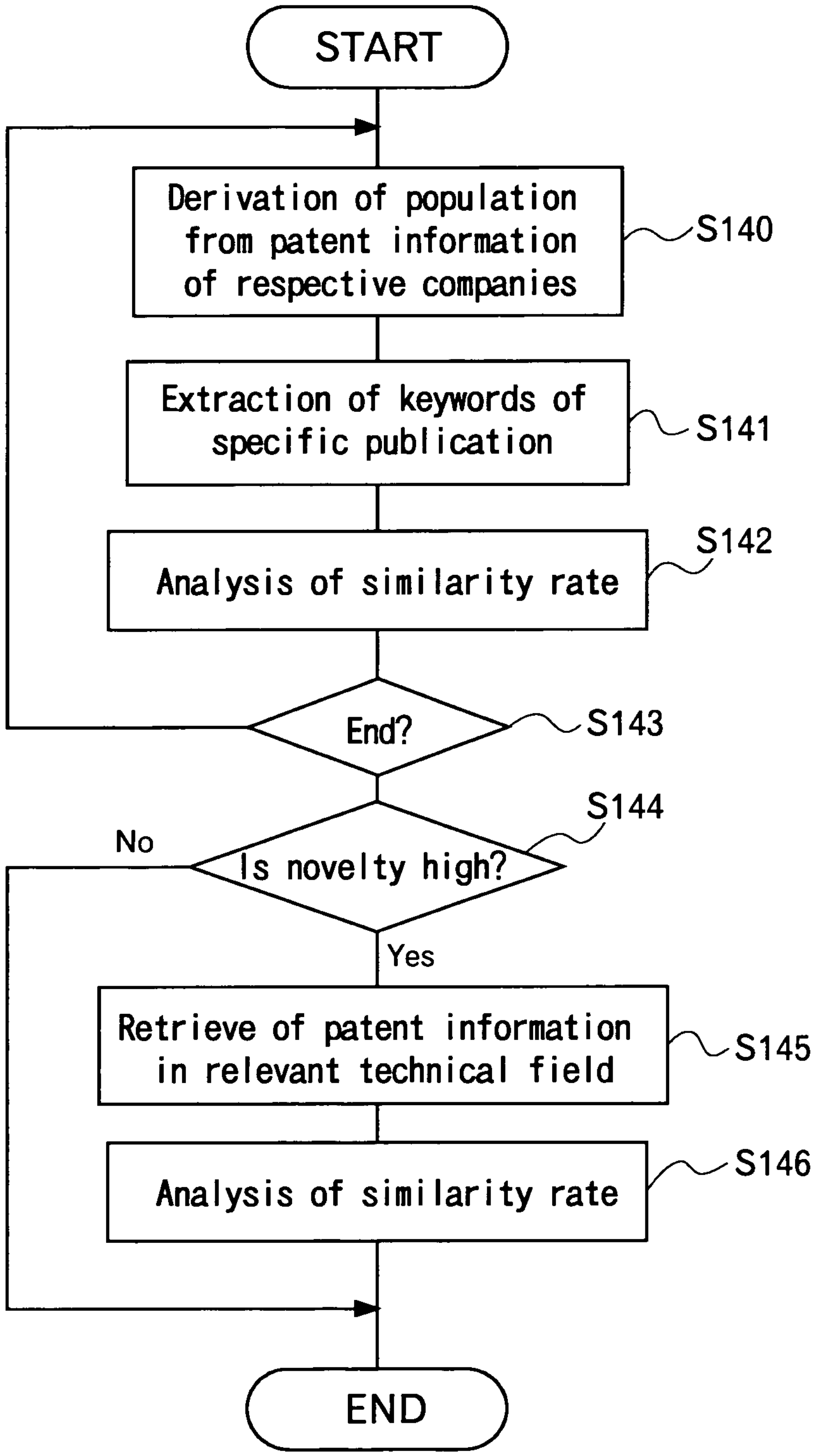
START
Derivation of population from patent information of respective companies
S140
Extraction of keywords of specific publication
S141
Analysis of similarity rate
S142
End?
S143
Is novelty high?
S144
No
Yes
Retrieve of patent information in relevant technical field
S145
Analysis of similarity rate
S146
END

FIG. 41

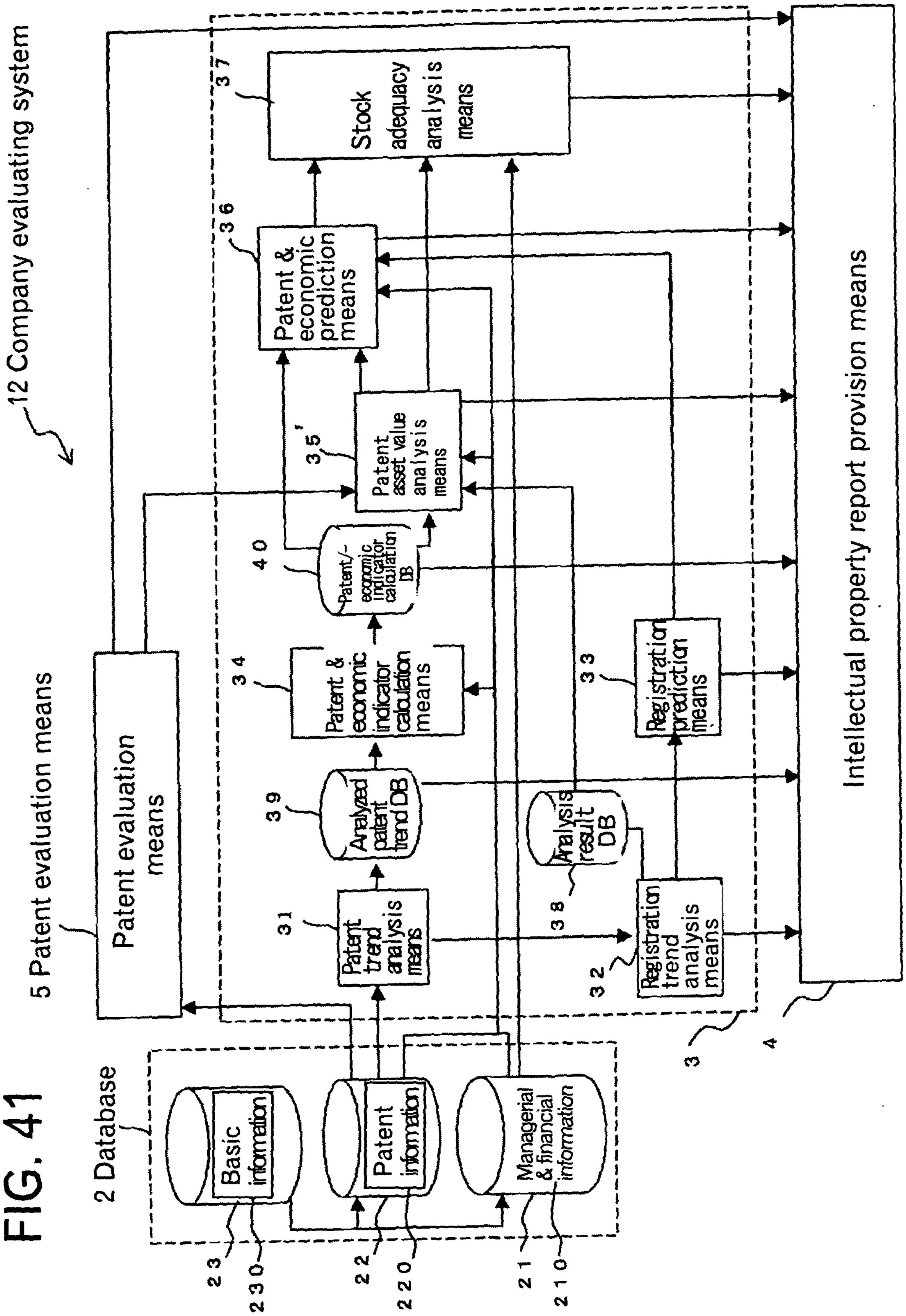
12 Company evaluating system
5 Patent evaluation means
Patent evaluation means
2 Database
Basic information
Patent information
Managerial & financial information
23
230
22
220
21
210
31
Patent trend analysis means
39
Analyzed patent trend DB
34
Patent & economic indicator calculation means
40
Patent/-economic indicator calculation DB
35'
Patent asset value analysis means
36
Patent & economic prediction means
37
Stock adequacy analysis means
38
Analysis result DB
32
Registration trend analysis means
33
Registration prediction means
3
4
Intellectual property report provision means

FIG. 42

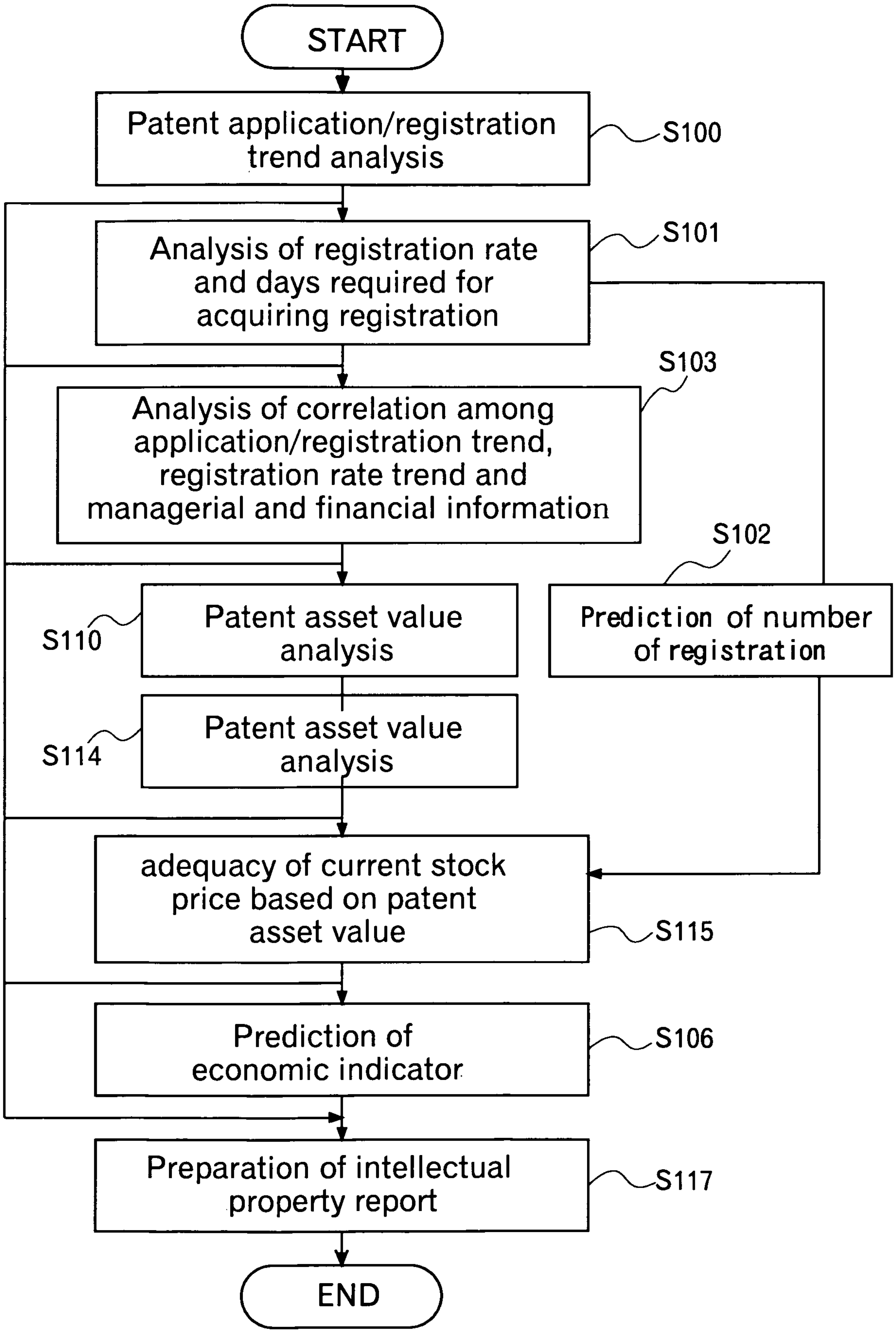
START
Patent application/registration trend analysis
S100
Analysis of registration rate and days required for acquiring registration
S101
S103
Analysis of correlation among application/registration trend, registration rate trend and managerial and financial information
S102
S110
Patent asset value analysis
Prediction of number of registration
S114
Patent asset value analysis
adequacy of current stock price based on patent asset value
S115
Prediction of economic indicator
S106
Preparation of intellectual property report
S117
END

FIG. 43

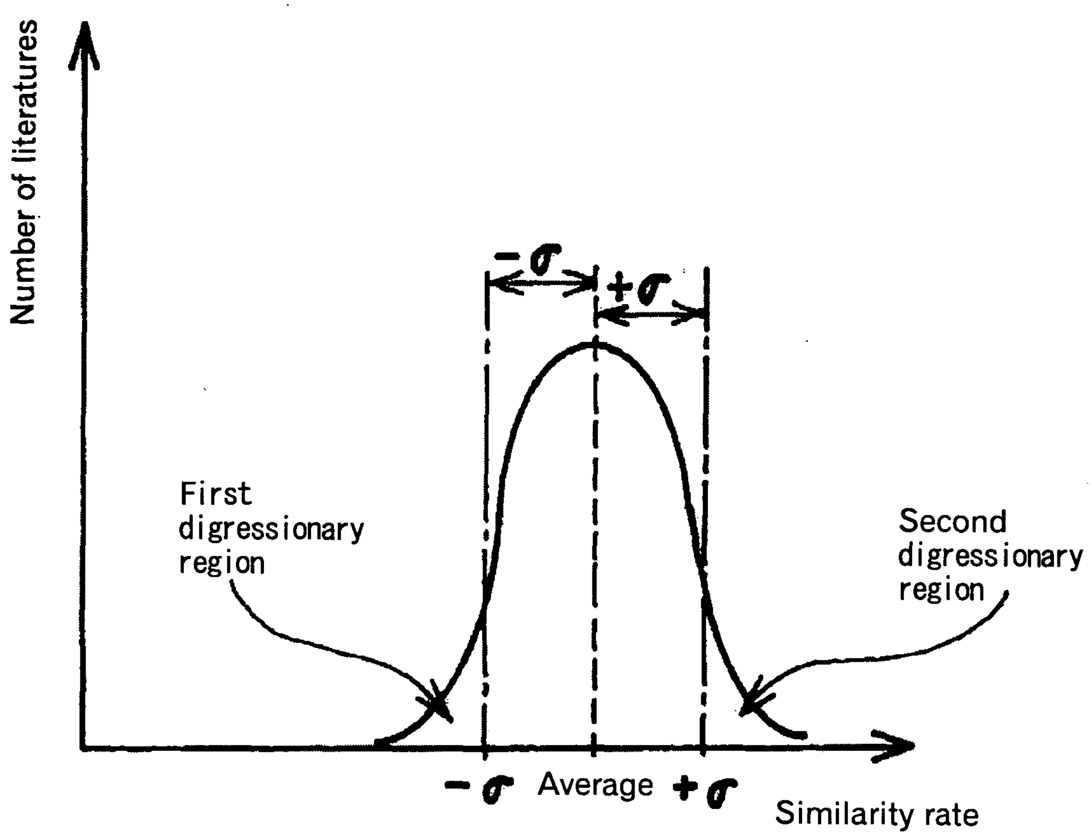
Number of literatures
-σ
+σ
First
digressionary
region
Second
digressionary
region
-σ
Average
+σ
Similarity rate

FIG. 44

| Exceptional patent (application) publications involved in objective company subject to Company's own patents having low similarity rate | | | |
|---|---|---|---|
| | Standard deviation | Application No. | Title of invention |
| 1 | -3.57 | H06-OOOOOO | Tin plating bath |
| 2 | -3.18 | H10-OOOOOO | Novel cerium complex |
| 3 | -3.08 | H06-OOOOOO | Switching element driving circuit |
| 4 | -3.04 | H06-OOOOOO | Depressant for vascular obstruction |
| 5 | -2.99 | H13-OOOOOO | Electromagnetic field analysis system |
| 6 | -2.92 | H07-OOOOOO | Inhibitor for vascular obstruction |
| 7 | -2.86 | H06-OOOOOO | Switching regulator |
| 8 | -2.77 | H06-OOOOOO | Lustrous tin plating bath |
| 9 | -2.75 | H09-OOOOOO | Emergency supervisory device for softward |
| 10 | -2.70 | H12-OOOOOO | Metal reinforcing polyethylene tube |
| 11 | -2.70 | H06-OOOOOO | Method for inputting inferential knowledge of case base |
| 12 | -2.69 | H06-OOOOOO | Switching regulator |
| 13 | -2.68 | H10-OOOOOO | Braking system for material delivery |
| 14 | -2.66 | H09-OOOOOO | Method for producing 2-hydroxyl-1- indanone |
| 15 | -2.66 | H10-OOOOOO | Looperless rolling control method |

FIG. 45

| | | | |
|---|---|---|---|
| | | Application No. | Title of invention |
| 1 | 5.37 | H06-OOOOOO | Metal removing method |
| 2 | 4.74 | H07-OOOOOO | One-side plated aluminum board |
| 3 | 4.68 | H07-OOOOOO | Power for continuous steel casting |
| 4 | 4.57 | H06-OOOOOO | Steel for friction bonding of high-tensile bolt and method for producing the same |
| 5 | 4.52 | H11-OOOOOO | Method for manufacturing coke |
| 6 | 4.52 | H11-OOOOOO | Method for adding Mg addition agent and Mg to molten steel |
| 7 | 4.45 | H10-OOOOOO | Hot dip galvanized steel having excellent adhesiveness |
| 8 | 4.31 | H13-OOOOOO | Method for removing sulfur from molten iron by using plastic |
| 9 | 4.29 | H08-OOOOOO | Toothing device |
| 10 | 4.09 | H07-OOOOOO | Refractory nonwoven fabric for continuous steel casting |
| 11 | 3.97 | H13-OOOOOO | Resistance welding method for hydroform parts |
| 12 | 3.93 | H08-OOOOOO | Method for continuous steel casting |
| 13 | 3.90 | H11-OOOOOO | Method for adding Ca addition agent and Ca to molten steel |
| 14 | 3.89 | H12-OOOOOO | Alloy for hot dip zincing |
| 15 | 3.85 | H10-OOOOOO | Cement-added plastic hardening body |

FIG. 46

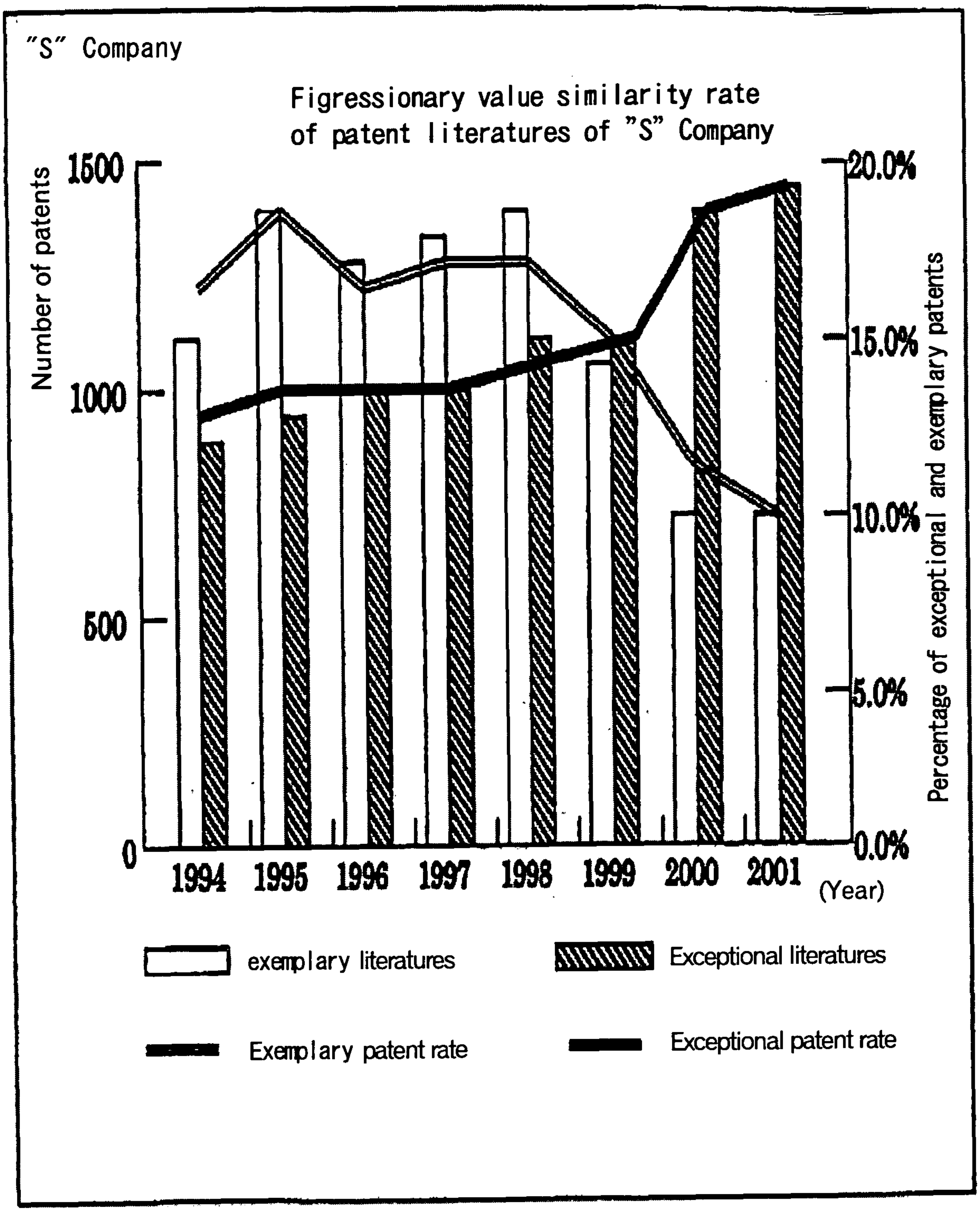
"S" Company
Figressionary value similarity rate
of patent literatures of "S" Company
Number of patents
1500
1000
500
0
20.0%
15.0%
10.0%
5.0%
0.0%
Percentage of exceptional and exemplary patents
1994
1995
1996
1997
1998
1999
2000
2001
(Year)
exemplary literatures
Exceptional literatures
Exemplary patent rate
Exceptional patent rate

FIG. 47

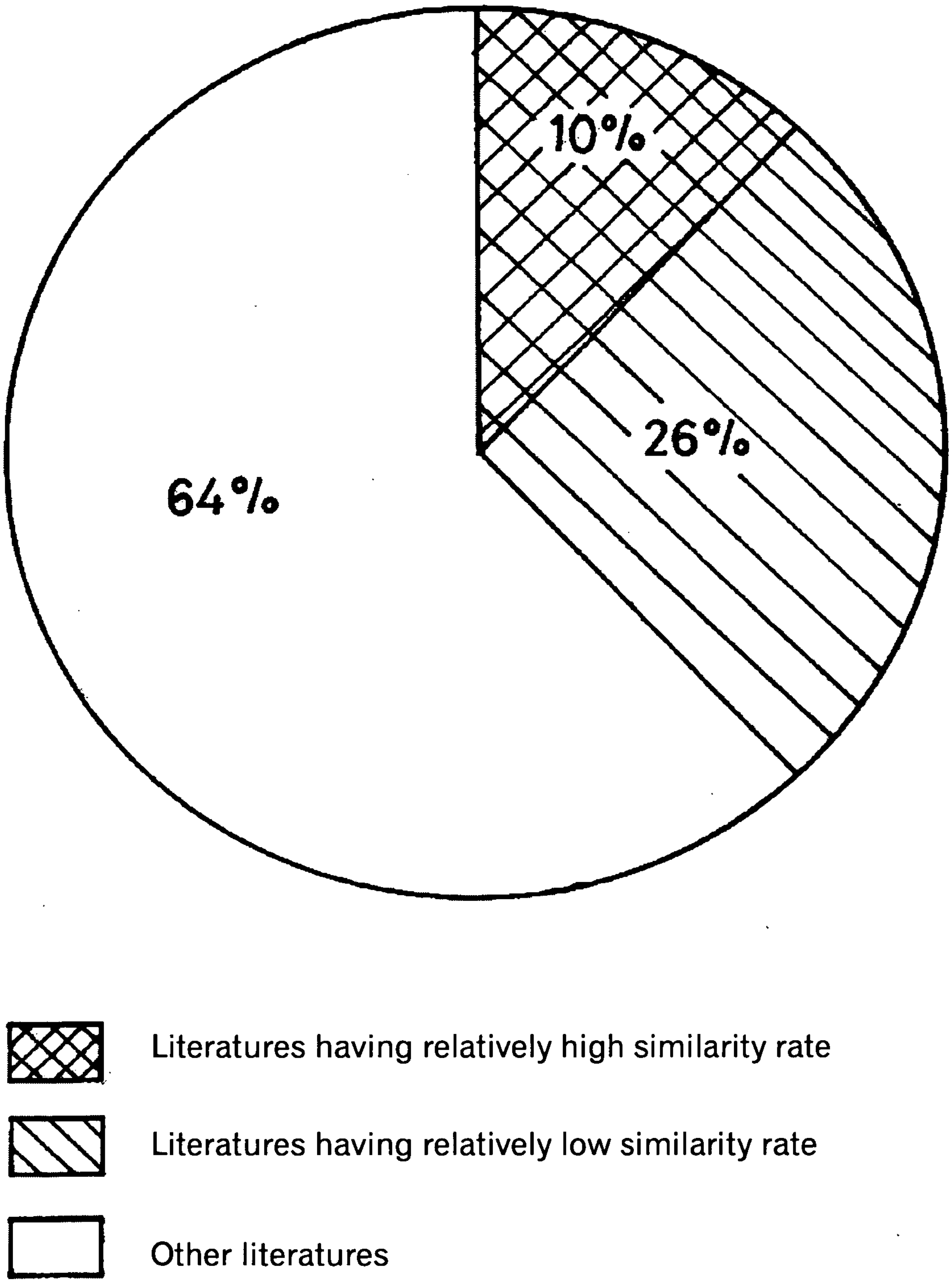
10%
26%
64%
Literatures having relatively high similarity rate
Literatures having relatively low similarity rate
Other literatures

FIG. 48

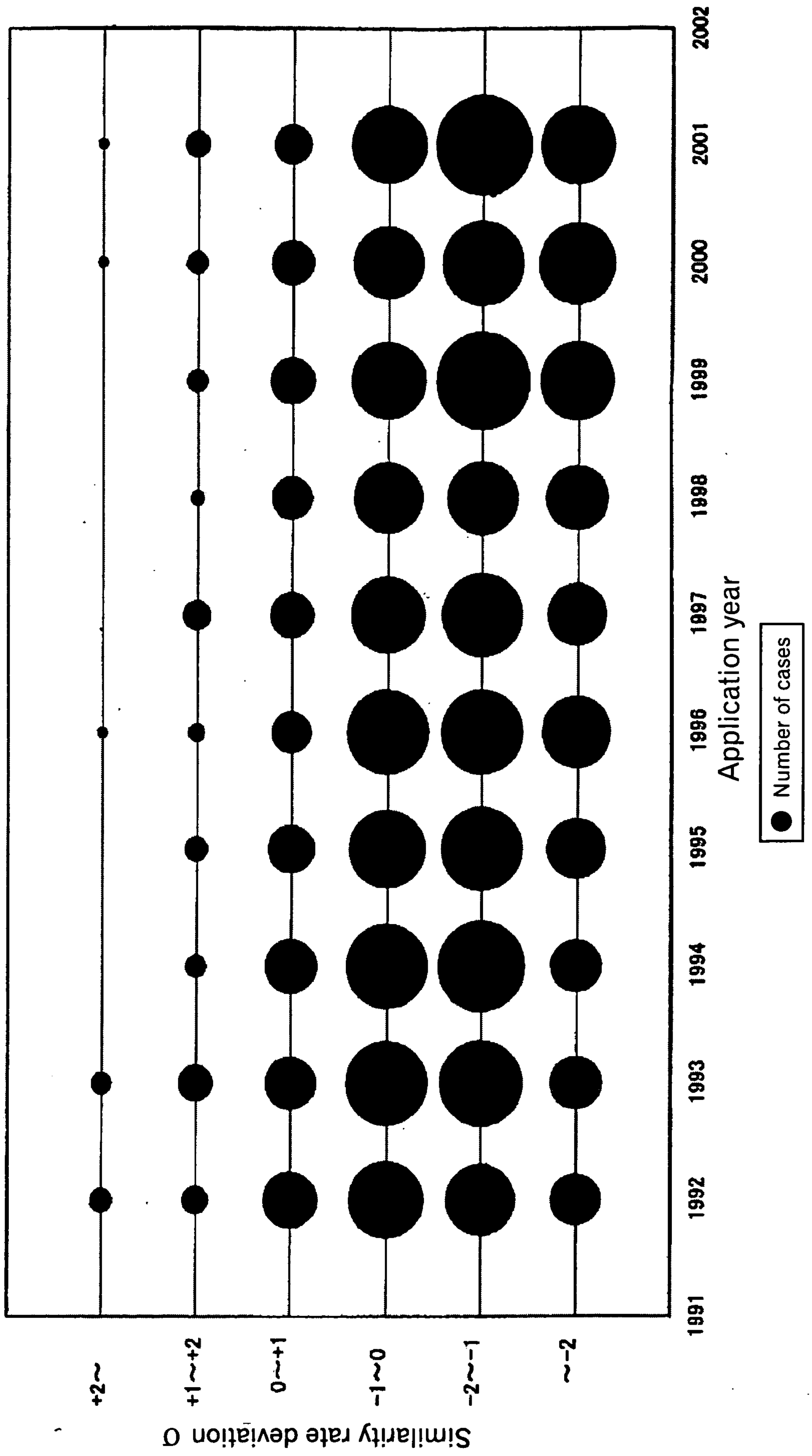
Similarity rate deviation σ
+2~
+1~+2
0~+1
-1~0
-2~-1
~-2
1991
1992
1993
1994
1995
1996
1997
1998
1999
2000
2001
2002
Application year
Number of cases

FIG. 49

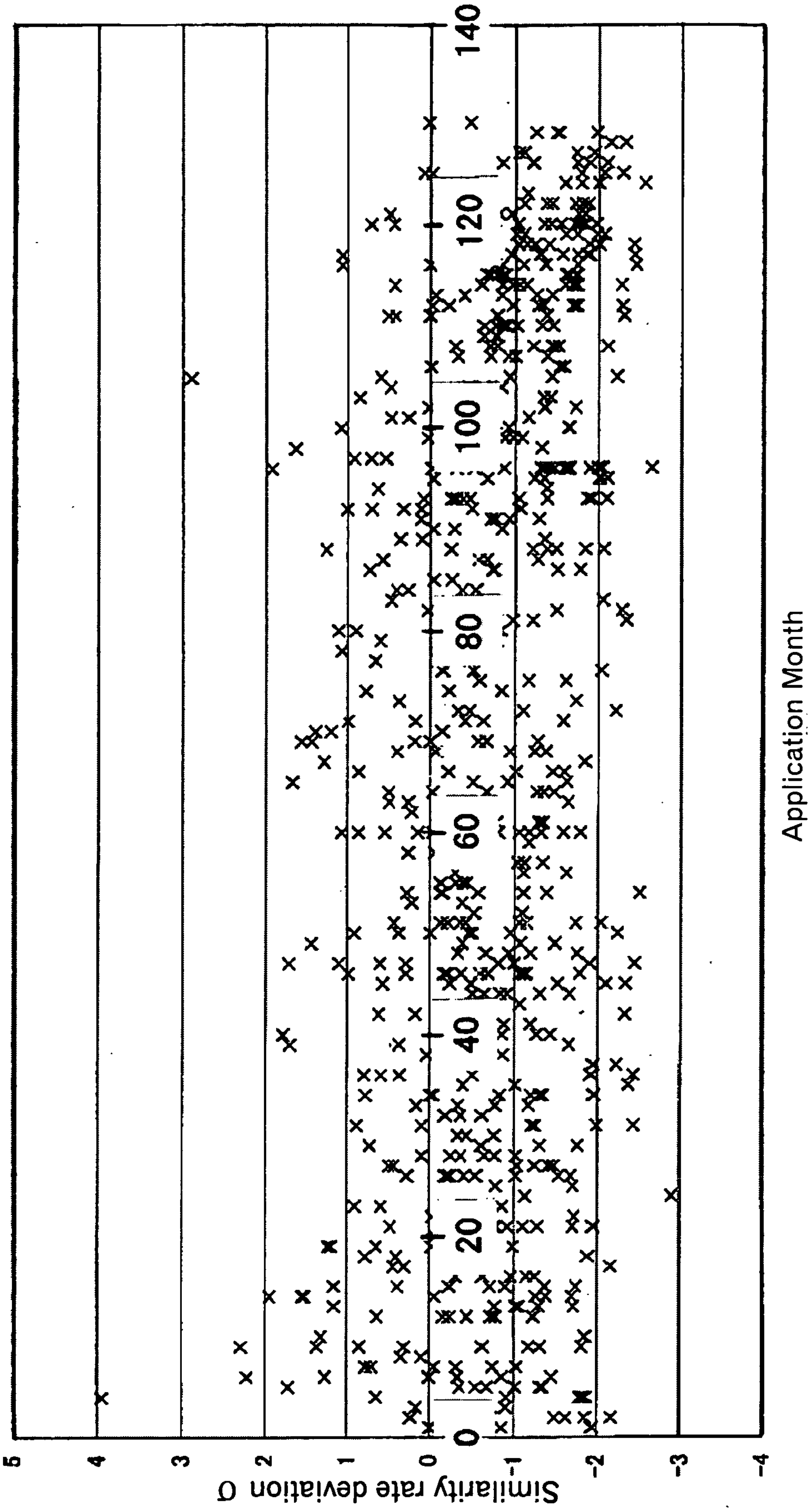
Similarity rate deviation σ
5
4
3
2
1
0
-1
-2
-3
-4
0
20
40
60
80
100
120
140
Application Month

## INTERNATIONAL SEARCH REPORT

International application No.
PCT/JP03/16902

A. CLASSIFICATION OF SUBJECT MATTER
Int.Cl$^7$ G06F17/30

According to International Patent Classification (IPC) or to both national classification and IPC

B. FIELDS SEARCHED
Minimum documentation searched (classification system followed by classification symbols)
Int.Cl$^7$ G06F17/30

Documentation searched other than minimum documentation to the extent that such documents are included in the fields searched
Jitsuyo Shinan Koho 1922-1996
Kokai Jitsuyo Shinan Koho 1971-2004 Jitsuyo Shinan Toroku Koho 1996-2004

Electronic data base consulted during the international search (name of data base and, where practicable, search terms used)
JICST FILE(JOIS), WPI, INSPEC(DIALOG)

C. DOCUMENTS CONSIDERED TO BE RELEVANT

| Category* | Citation of document, with indication, where appropriate, of the relevant passages | Relevant to claim No. |
|---|---|---|
| X<br><br>A | "PATOLIS no Zenbun Kensaku Kino to Tokei Kino", [online], 18 February, 2000 (18.02.00), OUG Tokkyo Bunkakai Shiryo, [retrieval date 28 January, 2004 (28.01.04)], Internet <URL:http://www.jade.dti.ne.jp/~searcher/ougpat/9911rep/simizu2.htm> | 1<br><br>2-54 |
| A | JP 6-124305 A (Hitachi, Ltd.), 06 May, 1994 (06.05.94), Full text; all drawings (Family: none) | 1-7,15-21,29 |
| A | JP 11-15848 A (Sharp Corp.), 22 January, 1999 (22.01.99), Full text; all drawings (Family: none) | 1-7,15-21,29 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
23 March, 2004 (23.03.04)

Date of mailing of the international search report
13 April, 2004 (13.04.04)

Name and mailing address of the ISA/
Japanese Patent Office

Facsimile No.

Authorized officer

Telephone No.

Form PCT/ISA/210 (second sheet) (July 1998)

**INTERNATIONAL SEARCH REPORT**

International application No.
PCT/JP03/16902

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-73643 A (Toshiba System Kaihatsu Kabushiki Kaisha), 12 March, 2002 (12.03.02), Full text; all drawings (Family: none) | 1-7,15-21,29 |
| A | JP 7-44567 A (Fujitsu Ltd.), 14 February, 1995 (14.02.95), Full text; all drawings (Family: none) | 2,4-7,16, 18-21 |
| A | JP 2002-92228 A (Patolis Corp.), 29 March, 2002 (29.03.02), Full text; all drawings (Family: none) | 8-14,22-28, 30-54 |
| A | JP 2002-163275 A (Matsushita Electric Industrial Co., Ltd.), 07 June, 2002 (07.06.02), Full text; all drawings (Family: none) | 8-14,22-28, 30-54 |

Form PCT/ISA/210 (continuation of second sheet) (July 1998)

**INTERNATIONAL SEARCH REPORT**

International application No.
PCT/JP03/16902

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

The technical feature common to claims 8, 22, 30 is relating the obtained similarity to the number of registered literatures among patent information being searched.

The technical feature common to claims 9, 11, 23, part of claim 14 dependent on claim 11, claims 31, 33, and part of claim 36 dependent on claim 33 is relating the obtained similarity to the number of years required for registration.

(Continued to extra sheet.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☒ No protest accompanied the payment of additional search fees.

Form PCT/ISA/210 (continuation of first sheet (1)) (July 1998)

**INTERNATIONAL SEARCH REPORT**

International application No.
PCT/JP03/16902

Continuation of Box No. II of continuation of first sheet(1)

The technical feature common to claims 10, 12, part of claim 14 dependent on claim 12, claims 24, 26, part of claim 28 dependent on claim 26, claims 32, 34, and part of claim 36 dependent on claim 34 is calculating the standard deviation of similarity or the number of years required for registration.

The technical feature common to claim 13, part of claim 14 dependent on claim 13, claims 25, 27, part of claim 28 dependent on claim 25 or 27, claim 35, and part of claim 36 dependent on claim 35 is predicting the future standard deviation or the future number of years required for registration through interpolation.

The technical feature common to claims 37-54 is relating the number of technical literatures to the similarity and the category.

The technical feature common to claims 1-7, 15-21, 29 is calculating the ratio between the counted number of technical literatures containing a predetermined keyword and the total number of technical literatures in the population so as to calculate the similarity. Although this technical feature does not overcome the prior art as stated in No. 1, the technical feature can be searched simultaneously, and the inventions of the claims is categorized into one.

Form PCT/ISA/210 (extra sheet) (July 1998)